(19) Europäisches Patentamt
European Patent Office
Office européen des brevets

(11) EP 3 762 453 B1

(12) **FASCICULE DE BREVET EUROPEEN**

(45) Date de publication et mention de la délivrance du brevet:
**15.01.2025 Bulletin 2025/03**

(21) Numéro de dépôt: **19715163.2**

(22) Date de dépôt: **07.03.2019**

(51) Classification Internationale des Brevets (IPC):
***C08L 51/00*** *(2006.01)* ***C08L 43/00*** *(2006.01)*
***C08L 33/14*** *(2006.01)* ***C08K 5/55*** *(2006.01)*
***C08L 25/14*** *(2006.01)* ***C10M 123/04*** *(2006.01)*
***C10M 169/02*** *(2006.01)* ***C10N 30/02*** *(2006.01)*
***C08L 51/06*** *(2006.01)* ***C08F 2/38*** *(2006.01)*
***C08F 293/00*** *(2006.01)* ***C08F 289/00*** *(2006.01)*
***C08F 230/06*** *(2006.01)* ***C08F 220/18*** *(2006.01)*
***C08C 19/02*** *(2006.01)* ***C08C 19/28*** *(2006.01)*
***C08C 19/38*** *(2006.01)* ***C08F 8/00*** *(2006.01)*
***C08F 8/12*** *(2006.01)* ***C08G 81/02*** *(2006.01)*
***C08G 83/00*** *(2006.01)*

(52) Classification Coopérative des Brevets (CPC):
(C-Sets disponibles)
**C08F 293/005; C08C 19/02; C08C 19/28; C08C 19/38; C08F 8/00; C08F 8/12; C08F 220/1812; C08F 289/00; C08L 43/00; C08L 51/06; C10M 157/10; C10M 161/00;**
C08F 2438/01; C08F 2438/03; C08F 2810/30;
(Cont.)

(86) Numéro de dépôt international:
**PCT/FR2019/050509**

(87) Numéro de publication internationale:
**WO 2019/171006 (12.09.2019 Gazette 2019/37)**

(54) **COMPOSITION COMPRENANT DES COPOLYMÈRES THERMOASSOCIATIFS ET ÉCHANGEABLES**

ZUSAMMENSETZUNGEN MIT THERMOASSOZIATIVEN UND AUSTAUSCHBAREN COPOLYMEREN

COMPOSITION COMPRISING THERMOASSOCIATIVE AND EXCHANGEABLE COPOLYMERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.03.2018 FR 1851968**

(43) Date de publication de la demande:
**13.01.2021 Bulletin 2021/02**

(73) Titulaires:
- **TotalEnergies OneTech**
  **92400 Courbevoie (FR)**
- **Centre National de la Recherche Scientifique**
  **75016 Paris (FR)**
- **Ecole Supérieure de Physique et de Chimie Industrielles de la Ville de Paris**
  **75005 Paris (FR)**

(72) Inventeurs:
- **DESCROIX, Grégory**
  **69126 BRINDAS (FR)**
- **BRIAND, Fanny**
  **69003 LYON (FR)**
- **NICOLAY, Renaud**
  **91370 Verrieres Le Buisson (FR)**
- **DEROUINEAU, Thibault**
  **72440 COUDRECIEUX (FR)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 762 453 B1



**(Cont. page suivante)**

(74) Mandataire: **Bandpay & Greuter**
**11 rue Christophe Colomb**
**75008 Paris (FR)**

(56) Documents cités:
**EP-A1- 0 570 073** **WO-A1-2015/110642**
**US-A1- 2011 319 305**

(52) Classification Coopérative des Brevets (CPC):
(Cont.)C10M 2203/1025; C10M 2209/084;
C10M 2227/062; C10M 2229/006; C10N 2020/02;
C10N 2030/02

C-Sets
**C08F 8/00, C08F 8/12, C08F 293/005;**
**C08F 8/12, C08F 293/005;**
**C08L 43/00, C08L 51/06;**
**C08L 51/06, C08L 43/00;**
C10M 2203/1025, C10N 2020/02;
C10M 2209/084, C10M 2205/04

## Description

### Domaine technique

L'invention concerne une composition résultant du mélange d'au moins un copolymère en peigne polydiol A1, et d'au moins un composé A2 comprenant au moins deux fonctions esters boroniques. De telles compositions présentent des propriétés rhéologiques très variées selon la proportion des composés A1 et A2 utilisée. L'invention concerne aussi une composition résultant du mélange d'au moins une huile lubrifiante avec une telle composition de polymère et l'utilisation de cette composition pour lubrifier une pièce mécanique.

Le domaine de l'invention est celui des polymères associatifs et échangeables et celui des lubrifiants.

### Etat de la technique antérieure

Les polymères de hautes masses molaires sont largement utilisés pour augmenter la viscosité de solutions dans de nombreux domaines, tels que l'industrie du pétrole, du papier, du traitement de l'eau, l'industrie minière, des cosmétiques, du textile et de manière générale dans toutes les techniques industrielles utilisant des solutions épaissies.

Or, ces polymères de hautes masses moléculaires présentent l'inconvénient de présenter une dégradation irréversible importante sous contrainte mécanique par rapport aux mêmes polymères de tailles plus faibles. Ces contraintes de cisaillement sur les polymères de hautes masses molaires entrainent des coupures au niveau des chaînes macromoléculaires. Le polymère ainsi dégradé voit ses propriétés épaississantes diminuer ou disparaître, et la viscosité des solutions le contenant chute de manière irréversible. Cette faible résistance au cisaillement conduit à une dégradation des propriétés des solutions à base de polymères de hautes masses molaires.

On connaît par les demandes WO2015/110642, WO2015/110643 et WO2016113229 une composition résultant du mélange d'au moins un copolymère A1 résultant de la copolymérisation d'au moins un monomère fonctionnalisé par des fonctions diol, et d'au moins un composé A2 comprenant au moins deux fonctions ester boronique. Ces composés peuvent s'associer, pour former éventuellement un gel, et échanger des liens chimiques de manière thermoréversible. Ces additifs présentent l'avantage de diminuer la baisse de viscosité de la solution les comprenant lorsque la température augmente. Ces compositions de polymères présentent des propriétés rhéologiques très variées selon la proportion des composés A1 et A2 utilisée. Elles peuvent en outre comprendre un composé exogène qui permet de mieux contrôler l'association des deux composés.

En particulier, ces compositions de polymères peuvent être ajoutées dans une huile lubrifiante pour lubrifier une pièce mécanique. Ces copolymères permettent de formuler des compositions lubrifiantes dont la viscosité est mieux contrôlée par rapport aux compositions lubrifiantes de l'art antérieur. En particulier, ces copolymères, lorsqu'ils sont introduits dans une huile de base, tendent à faire diminuer la chute de viscosité du mélange lorsque la température augmente.

Les compositions lubrifiantes sont des compositions appliquées entre les surfaces, notamment métalliques, de pièces mobiles. Elles permettent de réduire le frottement et l'usure entre deux pièces en contact et en mouvement l'une par rapport à l'autre. Elles servent également à dissiper une partie de l'énergie thermique engendrée par ce frottement. Les compositions lubrifiantes forment un film protecteur entre les surfaces des pièces sur lesquelles elles sont appliquées.

Les compositions utilisées pour la lubrification de pièces mécaniques sont généralement constituées d'une huile de base et d'additifs. L'huile de base, notamment d'origine pétrolière ou synthétique, présente des variations de viscosité lorsqu'on fait varier la température.

En effet, lorsque la température d'une huile de base augmente, sa viscosité diminue et lorsque la température de l'huile de base diminue, sa viscosité augmente. Or, en régime de lubrification hydrodynamique, l'épaisseur du film protecteur est proportionnelle à la viscosité, donc dépend aussi de la température. Une composition présente de bonnes propriétés lubrifiantes si l'épaisseur du film protecteur reste sensiblement constante quelles que soient les conditions et la durée d'utilisation du lubrifiant.

Dans un moteur à combustion interne, une composition lubrifiante peut être soumise à des changements de température externes ou internes. Les changements de température externes sont dus aux variations de température de l'air ambiant, telles que les variations de température entre l'été et l'hiver par exemple. Les changements de température internes résultent de la mise en œuvre du moteur. La température d'un moteur est plus basse lors de sa phase de démarrage, notamment par temps froid, que lors d'une utilisation prolongée. Par conséquent, l'épaisseur du film protecteur peut varier dans ces différentes situations.

Il existe donc un besoin de disposer d'une composition lubrifiante possédant de bonnes propriétés de lubrification et dont la viscosité est peu sujette aux variations de température.

Il est connu d'ajouter des additifs améliorant la viscosité d'une composition lubrifiante. Ces additifs ont pour fonction de modifier le comportement rhéologique de la composition lubrifiante. Ils permettent de favoriser une plus grande stabilité de la viscosité sur une plage de température à laquelle la composition lubrifiante est utilisée. Par exemple,

ces additifs limitent la diminution de la viscosité de la composition lubrifiante lorsque la température s'élève, tout en limitant l'augmentation de la viscosité à froid.

Les additifs améliorant la viscosité (ou additifs améliorant l'indice de viscosité) permettent de garantir une bonne lubrification en limitant l'impact sur la viscosité à froid et en garantissant une épaisseur minimale de film à chaud. Les additifs améliorant la viscosité actuellement utilisés sont des polymères tels que les oléfines copolymères (OCP) et les polyméthacrylates d'alkyles (PMA). En général, la contribution de ces polymères au contrôle de la viscosité est d'autant plus importante que leur poids moléculaire est élevé.

Cependant, les polymères de hautes masses molaires présentent l'inconvénient d'avoir une faible résistance au cisaillement permanent par rapport aux polymères de même nature et de même architecture mais de taille plus faible.

Or, une composition lubrifiante est soumise à des contraintes de cisaillement importantes notamment dans les moteurs à combustion interne, où les surfaces en mouvement ont un écartement très faible et les pressions exercées sur les pièces sont élevées. Ces contraintes de cisaillement sur les polymères de hautes masses molaires entrainent des coupures au niveau des chaînes macromoléculaires. Le polymère ainsi dégradé voit ses propriétés épaississantes réduites, et la viscosité chute de manière irréversible. Cette faible résistance au cisaillement permanent conduit donc à une dégradation des propriétés de lubrification de la composition lubrifiante.

Enfin, on a cherché à mettre au point des compositions présentant une meilleure stabilité à l'oxydation, en particulier une meilleure résistance à l'oxydation par les radicaux libres.

Le document US2011/319305 décrit des copolymères en peigne comprenant des unités répétitives oléfiniques de masse moléculaire supérieure à 500g/mol et des unités répétitives de masse moléculaire inférieure à 500g/mol et leur utilisation dans des fluides hydrauliques.

Le document EP0570073 décrit un additif pour huiles lubrifiantes de type poly(alkyl)-acrylate dans lequel certains monomères comprennent des fonctionnalités à base de bore.

Il est indiqué dans les demandes WO2015/110642, WO2015/110643 et WO2016113229 que les copolymères statistiques diols A1 sont des copolymères en peigne, c'est-à-dire des copolymères disposant d'une chaîne principale (aussi appelée squelette) et de chaînes latérales hydrocarbonées, éventuellement hydroxylées, pendantes de part et d'autre de la chaîne principale. On constate que les chaînes latérales de ces copolymères de l'art antérieur ne sont pas des polymères ou des oligomères, et que ces copolymères ne sont donc pas des copolymères en peigne au sens habituel pour un homme du métier (IUPAC Commission de la Nomenclature Macromoléculaire, Glossaire des termes de base en science des polymères, Recommandations 1996, disponible sur https://www.gfp.asso.fr/wp-content/uploads/glossaire.pdf). En réalité, ces copolymères sont plutôt des copolymères linéaires dont les chaines latérales hydrocarbonées, non polymériques, ont une longueur moyenne allant de 8 à 20 atomes de carbone.

Les compositions décrites dans les demandes WO2015/110642, WO2015/110643 et WO2016113229 présentent des propriétés très intéressantes, du fait de leur capacité à former des associations thermoréversibles. Toutefois, on a souhaité améliorer encore ces propriétés, notamment on a cherché à diminuer la sensibilité de la viscosité des compositions vis-à-vis de la température, à fournir des compositions qui présentent une meilleure stabilité de la viscosité entre les températures élevées et les basses températures. On a aussi cherché à fournir des compositions qui présentent une plus grande amplitude de modulation de la viscosité.

En outre, on a constaté que dans certaines conditions, de température élevée notamment, le comportement associatif de ces copolymères diminuait. En particulier, on a observé une baisse de l'indice de viscosité des compositions lubrifiantes les comprenant, une moins bonne résistance au cyclage (que l'on peut définir comme la succession de séquences d'élévation et de diminution de la température comme elle est observée dans un moteur), entrainant une perte des propriétés lubrifiantes au cours du temps.

Aussi, la demanderesse s'est fixé pour objectif la préparation de nouveaux copolymères présentant des propriétés améliorées par rapport aux copolymères de l'art antérieur.

Cet objectif est atteint grâce à de nouveaux additifs rhéologiques pouvant s'associer, pour éventuellement former un gel, et s'échanger de manière thermoréversible. Contrairement à l'huile de base qui se fluidifie lorsque la température augmente, les additifs de la présente invention présentent l'avantage d'épaissir le milieu dans lequel ils sont dispersés lorsque la température augmente et conservent cet avantage à des températures élevées, comme par exemple jusqu'à 150°C. Ces additifs comprennent un copolymère en peigne polydiol A1 (dont une partie au moins des chaines latérales est de type oligomère) et un composé A2 comprenant au moins deux fonctions ester boronique. Ces additifs permettent une plus grande amplitude de modulation de la viscosité en fonction de la température. Les compositions lubrifiantes les comprenant présentent une sensibilité réduite de leur viscosité vis-à-vis de la température, une plus grande stabilité de la viscosité vis-à-vis des changements de température. Cette caractéristique résulte de l'utilisation combinée de deux composés particuliers, un copolymère en peigne portant des fonctions diol et éventuellement des fonctions styrénique et un composé comprenant des fonctions ester boronique.

Il est possible, grâce aux compositions de l'invention de fournir des compositions lubrifiantes qui possèdent de bonnes propriétés de lubrification lors des phases de démarrage d'un moteur (phase à froid) et des bonnes propriétés de lubrification lorsque le moteur fonctionne à sa température de service (phase à chaud).

**Résumé de l'invention**

L'invention concerne une composition résultant du mélange d'au moins

◦ un copolymère en peigne polydiol A1, statistique ou à gradient, et
◦ un composé A2 comprenant au moins deux fonctions ester boronique,

le copolymère en peigne polydiol A1 comprenant une chaine principale et des chaines latérales, au moins une partie des chaines latérales du copolymère A1 étant composée d'oligomères comportant plus de 30 atomes de carbone qui présentent un degré de polymérisation allant de 5 à 1000.

L'invention a encore pour objet une composition lubrifiante résultant du mélange d'au moins :

- une huile lubrifiante, et
- une composition telle définie ci-dessus et de façon détaillée ci-dessous.

Un procédé pour moduler la viscosité d'une composition lubrifiante est aussi divulgué, le procédé comprenant au moins :

- la fourniture d'une composition telle que définie ci-dessus et de façon détaillée dans la description ci-dessous,
- le mélange de cette composition avec une huile lubrifiante.

Selon un mode de réalisation préféré, les chaines latérales composées d'oligomères représentent de 3 à 95% en masse par rapport à la masse totale du copolymère A1, de préférence de 15 à 95%.

Au moins une partie des chaines latérales du copolymère A1 est composée d'oligomères comportant plus de 30 atomes de carbone, de préférence au moins 50 atomes de carbone, encore mieux au moins 70 atomes de carbone.

Selon un mode de réalisation encore préféré, les chaines latérales composées d'oligomères comportant plus de 30 atomes de carbone représentent de 3 à 95% en masse par rapport à la masse totale du copolymère A1, de préférence de 15 à 95%.

Selon un mode de réalisation préféré, au moins une partie des chaines latérales du copolymère A1 est composée d'oligomères qui présentent un degré de polymérisation allant de 5 à 500, de préference de 5 à 200.

Selon un mode de réalisation préféré, au moins une partie des chaines latérales du copolymère A1 est composée d'oligomères O1 comprenant un fragment polyoléfine.

Selon un mode de réalisation préféré, les chaines latérales du copolymère A1 composées d'oligomères O1 comprennent un fragment polyoléfine ayant de 30 à 500 atomes de carbone, préférentiellement de 50 à 400 atomes de carbone, encore mieux de 50 à 200 atomes de carbone.

Selon un mode de réalisation préféré, les chaines latérales comprenant un fragment polyoléfine représentent de 3 à 85 %, de préférence de 15 à 70% en masse par rapport à la masse totale du copolymère A1.

Selon un mode de réalisation encore préféré, les oligomères O1 sont présents dans le copolymère A1 sous forme d'unités répétitives correspondant à un ou plusieurs monomères M6 de formule générale (IX) :

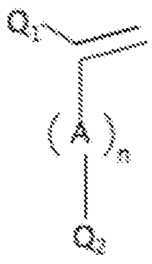

(IX)

dans laquelle

$Q_1$ est choisi parmi le groupe formé par -H, $-CH_3$, et $-CH_2-CH_3$ ;
$Q_2$ est choisi parmi un groupement -Q', -O-Q', -C(O)-O-Q', -O-C(O)-Q', $-S-(CH_2)_2-C(O)-O-Q'$, ,-S-Q', -N(H)-C(O)- Q' et -C(O)-N(H)-Q' avec Q' est une polyoléfine,
n représente un entier choisi parmi 0 et 1,
A représente un groupement divalent choisi parmi $-A_1-$, $-O-(-A_2-O-)n'-A_1-$, - $C(O)-O-$ $(-A_2-O-)n'-A_1-$, $-O-C(O)-(-A_2-O-)$

n'-$A_1$-, -S-(-$A_2$-O-)n'-$A_1$-, - N(H)-C(O)-(-$A_2$-O-)n'- $A_1$- et -C(O)-N(H)-(-$A_2$-O-)n'-$A_1$- avec :

$A_1$ est un radical divalent choisi parmi un alkyle en $C_1$-$C_{30}$, un aryle en $C_6$-$C_{30}$, un aralkyle en $C_6$-$C_{30}$,
$A_2$ est un radical divalent choisi parmi les alkyles en $C_2$-$C_4$,
n' est un entier, n' représente 0 ou 1.

Selon un mode de réalisation préféré, au moins une partie des chaines latérales du copolymère A1 est composée d'oligomères O2 comprenant des unités répétitives correspondant à des monomères M2 de formule générale (II) :

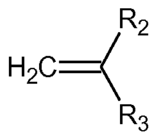

(II)

dans laquelle :

$R_2$ est choisi parmi le groupe formé par -H, $-CH_3$ et $-CH_2-CH_3$,
$R_3$ est choisi parmi le groupe formé par : -C(O)-O-R'$_3$ ; -O-R'$_3$ ; -S-R'$_3$ et -C(O)-N(H)-R'$_3$ avec R'$_3$ est un groupe alkyle en $C_1$-$C_{30}$.

Selon un mode de réalisation encore préféré, au moins une partie des oligomères O2 comprend des unités répétitives correspondant à des monomères M1 de formule générale (I) :

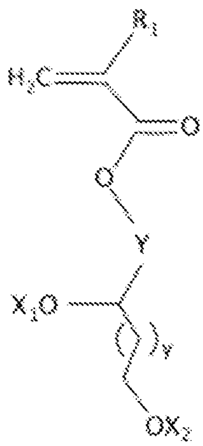

(I)

dans laquelle :

- $R_1$ est choisi parmi le groupe formé par -H, $-CH_3$, et $-CH_2-CH_3$ ;
- y est un nombre entier égal à 0 ou 1;
- Y représente un groupement de liaison divalent choisi parmi les chaines alkyle en $C_1$-$C_{20}$, comprenant éventuellement un ou plusieurs ponts éther -O- ;
- $X_1$ et $X_2$, identiques ou différents, sont choisis parmi le groupe formé par l'hydrogène, le tétrahydropyranyle, le méthyloxyméthyle, le ter-butyle, le benzyle, le triméthylsilyle et le t-butyle diméthylsilyle ;
  ou bien
- $X_1$ et $X_2$ forment avec les atomes d'oxygène un pont de formule suivante

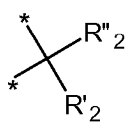

dans laquelle:

- les étoiles (*) symbolisent les liaisons aux atomes d'oxygène,
- $R'_2$ et $R''_2$, identiques ou différents, sont choisis parmi le groupe formé par l'hydrogène et un alkyle en $C_1$-$C_{11}$, de préférence le méthyle ;

ou bien

- $X_1$ et $X_2$ forment avec les atomes d'oxygène un ester boronique de formule suivante :

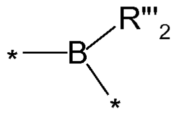

dans laquelle :

- les étoiles (*) symbolisent les liaisons aux atomes d'oxygène,

$R'''_2$ est choisi parmi le groupe formé par un aryle en $C_6$-$C_{30}$, un aralkyle en $C_7$-$C_{30}$ et un alkyle en $C_2$-$C_{30}$, de préférence un aryle en $C_6$-$C_{18}$.

Selon un mode de réalisation encore préféré, le monomère M1 est choisi parmi les monomères de formule (Ibis) :

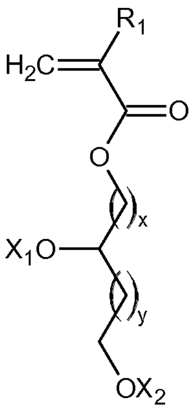

(Ibis)

dans laquelle x est un nombre entier allant de 1 à 18, de préférence de 2 à 18.

Selon un mode de réalisation, lorsqu'une partie des chaines latérales du copolymère A1 est composée d'oligomères comprenant des unités répétitives correspondant à des monomères M1 et/ou M2, ces oligomères présentent un degré de polymérisation allant de 5 à 500, de préférence de 10 à 400, encore mieux de 20 à 200.

Selon un mode de réalisation préféré, lorsque les chaines latérales du copolymère A1 sont composées d'oligomères O1 comprenant un fragment polyoléfine ayant de 30 à 105 atomes de carbone, les unités de répétition du copolymère A1 contiennent plus de 5% molaire de monomères M6 de formule générale (IX), de préférence plus de 6 % molaire de monomères M6 de formule générale (IX), encore mieux plus de plus de 6,5 % molaire de monomères M6 de formule générale (IX).

Selon un mode de réalisation préféré, la chaine principale du copolymère A1 comprend des unités répétitives correspondant à au moins un monomère M2 de formule générale (II) :

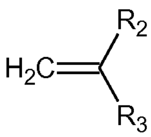

(II)

dans laquelle :

$R_2$ est choisi parmi le groupe formé par -H, $-CH_3$ et $-CH_2-CH_3$,
$R_3$ est choisi parmi le groupe formé par : -C(O)-O-$R'_3$ ; -O-$R'_3$ ; -S-$R'_3$ et -C(O)-N(H)-$R'_3$ avec $R'_3$ est un groupe alkyle en $C_1$-$C_{30}$.

Selon un mode de réalisation encore préféré, la chaine principale du copolymère A1 comprend des unités

répétitives correspondant à au moins un monomère M1 de formule générale (I) :

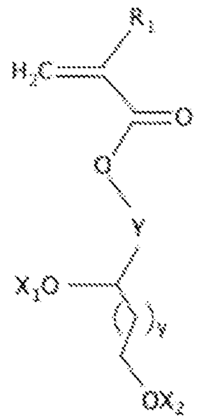

(I)

dans laquelle :

- $R_1$ est choisi parmi le groupe formé par -H, $-CH_3$, et $-CH_2-CH_3$ ;
- y est un nombre entier égal à 0 ou 1;
- Y représente un groupement de liaison divalent choisi parmi les chaines alkyle en $C_1$-$C_{20}$, comprenant éventuellement un ou plusieurs ponts éther -O- ;
- $X_1$ et $X_2$, identiques ou différents, sont choisis parmi le groupe formé par l'hydrogène, le tétrahydropyranyle, le méthyloxyméthyle, le ter-butyle, le benzyle, le triméthylsilyle et le t-butyle diméthylsilyle ;
  ou bien
- $X_1$ et $X_2$ forment avec les atomes d'oxygène un pont de formule suivante
  dans laquelle:

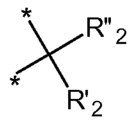

  - les étoiles (*) symbolisent les liaisons aux atomes d'oxygène,
  - $R'_2$ et $R''_2$, identiques ou différents, sont choisis parmi le groupe formé par l'hydrogène et un alkyle en $C_1$-$C_{11}$, de préférence le méthyle ;
    ou bien
  - $X_1$ et $X_2$ forment avec les atomes d'oxygène un ester boronique de formule suivante :

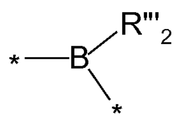

  dans laquelle :

    - les étoiles (*) symbolisent les liaisons aux atomes d'oxygène,

$R'''_2$ est choisi parmi le groupe formé par un aryle en $C_6$-$C_{30}$, un aralkyle en $C_7$-$C_{30}$ et un alkyle en $C_2$-$C_{30}$, de préférence un aryle en $C_6$-$C_{18}$.

Selon un mode de réalisation encore préféré, le monomère M1 est choisi parmi les monomères de formule générale (Ibis) :

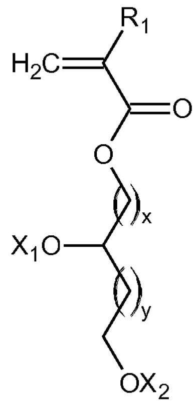

(Ibis)

dans laquelle x est un nombre entier allant de 1 à 18, de préférence de 2 à 18.

Selon un mode de réalisation préféré, le copolymère A1 comprend des unités répétitives correspondant à au moins un monomère M3 de formule générale (X) :

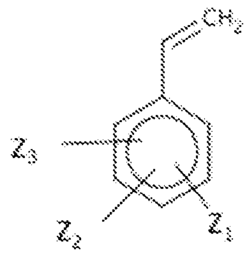

(X)

dans laquelle :

- $Z_1$, $Z_2$, $Z_3$, identiques ou différents, représentent des groupements choisis parmi un atome d'hydrogène, un alkyle en $C_1$-$C_{12}$, un groupement -OZ', -C(O)-O-Z' avec Z' un alkyle en $C_1$-$C_{12}$.

Selon un mode de réalisation encore préféré, le monomère M3 est le styrène.

Selon un mode de réalisation encore préféré, les unités répétitives correspondant à des monomères de formule (X) représentent de 2 à 50% en moles par rapport au nombre de moles total des unités répétitives dont est composé le copolymère A1.

Selon un mode de réalisation préféré, la chaine principale du copolymère en peigne A1 comprend au moins deux unités répétitives correspondant à des monomères M2 de formule (II) ayant des groupes $R_3$ différents.

Selon un mode de réalisation encore préféré, l'un des monomères M2 du copolymère A1 a pour formule générale (II-A) :

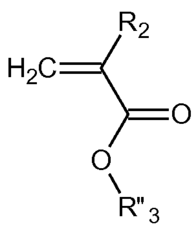

(II-A)

dans laquelle :

- $R_2$ est choisi parmi le groupe formé par -H, $-CH_3$ et-$CH_2$-$CH_3$,
- $R''_3$ est un groupe alkyle en $C_1$-$C_8$,

et l'autre monomère M2 du copolymère A1 a pour formule générale (II-B) :

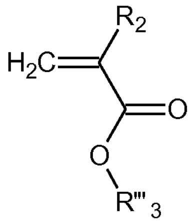

(II-B)

dans laquelle :

- $R_2$ est choisi parmi le groupe formé par -H, $-CH_3$ et$-CH_2-CH_3$,
- $R'''_3$ est un groupe alkyle en $C_9$-$C_{30}$.

Selon un mode de réalisation préféré, au moins une partie des chaines latérales du copolymère en peigne A1 sont des oligomères O1 comprenant un fragment polyoléfine et la chaine principale du copolymère en peigne A1 comprend au moins une unité répétitive correspondant à des monomères M2 de formule générale (II-A) :

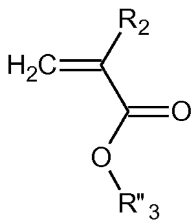

(II-A)

dans laquelle :

- $R_2$ est choisi parmi le groupe formé par -H, $-CH_3$ et$-CH_2-CH_3$,
- $R''_3$ est un groupe alkyle en $C_1$-$C_8$.

Selon un mode de réalisation préféré, les unités répétitives correspondant à des monomères M2 représentent de 10 à 90 %, de préférence de 30 à 80%, en moles par rapport au nombre de moles total des unités répétitives dont est composé le copolymère A1.

Selon un mode de réalisation préféré, les unités répétitives correspondant à des monomères M1 représentent de 1 à 50%, de préférence de 5 à 30% en moles par rapport au nombre de moles total des unités répétitives dont est composé le copolymère A1.

Selon un mode de réalisation préféré, le copolymère A1 présente un degré de branchement allant de 0,1 à 10% molaire. Le degré de branchement est calculé en prenant uniquement en considération les chaines latérales oligomériques comprenant plus de 30 atomes de carbone.

De préférence le copolymère A1 présente un degré de branchement allant de 0,5 à 5% molaire lorsque les chaines oligomériques sont des oléfines avec plus de 100 atomes de carbone, de 5 à 10% molaire lorsque les chaines oligomériques sont des oléfines avec de 30 à 100 atomes de carbone.

Selon un mode de réalisation préféré, le copolymère en peigne A1 comprend des chaines pendantes non oligomériques qui ont une longueur moyenne allant de 1 à 10 atomes de carbone, de préférence de 3 à 8 atomes de carbone.

Selon un mode de réalisation préféré, la chaine principale du copolymère en peigne A1 a un degré de polymérisation moyen en nombre allant de 40 à 2000, de préférence de 40 à 1000.

Selon un mode de réalisation préféré, les chaines pendantes oligomériques du copolymère en peigne A1 ont un degré de polymérisation moyen en nombre allant de 8 à 1000.

Selon un premier mode de réalisation, le composé A2 est un composé de formule (III) :

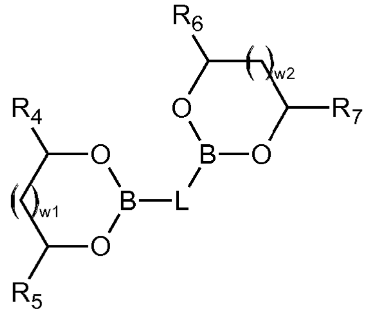

(III)

dans laquelle :

- $w_1$ et $w_2$, identiques ou différents sont des nombres entiers choisis entre 0 et 1 ;
- $R_4$, $R_5$, $R_6$ et $R_7$, identiques ou différents représentent un groupement choisi parmi un atome d'hydrogène, un groupement hydrocarboné comprenant de 1 à 30 atomes de carbone, éventuellement substitué par un ou plusieurs groupements choisis parmi : un hydroxyle, un groupement -OJ, -C(O)-O-J avec J un groupement hydrocarboné comprenant de 1 à 24 atomes de carbone ;
- L est un groupement de liaison divalent et choisi parmi le groupe formé par un aryle en $C_6$-$C_{18}$, un aralkyle en $C_6$-$C_{18}$ et une chaîne hydrocarbonée en $C_2$-$C_{24}$.

Selon un second mode de réalisation, le composé A2 est un copolymère comprenant au moins :

- des unités répétitives correspondant à des monomères M4 de formule (IV) :

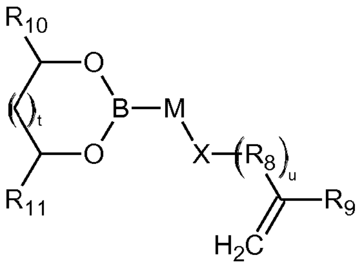

(IV)

dans laquelle :

- t est un nombre entier égal à 0 ou 1 ;
- u est un nombre entier égal à 0 ou 1 ;
- M et $R_8$ sont des groupements de liaison divalents, identiques ou différents, choisis parmi le groupe formé par un aryle en $C_6$-$C_{18}$, un aralkyle en $C_7$-$C_{24}$ et un alkyle en $C_2$-$C_{24}$ ; de préférence M est un aryle en $C_6$-$C_{18}$, et $R_8$ est un aralkyle en $C_7$-$C_{24}$ ;
- X est une fonction choisie parmi le groupe formé par -O-C(O)-, - C(O)-O-, -C(O)-N(H)-, -N(H)-C(O)-, -S-, -N(H)-, -N(R'$_4$)- et -O- avec R' $_4$ une chaîne hydrocarbonée comprenant de 1 à 15 atomes de carbone;
- $R_9$ est choisi parmi le groupe formé par -H, $-CH_3$ et $-CH_2-CH_3$ ;
- $R_{10}$ et $R_{11}$ identiques ou différents représentent un groupement choisi parmi un atome d'hydrogène, un groupement hydrocarboné comprenant de 1 à 30 atomes de carbone, éventuellement substitué par un ou plusieurs groupements choisis parmi : un hydroxyle, un groupement -OJ, -C(O)-O-J avec J un groupement hydrocarboné comprenant de 1 à 24 atomes de carbone ;

- Des unités répétitives correspondant à des monomères M5 de formule générale (V) :

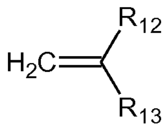

(V)

dans laquelle :

- $R_{12}$ est choisi parmi le groupe formé par -H, $-CH_3$ et $-CH_2-CH_3$,
- $R_{13}$ est choisi parmi le groupe formé par un aryle en $C_6$-$C_{18}$, un aryle en $C_6$-$C_{18}$ substitué par un groupement $R'_{13}$, -C(O)-O-$R'_{13}$ ; -O-$R'_{13}$, -S-$R'_{13}$ et -C(O)-N(H)-$R'_{13}$ avec $R'_{13}$ est un groupe alkyle en $C_1$-$C_{30}$.

Selon un mode de réalisation préféré, lorsque le composé A2 est un copolymère comprenant au moins deux fonctions ester boronique, c'est un copolymère en peigne comprenant une chaine principale et des chaines latérales, au moins une partie des chaines latérales du copolymère A2 étant composée d'oligomères.

Selon un mode de réalisation préféré, lorsque le composé A2 est un copolymère l'une au moins des trois conditions suivantes est réalisée :

- soit dans la formule (IV) : u = 1, $R_9$ est H et $R_8$ représente un aryle en $C_6$-$C_{18}$ ou un aralkyle en $C_7$-$C_{24}$ et la double liaison du monomère M4 de formule (IV) est directement connectée au groupement aryle ;
- soit dans la formule (V) : $R_{12}$ représente H et $R_{13}$ est choisi parmi le groupe formé par un aryle en $C_6$-$C_{18}$ et un aryle en $C_6$-$C_{18}$ substitué par un groupement $R'_{13}$ avec $R'_{13}$ représente H ou un groupe alkyle en $C_1$-$C_{25}$ et la double liaison du monomère M5 de formule (V) est directement connectée au groupement aryle ;
- soit le copolymère A2 comprend au moins un troisième monomère M3 de formule (X)

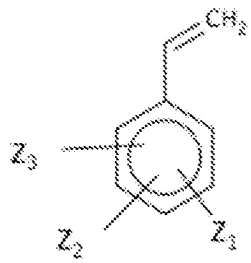

(X)

dans laquelle :

- $Z_1$, $Z_2$, $Z_3$, identiques ou différents, représentent, des groupements choisis parmi un atome d'hydrogène, un alkyle en $C_1$-$C_{12}$, un groupement -OZ', -C(O)-O-Z' avec Z' un alkyle en $C_1$-$C_{12}$.

Avantageusement, lorsque A2 comprend un troisième monomère M3 de formule (X), ce monomère M3 est le styrène.

Avantageusement, le copolymère ester boronique A2 a un pourcentage molaire de monomère(s) styrénique(s), avantageusement du styrène, de formule (IV), (V) et/ou (X), dans ledit copolymère allant de 0,05 à 30% molaire, préférentiellement de 0,1 à 25%.

Selon un mode de réalisation préféré, la teneur en copolymère A1 va de 0,1% à 50% en poids par rapport au poids total de la composition.

Selon un mode de réalisation préféré, la teneur en composé A2 va de 0,1% à 50% en poids par rapport au poids total de la composition.

Selon un mode de réalisation préféré, le ratio massique entre le copolymère A1 et le composé A2 (ratio A1/A2) va de 0,005 à 200, de préférence de 0,05 à 20, de manière encore plus préférée de 0,1 à 10.

Selon un mode de réalisation préféré, le copolymère A1 a été obtenu par un procédé comprenant au moins :

- une étape de polymérisation radicalaire contrôlée par transfert de chaîne réversible par addition-fragmentation en présence d'un agent de transfert de type thiocarbonylthio.

Selon un mode de réalisation encore préféré, le copolymère A1 a été obtenu par un procédé comprenant au

moins après la polymérisation :

- une étape d'aminolyse du résidu thiocarbonylthio en thiol, suivie de
- une addition de Michael sur un acrylate pour transformer le thiol en thioéther.

Selon un mode de réalisation préféré, la composition comprend en outre au moins un composé exogène A4 choisi parmi les polyols.

Selon un mode de réalisation préféré, le pourcentage molaire de composé exogène A4 par rapport aux fonctions ester boronique du copolymère A2 va de 0,025 à 5000%, de préférence va de 0,1% à 1000%, de manière encore plus préférée de 0,5% à 500%, de manière encore plus préférée de 1% à 150%.

Selon un autre mode de réalisation préféré, la composition comprend en outre au moins un composé exogène A5 choisi parmi ceux répondant à la formule (XI) :

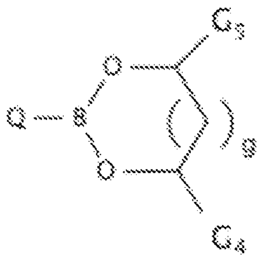

(XI)

dans laquelle :

- Q représente un groupement choisi parmi un groupement hydrocarboné comprenant de 1 à 30 atomes de carbone, éventuellement substituée par un ou plusieurs groupements choisis parmi : un hydroxyle, un groupement -OJ, -C(O)-O-J avec J un groupement hydrocarboné comprenant de 1 à 24 atomes de carbone,
- $G_4$, $G_5$, identiques ou différents, représentent des groupements choisis parmi un atome d'hydrogène, une chaîne hydrocarbonée comprenant de 1 à 24 atomes de carbone, un hydroxyle, un groupement -OJ, -C(O)-O-J avec J un groupement hydrocarboné comprenant de 1 à 24 atomes de carbone,
- g représente 0 ou 1.

Selon un mode de réalisation préféré, l'huile lubrifiante est choisie parmi les huiles du groupe I, du groupe II, du groupe III, du groupe IV, du groupe V de la classification API et l'un de leur mélange.

Selon un mode de réalisation préféré, la composition lubrifiante comprend au moins un additif fonctionnel choisi parmi le groupe formé par les antioxydants, les détergents, les additifs anti-usure, les additifs extrême pression, les polymères améliorant l'indice de viscosité, les améliorants de point d'écoulement, les anti-mousses, les additifs anticorrosion, les épaississants, les dispersants, les modificateurs de frottements et leurs mélanges.

## Description détaillée

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

L'expression « compris entre X et Y » inclut les bornes, sauf mention contraire explicite. Cette expression signifie donc que l'intervalle visé comprend les valeurs X, Y et toutes les valeurs allant de X à Y.

> Définitions :

Par « oligomère », on entend une macromolécule constituée d'un nombre limité d'unités de répétitions. Ces unités de répétitions peuvent être toutes identiques ou un oligomère peut comprendre des unités de répétitions différentes. Généralement un oligomère comprend de 2 à 1000 unités de répétition. Le plus souvent, un oligomère résulte de la polymérisation ou de la copolymérisation d'un nombre limité de monomères. Un oligomère comprend une chaine principale et peut comprendre des chaines latérales également désignées chaines pendantes.

La chaine principale d'un polymère ou d'un oligomère est une chaine linéaire sur laquelle toutes les autres chaines peuvent être considérées comme pendantes. Lorsque plusieurs chaines peuvent être considérées comme chaine principale, on désigne comme chaine principale celle qui conduit à la représentation la plus simple de la molécule.

Le terme "chaîne principale" au sens de la présente invention ne signifie pas nécessairement que la longueur de chaîne de la chaîne principale est supérieure à celle des chaînes latérales.

Une chaine latérale ou une chaine pendante est un substituant d'une chaine macromoléculaire. Ce substituant peut être une molécule de faible masse moléculaire, un oligomère ou un polymère. Les chaines pendantes oligomères comprennent un enchainement d'au moins 30 atomes de carbone, de préférence au moins 50 atomes de carbone, encore mieux au moins 70 atomes de carbone.

Par « copolymère », on entend un oligomère ou une macromolécule linéaire ou ramifiée ayant une séquence constituée de plusieurs unités répétitives (ou motif monomère) dont au moins deux unités ont une structure chimique différente.

Par « motif monomère » ou « monomère », on entend une molécule capable d'être convertie en un oligomère ou une macromolécule par combinaison avec lui-même ou avec d'autres molécules du même type. Un monomère désigne la plus petite unité constitutive dont la répétition conduit à un oligomère ou à une macromolécule.

Par « polymère en peigne », également désigné copolymère ramifié, ou branché, on entend un polymère qui présente une chaine principale et au moins une chaine latérale ou chaine pendante fixée à la chaine principale en un point situé entre les deux extrémités de la chaine principale, appelé point de ramification ou point de branchement. A la différence des polymères linéaires qui comportent des groupes latéraux ou groupes pendants non polymériques, les chaines latérales des polymères en peigne sont des oligomères, des polymères ou des copolymères. De préférence, selon l'invention, un polymère en peigne comprend au moins deux, encore mieux au moins trois chaines latérales ou chaines pendantes. Le degré de branchement au sens de l'invention caractérise le branchement par des chaines latérales oligomériques ayant plus de 30 atomes de carbone.

Par « copolymère statistique », on entend un oligomère ou une macromolécule dans lequel la distribution séquentielle des motifs monomères obéit à des lois statistiques connues. Par exemple, un copolymère est dit statistique lorsqu'il est constitué par des motifs monomères dont la distribution est une distribution markovienne. Un polymère statistique schématique (P1) est illustré en figure 1. La distribution dans la chaîne polymère des motifs monomères dépend de la réactivité des fonctions polymérisables des monomères et de la concentration relative des monomères.

Par « copolymère à blocs », on entend un oligomère ou une macromolécule qui comprend un ou plusieurs blocs ou qui est constitué de blocs. Par « bloc » on désigne une partie d'un copolymère comprenant plusieurs motifs monomères identiques ou différents et qui possèdent au moins une particularité de constitution ou de configuration permettant de la distinguer de ses parties adjacentes. Un copolymère à blocs schématique (P3) est illustré en figure 1.

Un « copolymère à gradient » désigne un copolymère d'au moins deux motifs monomères de structures différentes dont la composition en monomère change de façon graduelle le long de la chaîne polymère, passant ainsi de façon progressive d'une extrémité de la chaîne polymère riche en un motif monomère, à l'autre extrémité riche en l'autre comonomère. Un polymère à gradient schématique (P2) est illustré en figure 1.

Les copolymères polydiols de l'invention sont des copolymères statistiques ou des copolymères à gradients. Ils peuvent présenter une répartition en gradient de certains monomères et une répartition statistique ou quasi-statistique d'autres monomères. Ils se distinguent des copolymères à blocs.

Par « copolymérisation », on entend un procédé qui permet de convertir un mélange d'au moins deux motifs monomères de structures chimiques différentes en un oligomère ou en un copolymère.

Les polyoléfines sont connues de l'homme du métier. Elles peuvent être obtenues en polymérisant des alcènes et / ou des alcanediènes constitués de carbone et d'hydrogène, par exemple des alcènes en C2-C10 tels que l'éthylène, le propylène, le n-butène, l'isobutène, le cyclobutène, le cycloheptène, le cyclooctène, le norbornène, et/ou des C4-C10-alcadiènes tels que le butadiène, l'isoprène, le cyclooctadiène, le norbornadiène. Selon l'invention, on inclut dans la définition des polyoléfines : les polyoléfines hydrogénées, les poly(alcanediènes) hydrogénés, l'hydrogénation étant partielle ou en totalité, les copolymères d'oléfine, de polyoléfine, de polyoléfine hydrogénée et de polyoléfine-co-polyoléfine hydrogénée.

Dans la suite de la présente demande, « B » représente un atome de bore.

Par « alkyle en $C_i$-$C_j$ » on entend une chaîne hydrocarbonée saturée, linéaire ou ramifiée, comprenant de i à j atomes de carbone. Par exemple, pour « alkyle en $C_1$-$C_{10}$ », on entend une chaîne hydrocarbonée saturée, linéaire ou ramifiée, comprenant de 1 à 10 atomes de carbone.

Par « aryle en $C_x$-$C_y$ », on entend un groupe fonctionnel qui dérive d'un composé hydrocarboné aromatique comprenant de x à y atomes de carbone. Ce groupe fonctionnel peut être monocyclique ou polycyclique. A titre illustratif, un aryle en $C_6$-$C_{18}$ peut être le phényle, le naphtalène, l'anthracène, le phénanthrène et le tétracène.

Par « alcényle en $C_x$-$C_y$ », on entend une chaîne hydrocarbonée linéaire ou ramifiée comportant au moins une insaturation, de préférence une double liaison carbone-carbone, et comprenant de x à y atomes de carbone.

Par « aralkyle en $C_x$-$C_y$ », on entend un composé hydrocarboné aromatique, de préférence monocyclique, substitué par au moins une chaîne alkyle linéaire ou ramifiée et dont le nombre total d'atomes de carbone du cycle aromatique et de ses substituants va de x à y atomes de carbone. A titre illustratif un aralkyle en $C_7$-$C_{18}$ peut être choisi dans le groupe formé par le benzyle, le tolyle et le xylyle.

Par groupe « aryle en $C_x$-$C_y$ substitué par un groupement Y », on entend un composé hydrocarboné aromatique, de préférence monocyclique, comprenant de x à y atomes de carbone dont au moins un atome de carbone du cycle aromatique est substitué par un groupe Y.

Par « Hal » ou « halogène » on entend un atome d'halogène choisi parmi le groupe formé par le chlore, le brome, le fluor et l'iode.

Dans la description, lorsque l'on indique qu'un copolymère « comprend des unités répétitives correspondant à un monomère $M_i$ », cela signifie que le copolymère peut résulter directement de la copolymérisation du monomère $M_i$, et i représente un indice identifiant les différents monomères illustrés ci-dessous, avec d'autres comonomères, mais aussi que le copolymère peut avoir été obtenu par copolymérisation d'autres monomères que le monomères $M_i$ et avoir été soumis ensuite à une étape de transformation chimique, de telle sorte que les unités structurales qu'il comprend sont identiques à celles qui auraient été obtenue par copolymérisation du monomère $M_i$. Par exemple, un monomère à fonctionnalité acide, tel que l'acide acrylique ou l'acide méthacrylique peut être tout d'abord copolymérisé avec d'autres monomères pour former un copolymère, puis tout ou partie des fonctions acides peuvent ensuite être transformées par toute réaction, par exemple au moyen d'une réaction d'estérification avec un alcanol ou d' amidation avec une alkylamine. On obtiendra alors un copolymère comprenant des unités répétitives correspondant à un monomère acrylate d'alkyle ou acrylamide d'alkyle.

> <u>Composition d'additifs selon</u> l'invention :

Un objet de la présente invention est une composition de composés associatifs et échangeables de manière thermoréversible, cette composition résultant du mélange d'au moins :

- un copolymère en peigne polydiol A1 tel que décrit ci-après ou notamment susceptible d'être obtenu par l'un des procédés décrits ci-après ;
- un composé A2 comprenant au moins deux fonctions esters boroniques.

Cette composition d'additifs permet de contrôler et de moduler le comportement rhéologique d'un milieu dans lequel elle est ajoutée. Le milieu peut être un milieu hydrophobe, notamment apolaire, tel qu'un solvant, une huile minérale, une huile naturelle, une huile synthétique.

◦ ***<u>Copolymères en peigne polydiol A1</u>***

Le copolymère en peigne polydiol A1 comprend une chaine principale à laquelle sont rattachées des chaines latérales, au moins une partie des chaines latérales du copolymère A1 étant composée d'oligomères.

Les chaines latérales du copolymère en peigne A1 selon l'invention se distinguent des chaines latérales des copolymères polyol de l'art antérieur mises en œuvre en mélange avec des esters boroniques en ce que au moins une partie des chaines latérales est composée d'oligomères.

Par « chaine latérale composée d'oligomères » on entend qu'une partie au moins de la chaine latérale est un oligomère d'un ou plusieurs monomères. Il n'est nullement exclu que cette chaine latérale comprenne d'autres fonctionnalités comme par exemple une fonction ou une succession de fonctions reliant la chaine latérale à la chaine principale.

• *<u>Les chaines latérales des copolymères A1</u>*

Les chaines latérales des copolymères A1 composées d'oligomères présentent un degré de polymérisation qui n'est pas nul, contrairement aux chaines latérales des copolymères du même type qui sont connues de l'art antérieur.

De préférence, les chaines latérales composées d'oligomères représentent de 3 à 95% en masse par rapport à la masse totale du copolymère A1, de préférence de 15 à 95%, mieux de 20 à 95%.

Au moins une partie des chaines latérales du copolymère A1 est composée d'oligomères comportant plus de 30 atomes de carbone, de préférence au moins 50 atomes de carbone, encore mieux au moins 70 atomes de carbone.

De préférence, les chaines latérales composées d'oligomères comportant plus de 30 atomes de carbone représentent de 3 à 95% en masse par rapport à la masse totale du copolymère A1, de préférence de 15 à 95%, mieux de 20 à 95%.

Au moins une partie des chaines latérales des copolymères A1 composées d'oligomères présentent un degré de polymérisation allant de 5 à 1000, de préférence de 5 à 500, encore mieux de 5 à 200.

Encore plus préférentiellement, les chaines latérales composées d'oligomères de degré de polymérisation allant de 5 à 1000 représentent de 3 à 95% en masse par rapport à la masse totale du copolymère A1, de préférence de 15 à 95%, mieux de 20 à 95%.

Les chaines latérales oligomériques des copolymères A1 peuvent être toutes de même nature ou elles peuvent être de nature différente.

Les copolymères A1 peuvent comprendre des chaines latérales oligomériques et des chaines latérales qui ne sont pas des oligomères.

De préférence, les chaines latérales des copolymères A1 qui ne sont pas des composés oligomères représentent de 5 à 97% en masse par rapport à la masse totale du copolymère A1, préférentiellement de 5 à 85%, mieux de 5 à 80%, préférentiellement encore de 5 à 75% en masse par rapport à la masse totale du copolymère A1.

Selon une première variante, au moins une partie des chaines latérales du copolymère A1 est composée d'oligomères O1 comprenant un fragment polyoléfine. Le fragment polyoléfine peut être obtenu à partir d'un macromonomère polyoléfine ou à partir d'un monomère fonctionnalisé sur lequel on greffe une fonction polyoléfine.

De préférence, les chaines latérales comprenant un fragment polyoléfine représentent de 8 à 50 %, de préférence de 10 à 40 % en masse par rapport à la masse totale du copolymère A1.

Par exemple, les chaines latérales comprenant un fragment polyoléfine peuvent consister en des unités répétitives correspondant à un monomère M6 de formule générale (IX), dérivé d'une polyoléfine.

Selon une autre variante, une partie des chaines latérales du copolymère A1 est composée d'oligomères O2 comprenant des unités répétitives correspondant à des monomères choisis parmi des monomères M2 de formule générale (II).

Par exemple, selon cette variante, une partie des chaines latérales du copolymère A1 est composée d'oligomères O2 comprenant des unités répétitives correspondant à des monomères choisis parmi :

- des monomères M1 de formule générale (I),
- des monomères M2 de formule générale (II).

Le copolymère A1 peut comporter à la fois des chaines latérales de type oligomères O1 comprenant un fragment polyoléfine et de type oligomères O2 comprenant des unités répétitives correspondant à des monomères choisis parmi des monomères M2 de formule générale (II).

• *La chaine principale des copolymères A1*

La chaine principale du copolymère en peigne A1 comprend de préférence des unités répétitives correspondant à des monomère M1 de formule générale (I).

La chaine principale du copolymère en peigne A1 peut comprendre des unités répétitives correspondant à des monomères M2 de formule générale (II).

De préférence, la chaine principale du copolymère en peigne A1 comprend des unités répétitives correspondant à au moins un monomère M3, de formule générale (X) définie ci-dessus. Selon cette variante, les autres monomères qui entrent dans la composition du copolymère en peigne polydiol A1 doivent être compatibles avec une copolymérisation avec des monomères M3.

Le copolymère A1 peut être un copolymère statistique ou un copolymère à gradient.

Avantageusement, le copolymère en peigne polydiol A1 résulte, directement ou indirectement, de la (co) polymérisation d'au moins un monomère diol M1, qui est introduit soit dans la chaine principale, soit dans les chaines latérales, soit à la fois dans la chaine principale et dans les chaines latérales du copolymère A1.

Par « résulte directement ou indirectement », on entend que le procédé de préparation du copolymère peut comprendre une ou plusieurs étapes distinctes de la copolymérisation, telle qu'une étape de déprotection. Notamment la copolymérisation peut éventuellement être suivie d'une étape de déprotection des fonctions diol.

Dans toute la description, on utilise indifféremment et de façon équivalente les expressions : « le copolymère polydiol A1 résulte, directement ou indirectement, de la copolymérisation » et « le copolymère polydiol A1 résulte de la copolymérisation ».

• *Répartition des monomères dans la chaine principale et dans les chaines latérales*

Les monomères M1, M2 et M3 peuvent être présents dans la chaine principale et/ou dans les chaines latérales. Dans les chaines latérales, ils sont présents sous forme d'oligomères. Eventuellement d'autres monomères peuvent être présents dans la chaine principale et/ou dans les chaines latérales.

Des monomères M6 peuvent être utilisés dans la copolymérisation de la chaine principale et fournir des chaines latérales oligomériques.

Lorsque des monomères M1, M2 et/ou M3 sont intégrés dans la chaine principale d'un copolymère A1 selon l'invention, les chaines latérales des monomères M1, M2 et M3 forment des chaines latérales non oligomériques du copolymère A1.

Le copolymère en peigne A1 comprend des chaines latérales non oligomériques qui ont, de préférence, une longueur moyenne allant de 1 à 10 atomes de carbone, encore plus préférentiellement de 3 à 8 atomes de carbone.

Lorsque le copolymère en peigne A1 comprend des chaines latérales oligomériques constituées de monomère M1 ou de monomère M2, ces monomères ont, de préférence, une longueur moyenne allant de 1 à 10 atomes de carbone.

Par « longueur moyenne » on entend la longueur moyenne des fragments alkyles des chaînes latérales des monomères M1 de formule (I) et M2 de formule (II) entrant dans la constitution du copolymère A1. Les chaines latérales issues du ou des monomères styréniques ne sont pas prises en compte dans le calcul des longueurs moyennes des chaines latérales des copolymères en peigne A1. L'homme du métier sait obtenir cette longueur moyenne en sélectionnant de manière appropriée les types et le ratio de monomères constituant le copolymère polydiol.

Sauf indication spécifique, les préférences exprimées ci-dessous pour le choix des monomères M1, M2 et M3 sont valables aussi bien lorsque les monomères M1, M2 et M3 sont présents sous forme d'unités répétitives dans la chaine principale que lorsqu'ils sont présents dans les chaines pendantes.

• <u>*Monomère MI*</u>

Le premier monomère M1 du copolymère en peigne (A1) de l'invention a pour formule générale (I) :

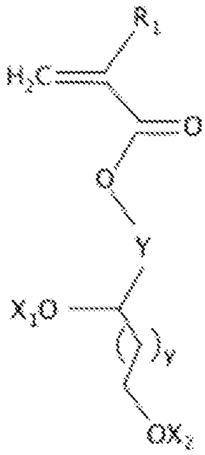

(I)

dans laquelle :

- $R_1$ est choisi parmi le groupe formé par -H, $-CH_3$ et $-CH_2-CH_3$, de préférence -H et $-CH_3$ ;
- Y représente un groupement de liaison divalent choisi parmi les chaines alkyle en $C_1$-$C_{20}$, comprenant éventuellement un ou plusieurs ponts éther -O- ; de préférence Y représente un groupement choisi parmi : une chaine $-(CH_2)_x-$ ou $-(CH_2)_{x'}-O-(CH_2)_{x''}-$
  avec
  - x est un nombre entier allant de 1 à 18, de préférence allant de 2 à 18; de manière plus préférée de 3 à 8 ; de manière encore plus préférée x est égal à 4 ;
  - x', x'' des nombres entiers allant de 1 à 17, x'+x'' est un nombre entier allant de 2 à 18 ; de manière plus préférée de 3 à 8 ; avantageusement, x' est un nombre entier allant de 1 à 4, x" = 1 ; de manière encore plus préférée x' = 2, x'' = 1 ;
- y est un nombre entier égal à 0 ou 1; de préférence y est égal à 0 ;
- $X_1$ et $X_2$, identiques ou différents, sont choisis parmi le groupe formé par l'hydrogène, le tétrahydropyranyle, le méthyloxyméthyle, le ter-butyle, le benzyle, le triméthylsilyle et le t-butyle diméthylsilyle ;
  ou bien
- $X_1$ et $X_2$ forment avec les atomes d'oxygène un pont de formule suivante :

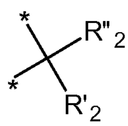

dans laquelle :

- les étoiles (*) symbolisent les liaisons aux atomes d'oxygène,
- R'$_2$ et R''$_2$, identiques ou différents, sont choisis parmi le groupe formé par l'hydrogène et un groupe alkyle en $C_1$-$C_{11}$ ;

ou bien

- $X_1$ et $X_2$ forment avec les atomes d'oxygène un ester boronique de formule suivante :

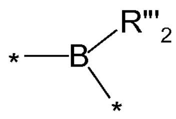

dans laquelle :

- les étoiles (*) symbolisent les liaisons aux atomes d'oxygène,
- R'''$_2$ est choisi parmi le groupe formé par un aryle en $C_6$-$C_{30}$, un aralkyle en $C_7$-$C_{30}$ et un alkyle en $C_2$-$C_{30}$, de préférence un aryle en $C_6$-$C_{18}$, de manière plus préférée le phényle.

De préférence, lorsque R'$_2$ et R''$_2$ sont un groupe alkyle en $C_1$-$C_{11}$ ; la chaîne hydrocarbonée est une chaîne linéaire. De préférence, le groupe alkyle en $C_1$-$C_{11}$ est choisi parmi le groupe formé par le méthyle, l'éthyle, le n-propyle, le n-butyle, le n-pentyle, le n-hexyle, le n-heptyle, le n-octyle, le n-nonyle, le n-décycle et le n-undécyle. De manière plus préférée, le groupe alkyle $C_1$-$C_{11}$ est le méthyle.

De préférence, lorsque R'''$_2$ est un groupe alkyle en $C_2$-$C_{30}$, la chaîne hydrocarbonée est une chaîne linéaire.

De manière encore préférée, le monomère M1 répond à la formule générale (Ibis) :

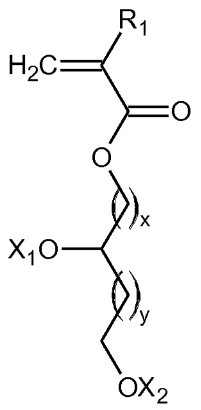

(Ibis)

Avec x est un nombre entier allant de 1 à 18, de préférence allant de 2 à 18 ; de manière plus préférée de 3 à 8 ; de manière encore plus préférée x est égal à 4.

Parmi les monomères de formule (I), les monomères répondant à la formule (I-A) font partie des préférés :

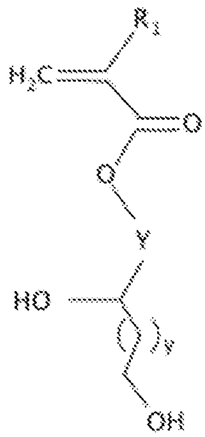

(I-A)

dans laquelle :

- $R_1$ est choisi parmi le groupe formé par -H, $-CH_3$ et $-CH_2-CH_3$, de préférence -H et $-CH_3$ ;
- Y représente un groupement de liaison divalent choisi parmi: une chaine - $(CH_2)_x$- ou $-(CH_2)_{x'}-O-(CH_2)_{x''}-$ avec
    - x est un nombre entier allant de 1 à 18, de préférence allant de 2 à 18; de manière plus préférée de 3 à 8 ; de manière encore plus préférée x est égal à 4 ;
    - x', x'' des nombres entiers allant de 1 à 17, x'+x'' est un nombre entier allant de 2 à 18 ; de manière plus préférée de 3 à 8 ; avantageusement, x' est un nombre entier allant de 1 à 4, x" = 1 ; de manière encore plus préférée x' = 2, x" = 1 ;
- y est un nombre entier égal à 0 ou 1; de préférence y est égal à 0.

Parmi les monomères de formule (I-A), ceux répondant à la formule (Ibis-A) font partie des préférés :

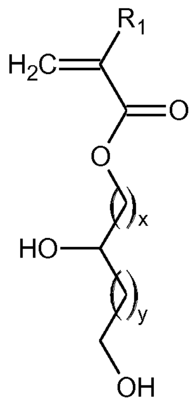

(Ibis-A)

dans laquelle $R_1$, x, y ont la même définition et les mêmes préférences que dans la formule (I-A).

Parmi les monomères de formule (I), les monomères répondant à la formule (I-B) font partie des préférés :

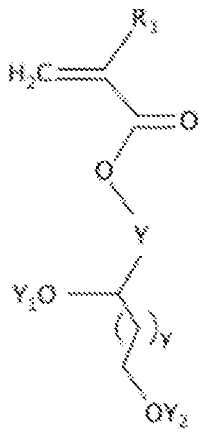

(I-B)

dans laquelle :

- $R_1$ est choisi parmi le groupe formé par -H, $-CH_3$ et $-CH_2-CH_3$, de préférence -H et $-CH_3$ ;
- Y représente un groupement de liaison divalent choisi parmi: une chaine - $(CH_2)_x$- ou $-(CH_2)_{x'}-O-(CH_2)_{x''}-$ avec

    - x est un nombre entier allant de 1 à 18, de préférence allant de 2 à 18; de manière plus préférée de 3 à 8 ; de manière encore plus préférée x est égal à 4 ;
    - x', x'' des nombres entiers allant de 1 à 17, x'+x'' est un nombre entier allant de 2 à 18 ; de manière plus préférée de 3 à 8 ; avantageusement, x' est un nombre entier allant de 1 à 4, x" = 1 ; de manière encore plus préférée x' = 2, x'' = 1 ;

- y est un nombre entier égal à 0 ou 1; de préférence y est égal à 0 ;
- $Y_1$ et $Y_2$, identiques ou différents, sont choisis parmi le groupe formé par le tétrahydropyranyle, le méthyloxyméthyle, le ter-butyle, le benzyle, le triméthylsilyle et le t-butyle diméthylsilyle ;
  ou bien
- $Y_1$ et $Y_2$ forment avec les atomes d'oxygène un pont de formule suivante :
  dans laquelle

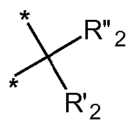

:

- les étoiles (*) symbolisent les liaisons aux atomes d'oxygène,
- $R'_2$ et $R''_2$, identiques ou différents, sont choisis parmi le groupe formé par l'hydrogène et un groupe alkyle en $C_1$-$C_{11}$ ;

ou bien

- $Y_1$ et $Y_2$ forment avec les atomes d'oxygène un ester boronique de formule suivante :

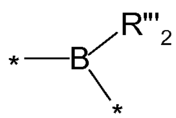

dans laquelle :

- les étoiles (*) symbolisent les liaisons aux atomes d'oxygène,
- $R'''_2$ est choisi parmi le groupe formé par un aryle en $C_6$-$C_{30}$, un aralkyle en $C_7$-$C_{30}$ et un alkyle en $C_2$-$C_{30}$, de préférence un aryle en $C_6$-$C_{18}$, de manière plus préférée le phényle.

De préférence, lorsque $R'_2$ et $R''_2$ est un groupe alkyle en $C_1$-$C_{11}$ ; la chaîne hydrocarbonée est une chaîne linéaire. De préférence, le groupe alkyle $C_1$-$C_{11}$ est choisi parmi le groupe formé par le méthyle, l'éthyle, le n-propyle, le n-butyle, le n-pentyle, le n-hexyle, le n-heptyle, le n-octyle, le n-nonyle, le n-décycle et le n-undécyle. De manière plus préférée, le groupe alkyle $C_1$-$C_{11}$ est le méthyle.
De préférence, lorsque $R'''_2$ est un groupe alkyle en $C_2$-$C_{30}$, la chaîne hydrocarbonée est une chaîne linéaire.
Parmi les monomères de formule (I-B), ceux répondant à la formule (Ibis-B) font partie des préférés :

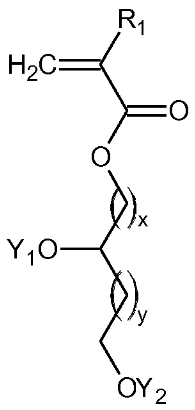

(Ibis-B)

dans laquelle $R_1$, x, y, $Y_1$, $Y_2$, ont la même définition et les mêmes préférences que dans la formule (I-B).
Des exemples de monomères diol de formule (I) préférés sont illustrés ci-dessous :

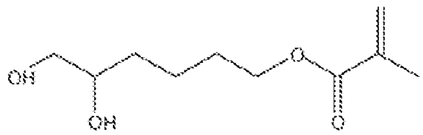

CAS 45755-07-1

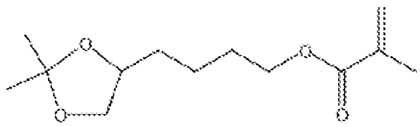

CAS 86218-23-7

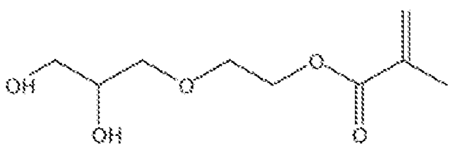

CAS 60503-49-3

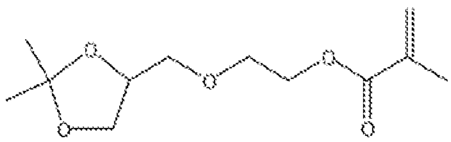

CAS 60503-48-2

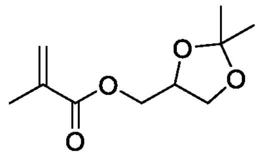

CAS 7098-80-8

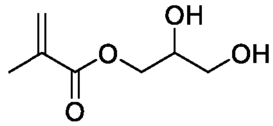

CAS 5919-74-4

La synthèse du copolymère en peigne polydiol (A1) peut comprendre la copolymérisation de monomères (I-B) sous forme protégée avec d'autres comonomères, suivie de la déprotection des fonctions diol des monomères (I-B).

• *Obtention du monomère M1*

Le monomère M1 de formule générale formule (I) est obtenu suivant les méthodes décrites dans WO2015/110642, WO2015/110643 et WO2016113229.

Des exemples de synthèse des monomères M1 sont illustrés dans la partie expérimentale des demandes WO2015/110642, WO2015/110643 et WO2016113229.

• *Monomère M2*

Le second monomère du copolymère en peigne A1 de l'invention a pour formule générale (II) :

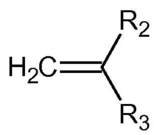

(II)

dans laquelle :

- $R_2$ est choisi parmi le groupe formé par -H, $-CH_3$ et $-CH_2-CH_3$, de préférence -H et-$CH_3$ ;
- $R_3$ est choisi parmi le groupe formé par un groupement aryle en $C_6$-$C_{18}$, un aryle en $C_6$-$C_{18}$ substitué par un groupement $R'_3$, -C(O)-O-$R'_3$ -O-$R'_3$, -S-$R'_3$ et -C(O)-N(H)-$R'_3$, avec $R'_3$ est un groupe alkyle en $C_1$-$C_{30}$.

De préférence, $R'_3$ est un groupe alkyle en $C_1$-$C_{30}$ dont la chaîne hydrocarbonée est linéaire.

Parmi les monomères de formule (II), les monomères répondant à la formule (II-A) font partie des préférés :

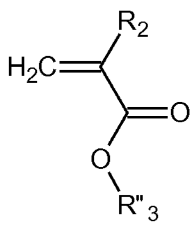

(II-A)

dans laquelle :

- $R_2$ est choisi parmi le groupe formé par -H, $-CH_3$ et-$CH_2-CH_3$, de préférence -H et $-CH_3$ ;
- $R''_3$ est un groupe alkyle en $C_1$-$C_8$, de préférence, la $R''_3$ est linéaire.

De préférence, les unités correspondant à des monomères (IIA) sont présentes dans la chaine principale du

copolymère A1.

Parmi les monomères de formule (II), les monomères répondant à la formule (II-B) font aussi partie des préférés :

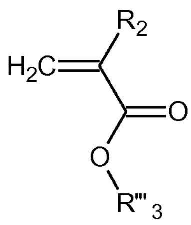

(II-B)

dans laquelle :

- $R_2$ est choisi parmi le groupe formé par -H, $-CH_3$ et-$CH_2$-$CH_3$, de préférence -H et $-CH_3$ ;
- $R'''_3$ est un groupe alkyle en $C_9$-$C_{30}$, de préférence, $R'''_3$ est linéaire.

De préférence, les unités correspondant à des monomères (IIB) sont présentes dans les chaines pendantes oligomériques du copolymère A1.

• *Obtention du monomère M2*

Les monomères de formule (II), (II-A) et, (II-B) sont bien connus de l'homme du métier. Ils sont commercialisés par Sigma-Aldrich® et TCI®.

• *Monomère M3*

Le troisième monomère du copolymère en peigne A1 de l'invention a pour formule générale (X) :

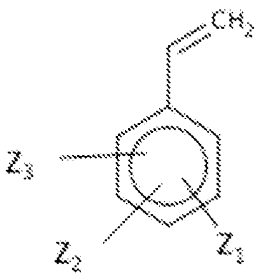

(X)

dans laquelle :

- $Z_1$, $Z_2$, $Z_3$, identiques ou différents, représentent des groupements choisis parmi un atome d'hydrogène, un alkyle en $C_1$-$C_{12}$, un groupement -OZ', - C(O)-O-Z' avec Z' un alkyle en $C_1$-$C_{12}$.

Par « groupe alkyle en $C_1$-$C_{12}$ », on entend une chaîne hydrocarbonée saturée, linéaire ou ramifiée comprenant de 1 à 12 atomes de carbone. De préférence, la chaîne hydrocarbonée est linéaire. De manière préférée, la chaîne hydrocarbonée comprend de 1 à 6 atomes de carbone.

Avantageusement, $Z_1$, $Z_2$, $Z_3$, identiques ou différents, représentent des groupements choisis parmi un atome d'hydrogène, un alkyle en $C_1$-$C_6$, un groupement -OZ', -C(O)-O-Z' avec Z' un alkyle en $C_1$-$C_6$.

De manière encore préférée, $Z_1$, $Z_2$, $Z_2$, identiques ou différents, représentent des groupements choisis parmi un atome d'hydrogène, un alkyle en $C_1$-$C_4$, un groupement -OZ', -C(O)-O-Z' avec Z' un alkyle en $C_1$-$C_4$.

Parmi les monomères M3 préférés, on peut citer : le styrène, le para tert-butyl styrène, le para méthoxy styrène, le para acétoxy styrène, le 2,4,6 triméthylstyrène,

Selon un mode de réalisation préféré M3 est le styrène.

• *Obtention du monomère M3*

Certains monomères de formule (X), tels que le styrène, le para-tert-butyl styrène, le para-méthoxystyrène, le

para-acétoxystyrène, le 2,4,6-triméthylstyrène sont bien connus de l'homme du métier. Ils sont commercialisés notamment par Sigma-Aldrich®. D'autres monomères peuvent être préparés à partir de ces monomères commerciaux par des méthodes de synthèse bien connues de l'homme du métier.

• *Monomère M6*

Le monomère M6 a pour formule générale (IX) :

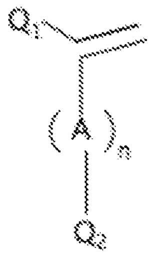

(IX)

dans laquelle

$Q_1$ est choisi parmi le groupe formé par -H, $-CH_3$, et $-CH_2-CH_3$ ;
$Q_2$ est choisi parmi un groupement -Q', -O-Q', -C(O)-O-Q', -O- C(O)-Q', - S-Q', $-S-(CH_2)_2-C(O)-O-Q'$, -N(H)-C(O)- Q' et -C(O)-N(H)-Q' avec Q' est une polyoléfine,
n représente un entier choisi parmi 0 et 1,
A représente un groupement divalent choisi parmi : $-A_1-$, $-O-(-A_2-O-)n'-A_1-$, - C(O)-O- $(-A_2-O-)n'-A_1-$, -O-C(O)-($-A_2-O-)n'-A_1-$, $-S-(-A_2-O-)n'-A_1-$, $-N(H)-C(O)-(-A_2-O-)n'- A_1-$ et $-C(O)-N(H)-( -A_2-O-)n'-A_1-$ avec :

$A_1$ est un groupement divalent choisi parmi un alkyle en $C_1$-$C_{30}$, un aryle en $C_6$-$C_{30}$, un aralkyle en $C_6$-$C_{30}$,
$A_2$ est un groupement divalent choisi parmi les alkyles en $C_2$-$C_4$,
n' est un entier, n' représente 0 ou 1.

Par exemple $A_2$ peut être choisi parmi :

$-CH_2-CH_2-$, $-CH_2-CH_2-CH_2-$, $-CH_2-C(CH_3)H-$.

De préférence $A_2$ est linéaire, encore plus préférentiellement $A_2$ représente - $CH_2-CH_2-$.
De préférence, dans la formule (IX) $Q_1$ représente -H.
De préférence, dans la formule (IX), $Q_2$ est choisi parmi, un groupement -Q', - $S-(CH_2)_2-C(O)-O-Q'$ ou -C(O)-O-Q', avec Q' une polyoléfine.
Selon une première variante, n=0 et $Q_1 = CH_3$.
Selon une deuxième variante, préférée, n=1, n'=0, $Q_1$ = H et $A_1$ est un groupement divalent choisi parmi un alkyle en $C_1$-$C_{12}$, un aryle en $C_6$-$C_{12}$, un aralkyle en $C_6$-$C_{12}$.
Préférentiellement selon cette deuxième variante, n=1, $Q_1$ = H et A = paraphényl.
Les macromonomères à base de polyoléfine tels que ceux de formule (IX) sont connus. Ces unités répétitives comprennent au moins un groupe Q' dérivé de polyoléfines.
De préférence, dans la formule (IX), Q' représente une polyoléfine ou une polyoléfine hydrogénée dérivée d'alcène ou d'alcanediènes, tels que l'éthylène, le propylène, le n-butène, l'iso-butène, le butadiène, l'isoprène, le cyclobutène, le cycloheptène, le cyclooctène.
Les motifs répétitifs M6 dérivés de macromonomères à base de polyoléfine comprennent de préférence au moins 90% en poids et de préférence encore au moins 92,5% en poids et de préférence au moins 95% en poids de groupes dérivés d'alcènes et/ou d'alcadiènes, par rapport au poids des motifs répétitifs M6. Les groupes polyoléfiniques Q' peuvent en particulier être également présents sous forme hydrogénée.
De préférence Q' représente une polyoléfine choisie parmi les polybutadiènes hydrogénés de poids moléculaire moyen en nombre de 400 à 50 000 g/mol, mieux de 500 à 50 000 g/mol, plus préférentiellement de 1000 à 10 000 g/mol, en particulier de 1500 à 5000 g/mol et encore plus préférentiellement de 500 à 5000 g/mol, ou encore de 700 à 3000 g/mol.
De préférence Q' représente une polyoléfine comprenant de 30 à 500 atomes de carbone, préférentiellement de 50 à 400 atomes de carbone, ou encore de 70 à 200 atomes de carbone.

• *Obtention des unités répétitives correspondant au monomère M6*

Les unités répétitives correspondant au monomère M6 peuvent être obtenues par tout moyen connu de l'homme du métier.

Les monomères M6 avec $Q_1$ représente H, $Q_2$ représente -C(O)-O-Q', Q' étant une polyoléfine, peuvent être obtenus par réaction de l'acide acrylique avec un alcool Q'OH, du chlorure d'acryloyle avec un alcool Q'OH ou de l'anhydride acrylique avec un alcool Q'OH.

Les monomères M6 avec $Q_1$ représente $CH_3$, $Q_2$ représente -C(O)-O-Q', Q' étant une polyoléfine, peuvent être obtenus par réaction de l'anhydride méthacrylique avec un alcool Q'OH ou de l'acide méthacrylique avec un alcool Q'OH.

De façon alternative, on peut introduire une unité répétitive correspondant au monomère M6 avec $Q_1$ représente H, respectivement $CH_3$, $Q_2$ représente -C(O)-O-Q', Q' étant une polyoléfine ou une polyoléfine hydrogénée, en fonctionnalisant le squelette postérieurement à la polymérisation, par exemple en procédant suivant la séquence suivante :

- copolymérisation d'acide acrylique, respectivement méthacrylique, avec d'autres monomères tels que, par exemple, les monomères M1 de formule (I) et éventuellement les monomères M2 de formule (II) et/ou les monomères M3 de formule (X), pour former le squelette du copolymère peigne A1,
- estérification d'au moins une partie des fonctions acides du monomère acide (méth)acrylique par réaction avec un alcool Q'OH.

Les alcools polyoléfiniques qui sont utilisés peuvent être préparés notamment par les méthodes suivantes : synthèse d'un polybutadiène à terminaison hydroxyle telle qu'enseignée par US5159123 puis hydrogénation, par exemple par la méthode décrite dans US7148292. Parmi les alcools polyoléfiniques disponibles commercialement qui peuvent être utilisés, on peut citer le polybutadiène Krasol HLBH 5000M commercialisé par la société Cray Valley.

Pour les autres variantes de $Q_2$, l'homme du métier utilise de façon similaire des réactions classiques de fonctionnalisation d'un groupe polymérisable avant ou après la polymérisation de la chaine squelette, ou chaine principale, du copolymère A1, notamment par des réaction d'estérification, d'amidation, par réaction de couplage thiol-ène, par addition de Michael entre une fonction thiol et une fonction acrylate, acrylamide ou maléimide etc....

• *Chaines pendantes à base d'oligomères M1/M2/M3 :*

Selon un premier mode de réalisation, le copolymère A1 comprend des chaines latérales constituées d'oligomères comprenant des unités répétitives qui correspondent à des monomères choisis parmi des monomères M2 de formule générale (II).

De préférence, selon cette variante, le copolymère A1 comprend des chaines latérales constituées d'oligomères obtenus de façon directe ou indirecte à partir de monomères choisis parmi des monomères M2 de formule générale (II).

Selon un second mode de réalisation, le copolymère A1 comprend des chaines latérales constituées d'oligomères comprenant des unités répétitives qui correspondent à des monomères choisis parmi :

- des monomères M1 de formule générale (I),
- des monomères M2 de formule générale (II).

De préférence, selon cette variante, le copolymère A1 comprend des chaines latérales constituées d'oligomères obtenus de façon directe ou indirecte à partir de monomères choisis parmi :

- des monomères M1 de formule générale (I),
- des monomères M2 de formule générale (II).

Selon un mode de réalisation préféré, le copolymère A1 comprend des chaines latérales constituées d'oligomères comprenant des unités répétitives qui correspondent à des monomères choisis parmi :

- des monomères M1 de formule générale (I),
- des monomères M2 de formule générale (II),
- des monomères M3 de formule générale (X).

De préférence, selon cette variante, le copolymère A1 comprend des chaines latérales constituées d'oligomères obtenus de façon directe ou indirecte à partir de monomères choisis parmi :

- des monomères M1 de formule générale (I),
- des monomères M2 de formule générale (II),
- des monomères M3 de formule générale (X).

• *Obtention des chaines pendantes à base d'oligomères M1/M2/M3* :

Les chaines pendantes oligomériques peuvent être obtenues directement par copolymérisation :

- de monomères entrant dans la composition de la chaine principale,
  avec
- au moins un oligomère comprenant une fonction polymérisable et des unités répétitives correspondant à des monomères M2 de formule générale (II), et éventuellement des monomères M1 de formule générale (I) et/ou des monomères M3 de formule générale (X).

Selon un mode de réalisation préféré, les chaines pendantes sont obtenues par copolymérisation de monomères entrant dans la composition de la chaine principale avec au moins un monomère dit « de dérivation », suivie du greffage du ou des oligomères sur la fonction de dérivation.

Un monomère de dérivation est un monomère comprenant à la fois une fonction polymérisable, par exemple une double liaison vinylique ou acrylique, et au moins une fonction réactive permettant :

- le greffage d'une chaine pendante déjà oligomérisée, ou
- l'amorçage d'une réaction de polymérisation.

De préférence, le monomère de dérivation est choisi parmi les amorceurs de polymérisation radicalaire et les agents de transfert. La fonction réactive permettant d'amorcer la polymérisation d'une chaine pendante peut par exemple consister en une fonction bromée, comme décrit de façon détaillée dans la partie expérimentale. D'autres fonctions réactives bien connues de l'homme du métier, par exemple un agent RAFT, un agent de polymérisation radicalaire en présence de nitroxydes (NMP), un thiol, un diazo, un peroxyde peuvent également être utilisées.

De préférence, le monomère de dérivation M7 répond à la formule (XII) suivante :

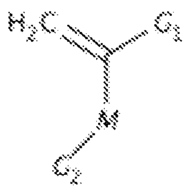

(XII)

dans laquelle

$G_1$ représente un groupement choisi parmi : -H, $-CH_3$, $-CH_2-CH_3$ ;
M représente un groupement hydrocarboné comprenant de 1 à 40 atomes de carbone, éventuellement une ou plusieurs fonctions choisies parmi -O-, -O-C(O)-, -OC(O)-O-, -N(H)-, -N=, -N(H)-C(O)-, -N(H)-C(O)-N(H)-, -S-, -S-C(O)-, -S-C(S)-O- ;
$G_2$ représente un groupement choisi parmi : Cl, Br, I, -C(O)-OH, $-G_3$, $-C(O)-OG_3$, avec $G_3$ un groupement alkyle en $C_1$-$C_{12}$.

Comme exemple de monomères de dérivation, on peut citer : l'acide acrylique, l'acide méthacrylique, les monomères bromés et xanthate :

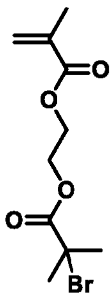 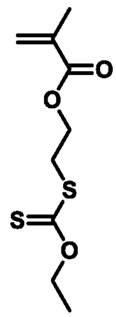

• *Autres monomères*

En plus des unités répétitives détaillées ci-dessus correspondant aux monomères M1, M2, M3 et M6, les polymères en peigne A1 de l'invention peuvent comprendre dans la chaine principale comme dans les chaines pendantes, d'autres unités répétitives dérivées d'autres comonomères, leur proportion étant d'au plus 20% en poids, de préférence d'au plus 10% en poids et plus préférablement d'au plus 5% poids, basé sur le poids total des unités répétitives dont est composé le copolymère A1.

• *Structuration des copolymères polvdiol en peigne A1*

Les copolymères polydiol en peigne A1 comprennent une chaine principale, ou chaine squelette, et au moins une chaine latérale ou chaine pendante.
De préférence, les copolymères polydiol en peigne A1 comprennent plus de deux chaines latérales ou chaines pendantes oligomériques.
De préférence, la chaine principale comprend au moins des unités répétitives correspondant aux monomères M2 de formule (II).
De préférence, la chaine principale comprend en outre au moins des unités répétitives correspondant aux monomères M3 de formule (X).
La chaine principale comprend avantageusement des unités répétitives correspondant aux monomères M1 de formule (I).
Les chaines pendantes peuvent être choisies notamment dans le groupe consistant en :

o Les groupements $Q_2$ tels que définis ci-dessus dans la formule (IX) et qui sont choisis parmi -Q', -O-Q', -C(O)-O-Q', -O- C(O)-Q', -S-Q', -S-$(CH_2)_2$-C(O)-O-Q', -N(H)-C(O)- Q' et -C(O)-N(H)-Q' avec Q' est une polyoléfine.

Les groupements $Q_2$ peuvent éventuellement être rattachés à la chaine principale au travers d'un groupement A choisi parmi : -$A_1$, -O-($A_2$-O)n'-$A_1$, -C(O)-O- ($A_2$-O)n'-$A_1$, -O- C(O)-($A_2$-O)n'-$A_1$, -S-($A_2$-O)n'-$A_1$, - N(H)-C(O)-($A_2$-O)n'-$A_1$ et - C(O)-N(H)-($A_2$-O)n'-$A_1$ avec :

$A_1$ est un alkyle en $C_1$-$C_{30}$, un aryle en $C_6$-$C_{30}$, un aralkyle en $C_6$-$C_{30}$,
$A_2$ est un alkyle en $C_2$-$C_4$,
n' est un entier, n' représente 0 ou 1,
o Des oligomères composés d'unités répétitives correspondant à des monomères M2 et éventuellement des monomères M1 et/ou M3.

Ainsi, des unités répétitives correspondant à des monomères M1 et à des monomères M2 et M3 peuvent se trouver sur la chaine principale et/ou sur les chaines pendantes.
On a représenté sur les figures 6A, 6B et 6C différentes répartitions possibles des fonctionnalités de ces copolymères.
Sur ces figures, les groupements fonctionnels diols (tels que ceux portés par les monomères M1 de formule (I) sont désignés « F »
Sur la figure 6A, la chaine principale (P) comporte des fonctions diols, tandis que les chaines latérales (L) n'en comportent pas. Par exemple cette figure peut correspondre à un copolymère à base de monomères M1, M2, et éventuellement M3 et de macromonomères oléfiniques M6.
Sur la figure 6B, la chaine principale (P) ne comporte pas de fonctions diols, tandis que certaines chaines latérales (Lb) en comportent, mais pas les chaines latérales (La). Par exemple cette figure peut correspondre à un copolymère à base de monomères M2 et M3 et de macromonomères oléfiniques M6 (La), des chaines latérales (Lb) qui

sont des oligomères de M1 et de M2 et éventuellement de M3 ayant été greffées sur la chaine principale.

Sur la figure 6C, la chaine principale (P) et certaines chaines latérales (Lb) comportent des fonctions diols. Par exemple cette figure peut correspondre à un copolymère à base de monomères M1 et M2, et éventuellement M3 et de macromonomères oléfiniques M6, qui forme les chaines latérales (La), des chaines latérales qui sont des oligomères de M1 et de M2 ayant été greffées sur la chaine principale pour former les chaines latérales (Lb).

• *Copolymères polydiol préférés*

Dans un mode de réalisation, un copolymère en peigne préféré comporte au moins :

- des unités répétitives correspondant à un premier monomère M1 de formule générale (I) tel que décrit précédemment ;
- des unités répétitives correspondant à un second monomère M2 de formule (II) tel que décrit précédemment, dans laquelle $R_2$ est $-CH_3$ et $R_3$ est un groupement -C(O)-O-R'$_3$ avec -R'$_3$ représente H ou un alkyle en $C_1$-$C_{30}$ ;
- des unités répétitives correspondant à un troisième monomère M3 de formule générale (X) tel que décrit précédemment ; notamment le styrène.

Dans un autre mode de réalisation, un copolymère en peigne préféré comporte au moins :

- des unités répétitives correspondant à un premier monomère M1 de formule générale (I) tel que décrit précédemment ;
- des unités répétitives correspondant à un second monomère M2 de formule (II-A) tel que décrit précédemment, dans laquelle $R_2$ est $-CH_3$ et $R_3$ est un groupement - C(O)-O-R'$_3$ avec -R'$_3$ représente H ou un alkyle en $C_1$-$C_8$ ;
- des unités répétitives correspondant à un troisième monomère M3 de formule générale (X) tel que décrit précédemment ; notamment le styrène,
- des chaines latérales oligomériques O1 comprenant au moins un fragment polyoléfine, en particulier des chaines latérales correspondant à un monomère M6 de formule générale (IX), et plus préférentiellement $Q_2$ est choisi parmi un groupement - Q', -S-$(CH_2)_2$-C(O)-O-Q' ou -C(O)-O-Q', avec Q' une polyoléfine.

Dans un autre mode de réalisation, un copolymère A1 préféré comporte au moins :

- des unités répétitives correspondant à un premier monomère M1 de formule générale (I) tel que décrit précédemment ;
- des unités répétitives correspondant à un second monomère M2 de formule (II-A) tel que décrit précédemment ;
- des unités répétitives correspondant à un troisième monomère M2 de formule (II-B) tel que décrit précédemment, distinct du premier monomère de formule (II-A) ; et
- des unités répétitives correspondant à un quatrième monomère M3 de formule générale (X) tel que décrit précédemment, notamment le styrène.

Selon ce mode de réalisation, un copolymère A1 préféré comprend des unités répétitives correspondant au moins à :

- un premier monomère M1 de formule générale (I) tel que décrit précédemment ;
- un second monomère M2 de formule (II-A) dans laquelle $R_2$ est $-CH_3$ et R"$_3$ est un groupe alkyle en $C_1$-$C_8$, de préférence un alkyle linéaire en $C_1$-$C_8$ ;
- un troisième monomère M2 de formule (II-B), dans laquelle $R_2$ est $-CH_3$ et R'''$_3$ est un groupe alkyle en $C_9$-$C_{30}$, de préférence un alkyle linéaire en $C_9$-$C_{30}$, encore mieux un alkyle linéaire en $C_{12}$-$C_{24}$ ; et
- un quatrième monomère M3 de formule générale (X) tel que décrit précédemment, notamment le styrène.

Selon ce mode de réalisation, un copolymère A1 préféré résulte de la copolymérisation d'au moins :

- un premier monomère M1 de formule générale (I) tel que décrit précédemment ;
- un second monomère M2 qui est le méthacrylate de n-butyle ;
- un troisième monomère M2 choisi dans le groupe formé par le méthacrylate de palmityle, le méthacrylate de stéaryle, le méthacrylate d'arachidyle et le méthacrylate de behényle,
- éventuellement, un quatrième monomère M3 de formule générale (X) tel que décrit précédemment, notamment le styrène.

Dans un mode de réalisation, un copolymère en peigne préféré comporte au moins :

- des unités répétitives correspondant à un premier monomère M1 de formule générale (I) tel que décrit précédemment ;
- des unités répétitives correspondant à un second monomère M2 de formule (II) tel que décrit précédemment, dans laquelle $R_2$ est $-CH_3$ et $R_3$ est un groupement -C(O)-O-R'$_3$ avec -R'$_3$ représente H ou un alkyle en $C_1$-$C_{30}$ ;
- des unités répétitives correspondant à un troisième monomère M6 de formule (IX) tel que décrit précédemment, avantageusement un monomère M6 de formule (IX) dans laquelle $Q_1$ représente H, n=0, $Q_2$ est -CO-O-Q' et Q' représente une oléfine.

De préférence, les chaines latérales oligomères représentent 20 à 95 % en masse par rapport à la masse totale du copolymère A1.
Selon une première variante préférée, les chaines latérales oligomères O1 comprenant un fragment polyoléfine, représentent 20 à 70 % en masse par rapport à la masse totale du copolymère A1.
Selon une seconde variante préférée, les chaines latérales oligomères O2, comprenant au moins des unités répétitives correspondant à un monomère M2 de formule générale (II) et éventuellement des unités répétitives correspondant à un monomère M1 de formule générale (I) et/ou des unités répétitives correspondant à un monomère M3 de formule générale (X), représentent 30 à 95 % en masse par rapport à la masse totale du copolymère A1.
De préférence, les chaines latérales non oligomères représentent 5 à 80 % en masse par rapport à la masse totale du copolymère A1.
De préférence, les unités répétitives de formule (X) représentent de 2 à 50% en moles par rapport au nombre de moles total des monomères dont est composé le copolymère A1.
De préférence, les unités répétitives correspondant à des monomères M2 représentent de 10 à 90 %, de préférence de 30 à 80%, en moles par rapport au nombre de moles total des monomères dont est composé le copolymère A1.
De préférence, les unités répétitives correspondant à des monomères M1 représentent de 1 à 50%, de préférence de 5 à 30% en moles par rapport au nombre de moles total des monomères dont est composé le copolymère A1.
Lorsque l'on calcule les % en moles d'une unité répétitive et/ou d'un monomère (tels que M1, M2 ou M3) par rapport au nombre de moles total des monomères dont est composé le copolymère A1 et que celui-ci comprend une ou plusieurs chaines latérales comprenant un fragment de type polyoléfine, on intègre le fragment polyoléfinique en le comptant comme un seul monomère (M6).

• *Procédé d'obtention des copolymères polydiol A1*

L'homme du métier est à même de synthétiser les copolymères en peigne polydiol A1 en faisant appel à ses connaissances générales.
La copolymérisation peut être amorcée en masse ou en solution dans un solvant organique par des composés générateurs de radicaux libres. Par exemple, les copolymères de l'invention sont obtenus par les procédés connus de copolymérisation radicalaire, notamment contrôlée telle que la méthode dénommée polymérisation radicalaire contrôlée par transfert de chaîne réversible par addition-fragmentation (en anglais : Reversible Addition-Fragmentation Chain Transfer (RAFT)) et la méthode dénommée polymérisation radicalaire contrôlée par transfert d'atome (en anglais Atom Transfer Radical Polymerization (ARTP)). La polymérisation radicalaire conventionnelle et la télomérisation peuvent également être employées pour préparer les copolymères de l'invention (Moad, G.; Solomon, D. H., The Chemistry of Radical Polymerization. 2nd ed.; Elsevier Ltd: 2006; p 639 ; Matyaszewski, K.; Davis, T. P. Handbook of Radical Polymerization; Wiley-Interscience: Hoboken, 2002; p 936).
Selon un mode de réalisation préféré, la copolymérisation est réalisée par synthèse radicalaire conventionnelle, sans agent de transfert de chaine RAFT.
Selon un mode de réalisation préféré, la copolymérisation est réalisée par synthèse radicalaire en présence d'un agent de transfert de chaine de type thiol ou dérivé halogéné.
Le copolymère en peigne polydiol A1 est préparé selon un procédé qui comprend au moins une étape de polymérisation (a) dans laquelle on met en contact :

i) des monomères choisis parmi les monomères M1 de formule générale (I), M2 de formule générale (II), M3 de formule générale (X), M7 de formule générale (XII), M6 de formule générale (IX), tels que décrits précédemment ;
ii) au moins une source de radicaux libres.

Dans un mode de réalisation, le procédé peut comprendre en outre iii) au moins un agent de transfert de chaîne.

Par « une source de radicaux libres » on entend un composé chimique permettant de générer une espèce chimique possédant un ou plusieurs électrons non appariés sur sa couche externe. L'homme du métier peut utiliser toute source de radicaux libres connue et adaptée aux procédés de polymérisation, notamment de polymérisation radicalaire contrôlée. Parmi les sources de radicaux libres, on préfère, à titre illustratif, le peroxyde de benzoyle, le peroxyde de tert-butyle, les composés diazoïques tel que l'azobisisobutyronitrile, les composés péroxygénés tels que les persulfates ou l'eau oxygénée, les systèmes redox tels que l'oxydation de $Fe^{2+}$, les mélanges persulfates/sodium-métabisulfite, ou l'acide ascorbique/eau oxygénée ou encore les composés clivables photochimiquement ou par radiations ionisantes, par exemple les rayons ultra-violet ou par rayonnement beta ou gamma.

Par « agent de transfert de chaîne », on entend un composé dont le but est d'assurer une croissance homogène des chaînes macromoléculaires par réactions de transfert réversible entre espèces en croissance, i.e. chaînes polymères terminées par un radical carboné, et espèces dormantes, i.e. chaînes polymères terminées par un agent de transfert. Ce processus de transfert réversible permet de contrôler les masses moléculaires de copolymères ainsi préparés. De préférence dans le procédé de l'invention, l'agent de transfert de chaîne comprend un groupe thiocarbonylthio -S-C(=S)-. A titre illustratif d'agent de transfert de chaîne, on peut citer les dithioesters, les trithiocarbonates, les xanthates et les dithiocarbamates. Un agent de transfert préféré est le dithiobenzoate de cumyle ou le 2-cyano-2-propyl benzodithioate.

Par « agent de transfert de chaîne », on entend également un composé dont le but est de limiter la croissance des chaînes macromoléculaires en cours de formation par addition de molécules monomères et d'amorcer de nouvelles chaînes, ce qui permet de limiter les masses moléculaires finales, voire de les contrôler. Un tel type d'agent de transfert est utilisé en télomérisation. Un agent de transfert préféré est la cystéamine.

Dans un mode de réalisation, le procédé de préparation d'un copolymère en peigne polydiol comprend au moins une étape de polymérisation (a) telle que définie ci-dessus, dans laquelle les monomères M1 et M2 sont choisis avec $X_1$ et $X_2$ représentent l'hydrogène.

Dans un mode de réalisation, le procédé de préparation d'un copolymère en peigne polydiol comprend au moins une étape de polymérisation (a) telle que définie ci-dessus avec au moins un monomère de dérivation M7 de formule générale (XII), cette étape de polymérisation étant suivie :

(b) éventuellement d'une fonctionnalisation du monomère de dérivation M7
(c) d'au moins une étape d'oligomérisation à partir du monomère de dérivation M7 (ou de la fonction dérivée de M7) ou
(d) d'au moins une étape de greffage d'un oligomère à partir du monomère de dérivation M7 (ou de la fonction dérivée de M7).

Selon un mode de réalisation (lorsque l'on a procédé à une polymérisation radicalaire avec agent de transfert de chaine RAFT), après la synthèse directe du polymère contenant les fonctions diol, le procédé comprend une étape d'élimination du bout de chaine RAFT par aminolyse puis addition de Michael.

Les préférences et définitions décrites pour les formules générales (I), (Ibis), (I-A), (I-B), (Ibis-A), (Ibis-B), (II-A), (II-B), (IX), (X) et (XII) s'appliquent également aux procédés décrits ci-dessus.

Pour l'introduction des chaines latérales dans les copolymères polydiols A1, l'homme du métier peut utiliser différents schémas de synthèse.

Sur la figure 7 est représentée une synthèse par greffage :
A l'étape E1, des monomères M1, M2 et éventuellement M3 sont copolymérisés avec des comonomères de dérivation M7 pour former une chaine principale (P) :
Les monomères M1 forment des unités répétitives comprenant une fonctionnalité diol représentée par la lettre F.

Les monomères M7 forment des unités répétitives comprenant une fonctionnalité de dérivation représentée par la lettre F' (plusieurs fonctions F' différentes peuvent être présentes).

A l'étape E2, la chaine principale (P) est greffée au moyen d'une partie des fonctions F' par des chaines latérales (La) comme par exemple des chaines polyoléfine.

A l'étape E3, la chaine principale (P) est greffée au moyen du reste des fonctions F' par des chaines latérales (Lb) comme par exemple des chaines oligomères résultant de la copolymérisation de monomères M1 et M2 et éventuellement M3, ces chaines latérales étant porteuses de fonctions diol notées F appartenant aux monomères M1.

Sur la figure 8 est représentée une synthèse par un procédé comprenant à la fois la copolymérisation avec des macromonomères et le greffage d'oligomères, ces deux techniques permettant d'incorporer des chaines latérales :
A l'étape E1 on fait réagir des monomères variés : un macromonomère oléfinique M6, un monomère M1 comprenant une fonction diol F, un monomère M7 comprenant une fonctionnalité de dérivation F' et un monomère méthacrylate ou acrylate M2.

A l'étape E2 on obtient un copolymère en peigne ayant une chaine principale (P) porteuse de chaines latérales oléfiniques (La), de fonctions diol F, de fonctions de dérivation F', de fonctions acrylate (non représentées).

On fait réagir les fonctions de dérivation F' de ce copolymère avec des monomères méthacrylate ou acrylate M2 et diol M1, ce qui conduit à l'étape E3 à un copolymère en peigne ayant une chaine principale (P) porteuse :

- de motifs méthacrylate ou acrylate (non représentées)
- de chaines latérales oléfiniques (La),
- de fonctions diol (F),
- de chaines latérales (Lb) comprenant des fonctions diol (F) et des fonctions acrylate (non représentées).

• *Propriétés des copolymères polvdiol en peigne A1*

Les copolymères polydiol A1 sont des copolymères en peigne. Par « copolymères en peigne », on entend un copolymère disposant d'une chaîne principale (aussi appelée squelette) et de chaînes latérales oligomériques. Les chaînes latérales sont pendantes de part et d'autre de la chaîne principale. La figure 2 représente de manière schématique un polymère en peigne.
Les copolymères A1 présentent un squelette issu de fonctions polymérisables, notamment un squelette de fonctions méthacrylate et de préférence de fonctions styrène, et un mélange de chaînes latérales hydrocarbonées substituées ou non par des fonctions diol dont certaines sont des oligomères et d'autres sont des chaines pendantes de monomères, non oligomériques.
Les copolymères A1 présentent des chaines latérales qui peuvent être :

- des chaines issues des monomères de formule (I), (II) et (X),
- des polyoléfines, notamment correspondant à des macromonomères M6 de formule (IX),
- des oligomères résultant de la polymérisation de monomères de formule (I) et (II) et éventuellement (X).

Les monomères de formule (I), (II) et (X) présentent des fonctions polymérisables dont la réactivité conduit à la formation de copolymères dont les monomères ayant des fonctions diol sont distribués statistiquement ou en gradient ou en une répartition mixte, le long du squelette du copolymère, soit sur la chaine principale soit sur les chaines latérales.
Les copolymères en peigne polydiol A1 présentent l'avantage d'être sensibles à des stimuli extérieurs, tels que la température, la pression, la vitesse de cisaillement ; cette sensibilité se traduisant par un changement de propriétés. En réponse à un stimulus, la conformation dans l'espace des chaînes de copolymère est modifiée et les fonctions diols sont rendues plus ou moins accessibles aux réactions d'association, pouvant générer une réticulation, ainsi qu'aux réactions d'échanges. Ces processus d'association et d'échange sont réversibles. Le copolymère en peigne A1 est un copolymère thermosensible, c'est-à-dire qu'il est sensible aux changements de température.
Avantageusement, les chaînes latérales du copolymère en peigne polydiol A1 de type oligomères correspondant à des monomères M1, M2, M3 respectivement de formule (I), (II) et (X) ont une masse molaire moyenne en nombre allant de 400 à 50 000, la masse molaire moyenne en nombre étant obtenue par mesure de chromatographie d'exclusion stérique en utilisant une calibration poly(méthacrylate de méthyle).
L'homme du métier sait obtenir cette longueur moyenne en sélectionnant de manière appropriée les types et le ratio de monomères constituant le copolymère polydiol A1. Le choix de cette longueur moyenne de chaîne permet d'obtenir un polymère compatible avec un milieu hydrophobe, quelle que soit la température à laquelle le copolymère est dispersé, et capable de moduler la viscosité du milieu. Par « milieu hydrophobe » on entend un milieu qui n'a pas d'affinité ou qui a une très faible affinité pour l'eau, c'est à dire qu'il n'est pas miscible dans l'eau ou dans un milieu aqueux.
Avantageusement, le copolymère polydiol A1 a un pourcentage molaire d'unités répétitives correspondant à des monomères M1 de formule (I) dans ledit copolymère allant de 1 à 50 %, de préférence de 5 à 30%.
Avantageusement, le copolymère polydiol A1 a un pourcentage molaire d'unités répétitives correspondant à des monomères M2 de formule (II) dans ledit copolymère allant de de 10 à 90 %, de préférence de 30 à 80%.
Le pourcentage molaire d'unités répétitives dans le copolymère résulte directement de l'ajustement des quantités de monomères mises en œuvre pour la synthèse du copolymère.
Avantageusement, la chaine principale du copolymère en peigne polydiol A1 a un degré de polymérisation moyen en nombre allant de 40 à 2000, de préférence de 40 à 1000. De façon connue, le degré de polymérisation est contrôlé en utilisant une technique de polymérisation radicalaire contrôlée, une technique de polymérisation radicalaire en présence d'un agent de transfert, également appelée télomérisation sous certaines conditions, ou en ajustant la quantité de source de radicaux libres lorsque les copolymères de l'invention sont préparés par polymérisation radicalaire conventionnelle.
Avantageusement, le copolymère en peigne polydiol A1 a une masse molaire moyenne en nombre allant de 5 000 à 400 000 g/mol, de préférence de 10 000 à 200 000 g/mol, la masse molaire moyenne en nombre étant obtenue par mesure de chromatographie d'exclusion stérique en utilisant une calibration poly(méthacrylate de méthyle).
La méthode de mesure de chromatographie d'exclusion stérique est décrite dans l'ouvrage (Fontanille, M.; Gnanou, Y., Chimie et physico-chimie des polymères. 2nd ed.; Dunod: 2010; p 546).
Avantageusement, le copolymère en peigne polydiol A1 présente un degré de branchement ou degré de ramification allant de 0,1 à 10% molaire, de préférence de 0,5 à 5% molaire.

La mesure du degré de ramification est faite par RMN du proton et/ ou par chromatographie par perméation de gel (GPC) équipée d'une quadruple détection, à savoir un détecteur de concentration, un détecteur de diffusion de lumière, d'un détecteur UV-Vis et d'un viscosimètre.

◦ *Composé A2*

• *Composé A2 diester boronique*

Dans un mode de réalisation, le composé A2 comprenant deux fonctions esters boroniaues a pour formule générale (III) :

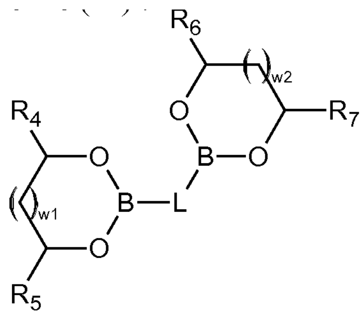

(III)

dans laquelle :

- $w_1$ et $w_2$, identiques ou différents sont des nombres entiers égaux à 0 ou 1,
- $R_4$, $R_5$, $R_6$ et $R_7$, identiques ou différents, sont choisis parmi le groupe formé par l'hydrogène et un groupement hydrocarboné comprenant de 1 à 30 atomes de carbone, de préférence entre 4 et 18 atomes de carbone, encore plus préférentiellement entre 6 et 14 atomes de carbone, ledit groupement hydrocarboné étant éventuellement substitué par un ou plusieurs groupements choisis parmi : un hydroxyle, un groupement -OJ, - C(O)-O-J avec J un groupement hydrocarboné comprenant de 1 à 24 atomes de carbone ;
- L est un groupement de liaison divalent et choisi parmi le groupe formé par un aryle en $C_6$-$C_{18}$, un aralkyle en $C_7$-$C_{24}$ et une chaîne hydrocarbonée en $C_2$-$C_{24}$, de préférence un aryle en $C_6$-$C_{18}$.

Par « groupement hydrocarboné comprenant de 1 à 30 atomes de carbone », on entend un groupement alkyle linéaire, ramifié ou cyclique comprenant de 1 à 30 atomes de carbone, alcényle linéaire, ramifié ou cyclique comprenant de 2 à 30 atomes de carbone, un groupement aryle comprenant de 6 à 30 atomes de carbone ou un groupement aralkyle comprenant de 7 à 30 atomes de carbone.

Par « groupement hydrocarboné comprenant de 1 à 24 atomes de carbone » on entend un groupe alkyle linéaire ou ramifié, comprenant de 1 à 24 atomes de carbone ou alcényle linéaire ou ramifié, comprenant de 2 à 24 atomes de carbone, un groupe aryle comprenant de 6 à 24 atomes de carbone, ou un groupe aralkyle comprenant de 7 à 24 atomes de carbone. De préférence, J comprend de 4 à 18 atomes de carbone, de préférence entre 6 et 12 atomes de carbone.

Par « chaîne hydrocarbonée en $C_2$-$C_{24}$ », on entend un groupe alkyle ou alcényle, linéaire ou ramifié, comprenant de 2 à 24 atomes de carbone. De préférence, la chaîne hydrocarbonée L est un groupe alkyle linéaire. De préférence la chaîne hydrocarbonée L comprend de 6 à 16 atomes de carbone.

Dans un mode de réalisation de l'invention, le composé A2 est un composé de formule générale (III) ci-dessus dans laquelle :

- $w_1$ et $w_2$, identiques ou différents sont des nombres entiers égaux à 0 ou 1;
- $R_4$ et $R_6$ sont identiques et sont des atomes d'hydrogène ;
- $R_5$ et $R_7$ sont identiques et sont un groupe hydrocarboné, de préférence un alkyle linéaire, ayant de 1 à 24 atomes de carbone, de préférence de 4 à 18 atomes de carbone, de préférence de 6 à 16 atomes de carbone ;
- L est un groupement de liaison divalent et est un aryle en $C_6$-$C_{18}$, de préférence le phényle.

Le composé A2 diester boronique de formule (III) telle que décrite ci-dessus est obtenu suivant le procédé décrit dans WO2015/110642 ou dans WO2015/110643.

• *Composé A2 copolymère poly(ester boronique)*

Dans un autre mode de réalisation, le composé A2 comprenant au moins deux fonctions ester boronique est un copolymère poly(ester boronique) résultant de la copolymérisation d'au moins un monomère M4 de formule (IV) telle que décrite ci-dessous avec au moins un monomère M5 de formule (V) telle que décrite ci-dessous.

Dans la suite de la demande, les expressions « copolymère ester boronique » ou « copolymère poly(ester boronique) » sont équivalentes et désignent le même copolymère.

✓ Monomère M4 de formule (IV)

Le monomère M4 du composé A2 copolymère ester boronique a pour formule générale (IV) dans laquelle :

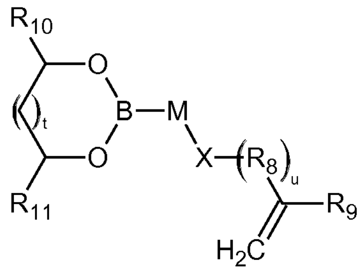

(IV)

dans laquelle :

- t est un nombre entier égal à 0 ou 1 ;
- u est un nombre entier égal à 0 ou 1 ;
- M et $R_8$ sont des groupements de liaison divalents, identiques ou différents, et sont choisis parmi le groupe formé par un aryle en $C_6$-$C_{18}$, un aralkyle en $C_7$-$C_{24}$ et alkyle en $C_1$-$C_{24}$, de préférence M est un aryle en $C_6$-$C_{18}$, et $R_8$ est un aralkyle en $C_7$-$C_{24}$ ;
- X est une fonction choisie parmi le groupe formé par -O-C(O)-, -C(O)-O-, - C(O)-N(H)-, -N(H)-C(O)-, -S-, -N(H)- , -N(R'$_4$)- et -O- avec R'$_4$ une chaîne hydrocarbonée comprenant de 1 à 15 atomes de carbone;
- $R_9$ est choisi parmi le groupe formé par -H, -$CH_3$ et -$CH_2$-$CH_3$ ; de préférence -H et -$CH_3$;
- $R_{10}$ et $R_{11}$, identiques ou différents, sont choisis parmi le groupe formé par l'hydrogène et un groupement hydrocarboné comprenant de 1 à 30 atomes de carbone, de préférence entre 4 et 18 atomes de carbone, encore plus préférentiellement entre 6 et 14 atomes de carbone, ledit groupement hydrocarboné étant éventuellement substitué par un ou plusieurs groupements choisis parmi : un hydroxyle, un groupement -OJ, - C(O)-O-J avec J un groupement hydrocarboné comprenant de 1 à 24 atomes de carbone.

Par « alkyle en $C_1$-$C_{24}$ », on entend une chaîne hydrocarbonée saturée, linéaire ou ramifiée, comprenant de 1 à 24 atomes de carbone. De préférence, la chaîne hydrocarbonée est linéaire. De préférence la chaîne hydrocarbonée comprend de 6 à 16 atomes de carbone.

Par « chaîne hydrocarbonée comprenant de 1 à 15 atomes de carbone », on entend, un groupe alkyle ou alcényle linéaire ou ramifié, comprenant de 1 à 15 atomes de carbone. De préférence, la chaîne hydrocarbonée est un groupe alkyle linéaire. De préférence, elle comprend de 1 à 8 atomes de carbone.

Par « groupement hydrocarboné comprenant de 1 à 30 atomes de carbone », on entend un groupement alkyle linéaire, ramifié ou cyclique comprenant de 1 à 30 atomes de carbone, alcényle linéaire, ramifié ou cyclique comprenant de 2 à 30 atomes de carbone, un groupement aryle comprenant de 6 à 30 atomes de carbone ou un groupement aralkyle comprenant de 7 à 30 atomes de carbone.

Par « groupement hydrocarboné comprenant de 1 à 24 atomes de carbone » on entend un groupe alkyle linéaire ou ramifié, comprenant de 1 à 24 atomes de carbone ou alcényle linéaire ou ramifié, comprenant de 2 à 24 atomes de carbone, un groupe aryle comprenant de 6 à 24 atomes de carbone, ou un groupe aralkyle comprenant de 7 à 24 atomes de carbone. De préférence, J comprend de 4 à 18 atomes de carbone, de préférence entre 6 et 12 atomes de carbone.

Dans un mode de réalisation, le monomère M4 a pour formule générale (IV) dans laquelle :

- t est un nombre entier égal à 0 ou 1 ;
- u est un nombre entier égal à 0 ou 1 ;
- M et $R_8$ sont des groupements de liaison divalents et sont différents, M est un aryle en $C_6$-$C_{18}$, de préférence le phényle, $R_8$ est un aralkyle en $C_7$-$C_{24}$, de préférence le benzyle ;

- X est une fonction choisie parmi le groupe formé par -O-C(O)-, -C(O)-O-, - C(O)-N(H)- et -O-, de préférence -C(O)-O- ou -O-C(O)- ;
- $R_9$ est choisi parmi le groupe formé par -H, $-CH_3$, de préférence -H ;
- $R_{10}$ et $R_{11}$ sont différents, l'un des groupes $R_{10}$ ou $R_{11}$ est H et l'autre groupe $R_{10}$ ou $R_{11}$ est une chaîne hydrocarbonée, de préférence un groupe alkyle linéaire, ayant de 1 à 24 atomes de carbone, de préférence entre 4 et 18 atomes de carbone, de préférence entre 6 et 12 atomes de carbone.

Dans un mode de réalisation, le monomère M4 est un monomère styrénique. C'est le cas lorsque, dans la formule (IV) : u = 1, R9 est H et R8 représente un aryle en $C_6$-$C_{18}$ ou un aralkyle en $C_7$-$C_{24}$ et la double liaison du monomère M4 de formule (IV) est directement connectée au groupement aryle.

✓ Synthèse du monomère M4 de formule (IV)

Le monomère M4 de formule (IV) telle que décrite ci-dessus est obtenu suivant le procédé décrit dans WO2015/110642 ou dans WO2015/110643.

> Monomère M5 de formule générale (V) :

Le monomère M5 du composé A2 copolymère ester boronique a pour formule générale (V)

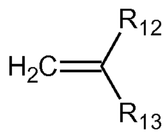

(V)

dans laquelle :

- $R_{12}$ est choisi parmi le groupe formé par -H, $-CH_3$ et $-CH_2-CH_3$, de préférence -H et $-CH_3$ ;
- $R_{13}$ est choisi parmi le groupe formé par un aryle en $C_6$-$C_{18}$, un aryle en $C_6$-$C_{18}$ substitué par un groupement $R'_{13}$, -C(O)-O-$R'_{13}$ ; -O-$R'_{13}$, -S-$R'_{13}$ et -C(O)-N(H)-$R'_{13}$ avec $R'_{13}$ représente H ou un groupe alkyle en $C_1$-$C_{25}$.

Par « groupe alkyle en $C_1$-$C_{25}$ », on entend une chaîne hydrocarbonée saturée, linéaire ou ramifiée, comprenant de 1 à 25 atomes de carbone. De préférence, la chaîne hydrocarbonée est linéaire.

Par groupe « aryle en $C_6$-$C_{18}$ substitué par un groupement $R'_{13}$ », on entend un composé hydrocarboné aromatique comprenant de 6 à 18 atomes de carbone dont au moins un atome de carbone du cycle aromatique est substitué par un groupe alkyle en $C_1$-$C_{25}$ tel que défini ci-dessus.

Parmi les monomères de formule (V), les monomères répondant à la formule (V-A) font partie des préférés :

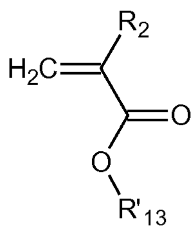

(V-A)

dans laquelle :

- $R_2$ est choisi parmi le groupe formé par -H, $-CH_3$ et $-CH_2-CH_3$, de préférence - H et $-CH_3$ ;
- $R'_{13}$ représente H ou un groupe alkyle en $C_1$-$C_{25}$, de préférence H ou un alkyle linéaire en $C_1$-$C_{25}$, encore plus préférentiellement H ou un alkyle linéaire en $C_3$-$C_{15}$, de manière encore plus préféré H ou un alkyle linéaire en $C_5$-$C_{15}$.

Selon un autre mode de réalisation, le monomère M5 est un monomère styrénique. C'est le cas lorsque, dans la formule (V) : $R_{12}$ représente H et $R_{13}$ est choisi parmi le groupe formé par un aryle en $C_6$-$C_{18}$ et un aryle en $C_6$-$C_{18}$ substitué par un groupement $R'_{13}$ avec $R'_{13}$ représente H ou un groupe alkyle en $C_1$-$C_{25}$ et la double liaison du monomère M5 de formule (V) est directement connectée au groupement aryle.

Avantageusement, selon ce mode de réalisation, le monomère M5 est le styrène.

> Obtention du monomère M5 :

Les monomères de formules (V) et (V-A) sont bien connus de l'homme du métier. Ils sont commercialisés par Sigma-Aldrich® et TCI®.

> Monomère styrénique :

Avantageusement, le copolymère A2 comprend au moins un monomère à caractère styrénique, c'est à dire soit le styrène, soit un dérivé du styrène, tel qu'un styrène substitué par un autre groupement sur le cycle aromatique.

Le monomère M4 peut être un monomère styrénique lorsque, dans la formule (IV) : u = 1, $R_9$ est H et $R_8$ représente un aryle en $C_6$-$C_{18}$ ou un aralkyle en $C_7$-$C_{24}$ et la double liaison du monomère M4 de formule (IV) est directement connectée au groupement aryle.

Le monomère M5 peut aussi être un monomère styrénique lorsque, dans la formule (V) : $R_{12}$ représente H et $R_{13}$ est choisi parmi le groupe formé par un aryle en $C_6$-$C_{18}$ et un aryle en $C_6$-$C_{18}$ substitué par un groupement $R'_{13}$ avec $R'_{13}$ représente H ou un groupe alkyle en $C_1$-$C_{25}$, et la double liaison du monomère M5 de formule (V) est directement connectée au groupement aryle.

Lorsque ni M4 ni M5 ne présentent un caractère styrénique, avantageusement, le copolymère A2 comprend au moins un troisième monomère M3 de formule (X)

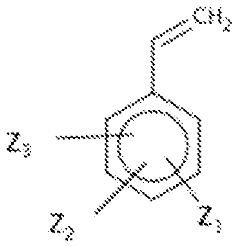

(X)

dans laquelle :

- $Z_1$, $Z_2$, $Z_3$, identiques ou différents, représentent, des groupements choisis parmi un atome d'hydrogène, un alkyle en $C_1$-$C_{12}$, un groupement -OZ', -C(O)-O-Z' avec Z' un alkyle en $C_1$-$C_{12}$.

M3 a été décrit de façon détaillée ci-dessus pour la préparation du copolymère A1. Les monomères M3 préférés et leurs quantités préférées sont les mêmes dans A2 que dans A1.

Avantageusement, lorsque A2 comprend un troisième monomère M3 de formule (X), ce monomère M3 est le styrène.

> Monomère oléfinique :

Selon une variante, le copolymère A2 comprend des unités répétitives correspondant à au moins un monomère à caractère oléfinique, c'est à dire un monomère portant une chaine oléfine et éventuellement un ou plusieurs autres groupes fonctionnels. Notamment, selon cette variante, le copolymère A2 comprend des unités répétitives correspondant à au moins un monomère M6 de formule générale (IX) tel que décrit ci-dessus.

Les variantes préférées du monomère M6 de formule générale (IX) du copolymère A1 s'appliquent également au copolymère A2.

• *Autres monomères*

En plus des unités répétitives détaillées ci-dessus, les copolymères A2 peuvent comprendre d'autres unités répétitives dérivées d'autres comonomères, leur proportion étant d'au plus 20% en poids, de préférence d'au plus 10% en poids et plus préférablement d'au plus 5% poids, basé sur le poids total des unités répétitives dont est composé le copolymère A2.

• *Configuration du copolymère poly(ester boronique)*

Le copolymère A2 peut être un copolymère linéaire ou un copolymère en peigne, c'est-à-dire un copolymère comprenant des chaines latérales oligomériques.

Dans le cas où le copolymère A2 est un copolymère en peigne, les chaines latérales oligomériques peuvent être notamment des chaines correspondant à des monomères polyoléfiniques M6 de formule générale (IX) ou à des oligomères comprenant des unités structurales correspondant à des monomères M2 de formule générale (II) et éventuellement des monomères M3 de formule générale (X).

Dans un mode de réalisation, un copolymère en peigne préféré comporte au moins :

- des unités répétitives correspondant à un premier monomère M4 de formule générale (IV) tel que décrit précédemment ;
- des unités répétitives correspondant à un second monomère M5 de formule (V) tel que décrit précédemment, de préférence de formule (VA) ;
- des unités répétitives correspondant à un troisième monomère M6 de formule (IX) tel que décrit précédemment, avantageusement un monomère M6 de formule (IX) dans laquelle $Q_1$ représente H, n=0, $Q_2$ est -CO-O-Q' et Q' représente une oléfine.

> Synthèse du composé A2 copolymère poly(ester boronique)

Le copolymère A2 est obtenu suivant le procédé décrit dans WO2015/110642 ou dans WO2015/110643.

Dans le cas où le copolymère A2 est un copolymère en peigne, l'homme du métier appliquera les mêmes techniques de dérivation ou de copolymérisation que décrit ci-dessus pour A1.

> Propriétés des composés A2 copolymères poly(ester boronique)

Avantageusement, la chaîne formée par l'enchaînement des groupes $R_{10}$, M, $(R_8)_u$ avec u, un nombre entier égal à 0 ou 1, et X du monomère M4 de formule générale (IV) présente un nombre total d'atomes de carbone allant de 8 à 38, de préférence allant de 10 à 26.

Avantageusement, les chaînes latérales non oligomériques du copolymère ester boronique A2 ont une longueur moyenne supérieure à 8 atomes de carbone, de préférence allant de 11 à 16. Cette longueur de chaînes permet de disperser le copolymère ester boronique dans un milieu hydrophobe.

Avantageusement, lorsque le copolymère A2 comprend des chaines latérales polyoléfinique, les chaînes latérales non oligomériques du copolymère A2 ont une longueur moyenne allant de 1 à 8 atomes de carbone.

Par « longueur moyenne de chaîne latérale » on entend la longueur moyenne des chaînes latérales de chaque monomère constituant le copolymère. Les chaines latérales issues du ou des monomères styréniques ne sont pas prises en compte dans le calcul des longueurs moyennes des chaines latérales. L'homme du métier sait obtenir cette longueur moyenne en sélectionnant de manière appropriée les types et le ratio de monomères constituants le copolymère ester boronique.

Avantageusement, le copolymère ester boronique A2 a un pourcentage molaire de monomère de formule (IV) dans ledit copolymère allant de 0,25 à 30%, de préférence de 1 à 25%, encore mieux de 5 à 20%.

Avantageusement, le copolymère ester boronique A2 a un pourcentage molaire de monomère de formule (IV) dans ledit copolymère allant de 0,25 à 30%, de préférence de 1 à 25% et un pourcentage molaire de monomère de formule (V) dans ledit copolymère allant de 70 à 99,75%, de préférence de 75 à 99%.

Avantageusement, le copolymère ester boronique A2 a un pourcentage molaire de monomère(s) styrénique(s), de formule (IV), (V) et/ou (X), dans ledit copolymère allant de 2 à 50% molaire, préférentiellement de 3 à 40%, de manière plus préférée de 5 à 35% molaire.

Par « pourcentage molaire de monomère(s) styrénique(s) », on entend la somme des teneurs en chacun des monomères styréniques dans le copolymère ester boronique A2, et les monomères styréniques peuvent être :

- de formule (IV) lorsque, dans la formule (IV) : u = 1, $R_9$ est H et $R_8$ représente un aryle en $C_6$-$C_{18}$ ou un aralkyle en $C_7$-$C_{24}$ et la double liaison du monomère M4 de formule (IV) est directement connectée au groupement aryle ;
- de formule (V) lorsque, dans la formule (V) : $R_{12}$ représente H et $R_{13}$ est choisi parmi le groupe formé par un aryle en $C_6$-$C_{18}$ et un aryle en $C_6$-$C_{18}$ substitué par un groupement $R'_{13}$ avec $R'_{13}$ représente H ou un groupe alkyle en $C_1$-$C_{25}$ et la double liaison du monomère M5 de formule (V) est directement connectée au groupement aryle ; et/ou
- de formule (X), comme explicité ci-dessus.

Avantageusement, le copolymère poly(ester boronique) a un degré de polymérisation moyen en nombre allant de 50 à 1500, de préférence de 50 à 800.

Avantageusement, le copolymère poly(ester boronique)a un indice de polydispersité (Ip) allant de 1,04 à 3,54 ; de préférence allant de 1,10 à 3,10. Ces valeurs sont obtenues par chromatographie d'exclusion stérique en utilisant le

tétrahydrofurane comme éluant et une calibration poly(méthacrylate de méthyle).

Avantageusement, le copolymère poly(ester boronique)a une masse molaire moyenne en nombre allant de 10 000 à 200 000 g/mol de préférence de 25 000 à 100 000 g/mol. Ces valeurs sont obtenues par chromatographie d'exclusion stérique en utilisant le tétrahydrofurane comme éluant et une calibration poly(méthacrylate de méthyle).

Le composé A2, notamment le copolymère poly(ester boronique), présente la propriété de pouvoir réagir dans un milieu hydrophobe, notamment apolaire, avec un composé porteur de fonction(s) diol par une réaction de transestérification. Cette réaction de transestérification peut être représentée selon le schéma 9 suivant :

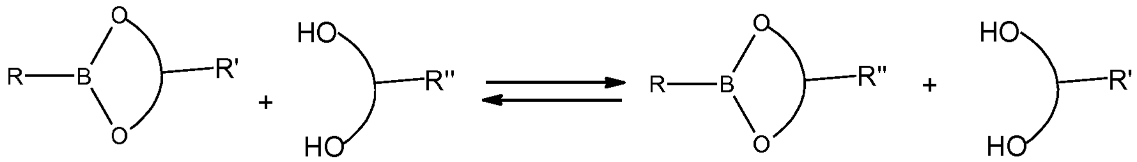

Schéma 9

Ainsi, lors d'une réaction de transestérification, il se forme un ester boronique de structure chimique différente de l'ester boronique de départ par échange des groupes hydrocarbonés symbolisé par

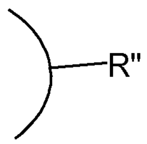

et

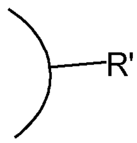

*o <u>Composé exogène A4</u>*

Selon un mode de réalisation, la composition d'additifs résulte du mélange d'au moins :

- un copolymère en peigne polydiol A1,
- un copolymère A2 comprenant au moins deux fonctions esters boroniques et pouvant s'associer avec ledit copolymère polydiol A1 par au moins une réaction de transestérification,
    - un composé exogène A4 polyol.

Avantageusement, selon ce mode de réalisation de l'invention, le pourcentage molaire de composé exogène A4, dans la composition d'additifs, par rapport aux fonctions ester boronique du copolymère A2 va de 0,025 à 5000%, de préférence de 0,1% à 1000%, de manière encore plus préférée de 0,5% à 500%, de manière encore plus préférée de 1% à 150%.

Le composé exogène A4 est choisi parmi les polyols, notamment les 1,2-diols et les 1,3-diols ainsi que les dérivés du glycérol. Par « composé exogène » on entend au sens de la présente invention un composé qui est rajouté à la composition d'additifs résultant du mélange d'au moins un copolymère en peigne A1 polydiol et d'au moins un composé A2, notamment le copolymère poly(ester boronique).

Le composé A4 est choisi parmi les composés organiques comprenant au moins un groupement diol et qui sont compatibles avec une utilisation dans une composition lubrifiante. De préférence, le composé A4 est choisi parmi les composés hydrocarbonés comprenant de 2 à 30 atomes de carbone.

De préférence, ce composé exogène A4 est choisi parmi les additifs lubrifiants comme par exemple les composés connus pour leur fonction de modificateur de frottement, d'épaississant, de dispersant ou de détergent dans les compositions lubrifiantes.

Notamment composé exogène A4 peut être choisi parmi les 1,2-diols et les 1,3-diols ainsi que les dérivés du

glycérol.

Selon un mode de réalisation préféré, le composé exogène A4 peut avoir pour formule générale (VI) :

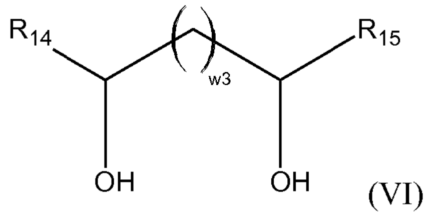

(VI)

dans laquelle :

w3 est un nombre entier égal à 0 ou 1,
$R_{14}$ et $R_{15}$, identiques ou différents, sont choisis parmi le groupe formé par l'hydrogène et une chaîne hydrocarbonée ayant de 1 à 24 atomes de carbone, de préférence entre 4 et 18 atomes de carbone, de préférence entre 6 et 12 atomes de carbone ;

Par « chaîne hydrocarbonée comprenant de 1 à 24 atomes de carbone » on entend, un groupe alkyle ou alkenyle linéaire ou ramifié, comprenant de 1 à 24 atomes de carbone. De préférence, la chaîne hydrocarbonée est un groupe alkyle linéaire. De préférence, elle comprend de 4 à 18 atomes de carbone, de préférence entre 6 et 12 atomes de carbone.

Dans un mode de réalisation, le composé exogène A4 a pour formule générale (VI) dans laquelle :

- $w_3$ est un nombre entier égal à 0 ou 1 ;
- $R_{14}$ et $R_{15}$, identiques ou différents, sont choisis parmi les groupes formé par - T, $-CH_2-O-T$, $-CH_2-O-C(O)-T$, T étant choisi parmi le groupe formé par l'hydrogène et une chaîne hydrocarbonée, de préférence une chaine alkyle linéaire, ayant de 1 à 24 atomes de carbone, de préférence entre 4 et 18 atomes de carbone, de préférence entre 6 et 12 atomes de carbone.

Dans un mode de réalisation, le composé exogène A4 a pour formule générale (VI) dans laquelle :

- $w_3$ est un nombre entier égal à 0 ou 1 ;
- $R_{14}$ et $R_{15}$ sont différents, l'un des groupes $R_{14}$ ou $R_{15}$ est H et l'autre groupe $R_{14}$ ou $R_{15}$ est une chaîne hydrocarbonée, de préférence un groupe alkyle linéaire, ayant de 1 à 24 atomes de carbone, de préférence entre 4 et 18 atomes de carbone, de préférence entre 6 et 12 atomes de carbone.

Dans un autre mode de réalisation préféré, le composé exogène est choisi parmi les sucres et les dérivés de sucre.

L'homme du métier est capable, en faisant appel à ses connaissances générales, de choisir parmi les sucres et les dérivés de sucres, lesquels sont compatibles avec une huile lubrifiante.

Les composés de formule (VI) sont disponibles commercialement auprès des fournisseurs suivants : Sigma-Aldrich®, Alfa Aesar® et TCI®.

◦ *Composé exogène A5*

Selon un mode de réalisation, la composition d'additifs résulte du mélange d'au moins :

- un copolymère en peigne polydiol A1,
- un copolymère A2 comprenant au moins deux fonctions esters boroniques et pouvant s'associer avec ledit copolymère en peigne polydiol A1 par au moins une réaction de transestérification,
- un composé exogène A5 choisi parmi ceux répondant à la formule (XI) :

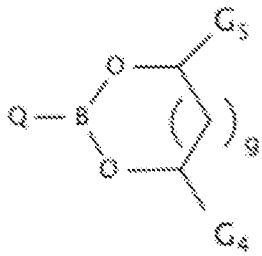

(XI)

dans laquelle :

- Q représente un groupement choisi parmi un groupement hydrocarboné comprenant de 1 à 30 atomes de carbone, éventuellement substituée par un ou plusieurs groupements choisis parmi : un hydroxyle, un groupement -OJ, - C(O)-O-J avec J un groupement hydrocarboné comprenant de 1 à 24 atomes de carbone,
- $G_4$, $G_5$, identiques ou différents, représentent des groupements choisis parmi un atome d'hydrogène, une chaîne hydrocarbonée comprenant de 1 à 24 atomes de carbone, un hydroxyle, un groupement -OJ, -C(O)-O-J avec J un groupement hydrocarboné comprenant de 1 à 24 atomes de carbone,
- g représente 0 ou 1.

Avantageusement le composé exogène A5 répond à la formule (XIIA) :

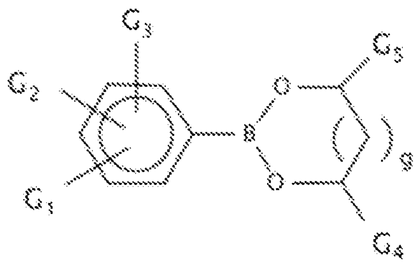

(XIIA)

dans laquelle :

- $G_1$, $G_2$, $G_3$, $G_4$, $G_5$, identiques ou différents, représentent des groupements choisis parmi un atome d'hydrogène, une chaîne hydrocarbonée comprenant de 1 à 24 atomes de carbone, un hydroxyle, un groupement -OJ, -C(O)-O-J avec J un groupement hydrocarboné comprenant de 1 à 24 atomes de carbone,
- g représente 0 ou 1.

Selon un mode de réalisation préféré, le pourcentage molaire de composé exogène A5 par rapport aux fonctions diol du copolymère en peigne A1 va de 0,025 à 5000%, de préférence va de 0,1% à 1000%, de manière encore plus préférée de 0,5% à 500%, de manière encore plus préférée de 1% à 150%.

Selon un mode de réalisation préféré, le composé exogène A5 est choisi parmi ceux répondant à la formule (XII B) :

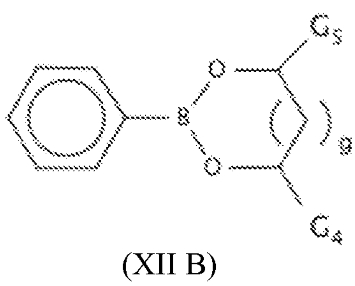

(XII B)

Selon un mode de réalisation encore préféré, le composé exogène A5 est choisi parmi ceux répondant à la formule (XII B) avec g = 0, $G_4$ = H et $G_5$ représente un alkyle en $C_1$-$C_{24}$.

Par réaction de transestérification, le composé exogène A5 libère in situ le fragment diol A6 de formule (XIII) :

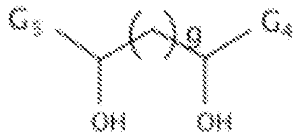

(XIII)

> Caractéristiques des nouvelles compositions d'additifs de l'invention

Les compositions d'additifs de l'invention présentent des propriétés rhéologiques très variées en fonction de la température et selon la proportion des composés A1, A2 et éventuellement A4 et/ou A5 utilisés.

Les copolymères en peigne polydiols A1 et les composés A2 tels que définis ci-dessus, présentent l'avantage d'être associatifs et d'échanger des liens chimiques de manière thermoréversible, notamment dans un milieu hydrophobe, notamment un milieu hydrophobe apolaire.

Dans certaines conditions, les copolymères en peigne polydiols A1 et les composés A2 tels que définis ci-dessus peuvent être réticulés.

Les copolymères en peigne polydiols A1 et les composés A2 présentent aussi l'avantage d'être échangeables.

Par « associatif », on entend qu'il s'établit des liens chimiques covalents de type ester boronique entre les copolymères en peigne polydiols A1 et les composés A2 comprenant au moins deux fonctions esters boroniques, notamment avec le copolymère poly(ester boronique). Suivant la fonctionnalité des polydiols en peigne A1 et des composés A2 et suivant la composition des mélanges, la formation des liens covalents entre les polydiols en peigne A1 et les composés A2 pourra amener ou non à la formation d'un réseau polymérique tridimensionnel.

Par « lien chimique », on entend un lien chimique covalent de type ester boronique.

Par « échangeable », on entend que les composés sont capables d'échanger des liens chimiques entre eux sans que le nombre total et la nature des fonctions chimiques soient modifiés. La réaction chimique d'échange (transestérification) est illustrée dans le schéma réactionnel 10 suivant :

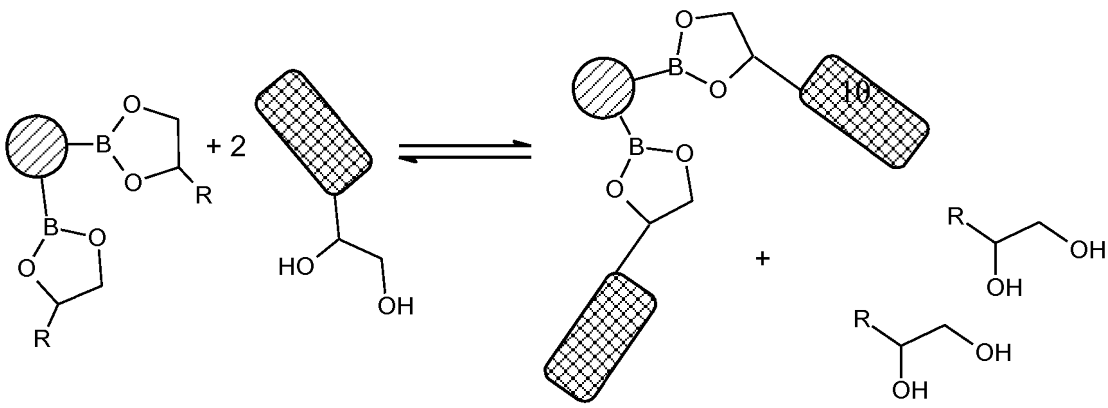

Schéma10

avec :

- R un groupe chimique du composé A2,
- le rond hachuré symbolise le reste de la structure chimique du composé A2,
- le rectangle quadrillé symbolise le reste de la structure chimique du polymère en peigne polydiol A1.

Les liens ester boronique des composés A2, éventuellement les liens ester boronique formés par réaction de transestérification entre les esters boroniques des composés A2 et les composés exogènes A4 et/ou A5, ainsi que les liens ester boronique formés par association des copolymères en peigne polydiol A1 et des composés A2 peuvent s'échanger avec les fonctions diol portées par les composés A3 libérés in situ et éventuellement avec des fonctions diol portées par les composés exogènes A4 et/ou A5 pour former de nouveaux ester boronique et de nouvelles fonctions diol sans que le nombre total de fonctions ester boronique et de fonctions diol ne soit affecté. Cet autre processus d'échange de liens chimiques s'effectue par réaction de métathèse, via des échanges successifs des fonctions ester boronique en présence de diols. Un autre processus d'échange de liens chimiques est illustré en figure 3, dans laquelle on peut observer que le copolymère polydiol A1-1, qui était associé au polymère A2-1, a échangé deux liens ester boronique avec le

copolymère ester boronique A2-2. Le copolymère polydiol A1-2, qui était en associé au polymère A2-2, a échangé deux liens ester boronique avec le copolymère ester boronique A2-1 ; le nombre total de lien ester boronique dans la composition étant inchangé et est égal à 4. Le copolymère A1-1 est alors associé avec le polymère A2-2. Le copolymère A1-2 est alors avec le polymère A2-1. Le copolymère A2-1 a été échangé avec le polymère A2-2.

Par « réticulé », on entend un copolymère sous forme d'un réseau obtenu par l'établissement de ponts entre les chaînes macromoléculaires du copolymère. Ces chaînes reliées entre elles sont pour la plupart distribuées dans les trois dimensions de l'espace. Un copolymère réticulé forme un réseau tridimensionnel. Dans la pratique, la formation d'un réseau de copolymère est assurée par un test de solubilité. On peut s'assurer qu'un réseau de copolymères a été formé en plaçant le réseau de copolymère dans un solvant connu pour dissoudre les copolymères non réticulés de même nature chimique. Si le copolymère gonfle au lieu de se dissoudre, l'homme du métier sait qu'un réseau a été formé. La figure 4 illustre ce test de solubilité.

Par « réticulable » on entend un copolymère susceptible d'être réticulé.

Par « réticulé de manière réversible » on entend un copolymère réticulé dont les ponts sont formés par une réaction chimique réversible. La réaction chimique réversible peut se déplacer dans un sens ou dans un autre, entraînant un changement de structure du réseau de polymère. Le copolymère peut passer d'un état initial non réticulé à un état réticulé (réseau tridimensionnel de copolymères) et d'un état réticulé à un état initial non réticulé. Dans le cadre de la présente invention, les ponts qui se forment entre les chaînes de copolymères sont labiles. Ces ponts peuvent se former ou s'échanger grâce à une réaction chimique qui est réversible. Dans le cadre de la présente invention, la réaction chimique réversible est une réaction de transestérification entre des fonctions diols d'un copolymère (copolymère A1) et des fonctions ester boronique d'un agent de réticulation (composé A2). Les ponts formés sont des liaisons de type ester boronique. Ces liaisons ester boronique sont covalentes et labiles du fait de la réversibilité de la réaction de transestérification.

Par « réticulé de manière thermoréversible », on entend un copolymère réticulé grâce à une réaction réversible dont le déplacement dans un sens ou dans l'autre sens est contrôlé par la température. Le mécanisme de réticulation thermoréversible de la composition de l'invention est présenté schématiquement en figure 5. A faible température, le copolymère polydiol A1 (symbolisé par le copolymère portant des fonctions A sur la figure 5) n'est pas ou peu réticulé par les composés esters boroniques A2 (symbolisé par le composé portant des fonctions B sur la figure 5). Quand la température augmente, les fonctions diol du copolymère A1 réagissent avec les fonctions ester boronique du composé A2 par une réaction de transestérification. Les copolymères polydiols A1 et les composés A2 comprenant au moins deux fonctions esters boroniques se lient alors ensemble et peuvent s'échanger. Suivant la fonctionnalité des polydiols A1 et des composés A2 et suivant la composition des mélanges, il peut se former un gel dans le milieu, notamment lorsque le milieu est apolaire. Lorsque la température diminue à nouveau, les liaisons esters boroniques entre les copolymères polydiols A1 et les composés A2 se rompent, et le cas échéant, la composition perd son caractère gélifié.

La quantité de liaisons ester boronique (ou lien ester boronique) pouvant s'établir entre les copolymères en peigne polydiols A1 et les composés A2 est ajustée par l'homme du métier au moyen d'une sélection appropriée du copolymère polydiol A1, du composé A2 et de la composition du mélange.

En outre, l'homme du métier sait sélectionner la structure du composé A2 en fonction de la structure du copolymère A1. De préférence, lorsque dans le copolymère A1 comprenant au moins un monomère M1 dans lequel y=1, alors le composé A2 de formule générale (III) ou le copolymère A2 comprenant au moins un monomère M4 de formule (IV) sera choisi de de préférence avec $w_1$= 1, $w_2$=1 et t=1, respectivement.

En contrôlant le taux d'association du copolymère polydiol A1 et du composé A2, notamment du copolymère statique poly(ester boronique), on module la viscosité et le comportement rhéologique de cette composition. Lorsqu'il est présent, le composé exogène A4 et/ ou A5 permet de moduler la viscosité de cette composition en fonction de la température et selon l'utilisation désirée.

Dans un mode de réalisation préférée de l'invention, le composé exogène A4 est de même nature chimique que le composé diol A3 libéré in situ par réaction de transestérification entre le copolymère en peigne polydiol A1 et le composé A2, notamment le copolymère poly(ester boronique). Selon ce mode de réalisation, la quantité totale de diols libres présente dans ladite composition est strictement supérieure à la quantité de composés diols libérés in situ. Par « diols libres », on entend les fonctions diol qui sont susceptibles de pouvoir former un lien chimique de type ester boronique par réaction de transestérification. Par « quantité totale de diols libres », on entend au sens de la présente demande, le nombre total de fonctions diol susceptibles de pouvoir former un lien chimique de type ester boronique par transestérification.

Selon ce mode de réalisation, la quantité totale de diols libres est toujours égale à la somme du nombre de moles de composés exogènes polyols A4 et du nombre (exprimé en mol) de fonctions diols du copolymère polydiol A1. En d'autres termes, si dans la composition d'additifs, on a :

- i moles de composés exogènes polyols A4 et
- j mol de copolymères polydiol A1,

la quantité total de diols libres sera à tout instant (donc quel que soit le degré d'association entre le copolymère polydiol A1 et le composé A2, notamment le copolymère poly(ester boronique) A2) = i + j*le nombre moyen de diols par chaîne de polymère en peigne A1 (unité : mol).

La quantité de diols libérés in situ dans le cadre des réactions de transestérification entre A1 et A2 est égale au nombre de fonctions ester boronique reliant les copolymères A1 et A2.

L'homme du métier sait sélectionner la structure chimique et la quantité de composés exogènes A4 et/ou A5 qu'il ajoute à la composition d'additifs en fonction du pourcentage molaire de fonction ester boronique du composé A2, notamment en fonction du copolymère poly(ester boronique), pour moduler les comportements rhéologique de la composition.

Avantageusement, la teneur en copolymère A1 dans la composition va de 0,1% à 50,0% en poids par rapport au poids total de la composition, de préférence va de 0,25% à 40% en poids par rapport au poids total de la composition finale, de manière plus préférée de 1% à 30% en poids par rapport au poids total de la composition finale.

Avantageusement, la teneur en composé A2 dans la composition va de 0,1% à 50,0% en poids par rapport au poids total de la composition, de préférence va de 0,25% à 40% en poids par rapport au poids total de la composition finale, de manière plus préférée de préférence de 0,5% à 30% en poids par rapport au poids total de la composition finale.

Dans un mode de réalisation, la teneur en copolymère A1 dans la composition va de 0,5 à 50,0% en poids par rapport au poids total de la composition et la teneur en composé A2, notamment en copolymère ester boronique dans la composition va de 0,5% à 50,0% en poids par rapport au poids total de la composition.

Préférentiellement, le ratio massique entre le composé polydiol A1 et composé A2 (ratio A1/A2) dans la composition va de 0,005 à 200, de préférence de 0,05 à 20, de manière encore plus préférée de 0,1 à 10.

Dans un mode de réalisation, la composition de l'invention se présente sous forme d'une composition-mère. Par « composition-mère » on entend, une composition dont l'homme du métier pourra faire des solutions-filles par prélèvement d'une certaine quantité de solution mère complétée par l'apport d'une quantité nécessaire de diluant (solvant ou autre) pour obtenir une concentration souhaitée. Une composition-fille est donc obtenue par dilution d'une composition-mère.

Un milieu hydrophobe peut être un solvant, une huile minérale, une huile naturelle, une huile synthétique.

Dans un mode de réalisation, la composition de l'invention peut comprendre en outre au moins un additif choisi parmi le groupe formé par les thermoplastiques, les élastomères, les élastomères thermoplastiques, les polymères thermodurcissables, les pigments, les colorants, les charges, les plastifiants, les fibres, les antioxydants, les additifs pour lubrifiants, les agents de compatibilité, les agents anti-mousses, les additifs dispersants, les promoteurs d'adhérences et les stabilisants.

> <u>Procédé de préparation des nouvelles compositions d'additifs de l'invention</u>

Les nouvelles compositions d'additifs de l'invention sont préparées par des moyens bien connus de l'homme du métier. Par exemple, il suffit à l'homme du métier notamment de :

- prélever une quantité voulue d'une solution comprenant le copolymère en peigne polydiol A1 tel que défini ci-dessus ;
- prélever une quantité voulue d'une solution comprenant le composé A2 tel que défini ci-dessus ; notamment une quantité voulue d'une solution comprenant le copolymère poly(ester boronique) tel que défini précédemment ; et
- éventuellement prélever une quantité voulue d'une solution comprenant le composé exogène A4 et/ou A5 tel que défini ci-dessus
- mélanger les solutions prélevées, soit simultanément, soit séquentiellement, pour obtenir la composition de l'invention.

L'ordre d'ajout des composés n'a pas d'influence dans la mise en œuvre du procédé de préparation de la composition d'additifs.

L'homme du métier sait aussi ajuster les différents paramètres de la composition de l'invention pour obtenir soit une composition dans laquelle le copolymère en peigne polydiol A1 et le composé A2, notamment le copolymère ester boronique, sont associés soit une composition dans laquelle le copolymère en peigne polydiol A1 et le composé A2, notamment le copolymère ester boronique, sont réticulés et pour en moduler le taux d'association ou le taux de réticulation pour une température d'utilisation donnée. Par exemple, l'homme du métier sait ajuster notamment, et de façon non exhaustive :

- le pourcentage molaire de monomère M1 portant des fonctions diols dans le copolymère en peigne polydiol A1 ;
- la teneur en monomère styrénique M3 dans le copolymère en peigne polydiol A1 ;
- le pourcentage molaire de macromonomère oléfinique M6 dans le copolymère en peigne polydiol A1 ;
- le pourcentage molaire de chaines pendantes oligomère comprenant des unités répétitives correspondant à des

monomères M2 et éventuellement M1 et M3 dans le copolymère en peigne polydiol A1 ;
- le pourcentage molaire de monomère M4 portant des fonctions ester boronique dans le copolymère ester boronique A2 ;
- la longueur moyenne des chaînes latérales oligomériques du copolymère polydiol A1 ;
- la longueur moyenne des chaînes latérales non oligomériques du copolymère polydiol A1 ;
- la longueur moyenne des chaînes latérales du copolymère ester boronique A2 ;
- la longueur du monomère M4 du copolymère ester boronique A2 ;
- la teneur en monomère styrénique M4 de formule (IV), ou M5 de formule (V) ou M3 de formule (X) dans le copolymère ester boronique A2 ;
- la longueur du composé diester boronique A2 ;
- le degré de polymérisation moyen en nombre des chaines principales des copolymères polydiol A1 et des copolymères ester boronique A2 ;
- le degré de polymérisation moyen en nombre des chaines latérales des copolymères polydiol A1 et éventuellement des copolymères ester boronique A2 ;
- le pourcentage massique du copolymère polydiol A1 ;
- le pourcentage massique du composé diester boronique A2 ;
- le pourcentage massique du copolymère ester boronique A2 ;

et le cas échéant :

- la quantité molaire du composé exogène A4 par rapport aux fonctions ester boronique du composé A2, notamment du copolymère poly(ester boronique),
- la nature chimique du composé exogène A4 ;
- le pourcentage molaire de composé exogène A4 ;
- la quantité molaire du composé exogène A5 par rapport aux fonctions diol du copolymère diol A1,
- la nature chimique du composé exogène A5 ;
- le pourcentage molaire de composé exogène A5.

> Utilisation des nouvelles compositions de l'invention

Les compositions de l'invention peuvent être utilisées dans tous les milieux dont la viscosité varie en fonction de la température. Les compositions de l'invention permettent d'épaissir un fluide et de moduler la viscosité en fonction de la température d'utilisation. La composition d'additifs selon l'invention peut être utilisée dans les domaines aussi variés que la récupération améliorée du pétrole, l'industrie papetière, les peintures, les additifs alimentaires, la formulation cosmétique ou pharmaceutique.

> Composition lubrifiante selon l'invention

Un autre objet de la présente invention concerne une composition lubrifiante résultant du mélange d'au moins :

- une huile lubrifiante,
- un copolymère en peigne polydiol A1 tel que défini précédemment,
- un composé A2, notamment un copolymère A2, tel que défini précédemment, comprenant au moins deux fonctions esters boroniques et pouvant s'associer avec ledit copolymère en peigne polydiol A1 par au moins une réaction de transestérification,
- éventuellement un composé exogène A4, et notamment tel que défini précédemment,
- éventuellement un composé exogène A5 boronique tel que défini précédemment.

Les préférences et définitions décrites pour les formules générales (I), (I-A), (I-B), (Ibis), (Ibis-A), (Ibis-B), (II-A), (II-B), (IX), (X) et (XII) s'appliquent également au copolymère en peigne A1 polydiol utilisée dans les compositions lubrifiantes de l'invention.

Les préférences et définitions décrites pour les formules générales (III), (IV), (V), (IX), (X) s'appliquent également au composé A2 ester boronique utilisé dans les compositions lubrifiantes de l'invention.

Les compositions lubrifiantes selon l'invention ont un comportement inversé vis-à-vis d'une modification de la température par rapport au comportement de l'huile de base et des additifs rhéologiques de type polymère de l'art antérieur et présentent l'avantage que ce comportement rhéologique peut être modulé en fonction de la température d'utilisation. Contrairement à l'huile de base qui se fluidifie lorsque la température augmente, les compositions de la présente invention présentent l'avantage de s'épaissir lorsque la température augmente. La formation des liaisons

covalentes réversibles permet d'augmenter (de façon réversible) la masse molaire des polymères et limite donc la chute de la viscosité de l'huile de base à hautes températures. L'ajout supplémentaire de composés diols permet de contrôler le taux de formation de ces liaisons réversibles. De manière avantageuse, la viscosité de la composition lubrifiante est ainsi contrôlée et dépend moins des fluctuations de température. En outre, pour une température donnée d'utilisation, il est possible de moduler la viscosité de la composition lubrifiante et son comportement rhéologique en jouant sur la quantité de composés diols ajoutés dans la composition lubrifiante. Enfin, les compositions lubrifiantes de l'invention ont une stabilité thermique améliorée, une stabilité à l'oxydation améliorée, un indice de viscosité amélioré, une résistance au cyclage améliorée et une meilleure reproductibilité de performances au cours du temps.

◦ *Huile lubrifiante*

Par « huile » on entend un corps gras liquide à température ambiante (25°C) et pression atmosphérique (760 mm de Hg soit $10^5$ Pa).

Par « huile lubrifiante » on entend une huile qui atténue le frottement entre deux pièces en mouvements en vue de faciliter le fonctionnement de ces pièces. Les huiles lubrifiantes peuvent être d'origine naturelle, minérale ou synthétique.

Les huiles lubrifiantes d'origine naturelle peuvent être des huiles d'origine végétale ou animale, de préférence des huiles d'origine végétale telles que l'huile de colza, l'huile de tournesol, l'huile de palme, l'huile de coprah...

Les huiles lubrifiantes d'origine minérale sont d'origine pétrolière et sont extraites de coupes pétrolières provenant de la distillation atmosphérique et sous vide du pétrole brut. La distillation peut être suivie d'opérations de raffinage telles que l'extraction au solvant, le désalphatage, le déparaffinage au solvant, l'hydrotraitement, l'hydrocraquage, l'hydroisomérisation, l'hydrofinition... A titre illustratif, on peut citer les huiles de base minérales paraffiniques telle que l'huile Bright Stock Solvent (BSS), les huiles de base minérales napthéniques, les huiles minérales aromatiques, les bases minérales hydroraffinées dont l'indice de viscosité est d'environ 100, les bases minérales hydrocraquées dont l'indice de viscosité est compris entre 120 et 130, les bases minérales hydroisomérisées dont l'indice de viscosité est compris entre 140 et 150.

Les huiles lubrifiantes d'origine synthétique (ou base synthétiques) proviennent comme leur nom l'indique de la synthèse chimique telles que l'addition d'un produit sur lui-même ou polymérisation, ou l'addition d'un produit sur un autre comme l'estérification, l'alkylation, la fluoration, etc., de composants provenant de la pétrochimie, la carbochimie, et de la chimie minérale tels que : oléfines, aromatiques, alcools, acides, composés halogénés, phosphorés, siliciés, etc. A titre illustratif, on peut citer :

- les huiles synthétiques à base d'hydrocarbures de synthèse telles que les polyalphaoléfines (PAO), les polyoléfines internes (PIO), les polybutènes et polyisobutènes (PIB), les -alkylbenzènes, les polyphényles alkylés ;
- les huiles synthétiques à base d'esters telles que les esters de diacides, les esters de néopolyols ;
- les huiles synthétiques à base de polyglycols telles que les monoalkylèneglycols, les polyalkylèneglycols et les monoéthers de polyalkylèneglycols ;
- les huiles synthétiques à base d'ester-phosphates ;
- les huiles synthétiques à base de dérivés siliciés telles que les huiles silicones ou les polysiloxanes.

Les huiles lubrifiantes qui peuvent être utilisées dans la composition de l'invention peuvent être choisies parmi n'importe quelles huiles des groupes I à V spécifiées dans les directives de l'API (Base Oil Interchangeability Guidelines de l'American Petroleum Institute (API)) (ou leurs équivalents selon la classification ATIEL (Association Technique de l'Industrie Européenne des Lubrifiants) telles que résumées ci-dessous :

| | Teneur en composés saturés* | Teneur en soufre** | Indice de viscosité (VI)*** |
|---|---|---|---|
| Groupe I Huiles minérales | < 90 % | > 0.03 % | 80 ≤ VI < 120 |
| Groupe II Huiles hydrocraquées | ≥ 90 % | ≤ 0.03 % | 80 ≤ VI < 120 |
| Groupe III Huiles hydrocraquées ou hydro-isomérisées | ≥ 90 % | ≤ 0.03 % | ≥ 120 |
| Groupe IV | (PAO) Polyalphaoléfines | | |

(suite)

| | Teneur en composés saturés* | Teneur en soufre** | Indice de viscosité (VI)*** |
|---|---|---|---|
| Groupe V | Esters et autres bases non incluses dans bases groupes I à IV | | |
| * mesuré selon la norme ASTM D2007<br>** mesuré selon les normes ASTM D2622, ASTM D4294, ASTM D4927 et ASTM D3120<br>*** mesuré selon la norme ASTM D2270 | | | |

Les compositions de l'invention peuvent comprendre une ou plusieurs huiles lubrifiantes. L'huile lubrifiante ou le mélange d'huile lubrifiante est l'ingrédient majoritaire dans la composition lubrifiante. On parle alors d'huile de base lubrifiante. Par ingrédient majoritaire, on entend que l'huile lubrifiante ou le mélange d'huiles lubrifiantes représente au moins 51 % en poids par rapport au poids total de la composition.

De préférence, l'huile lubrifiante ou le mélange d'huiles lubrifiantes représente au moins 70 % en poids par rapport au poids total de la composition.

Dans un mode de réalisation de l'invention, l'huile lubrifiante est choisie dans le groupe formés par les huiles du groupe I, du groupe II, du groupe III, du groupe IV, du groupe V de la classification API et l'un de leur mélange. De préférence, l'huile lubrifiante est choisie parmi le groupe formé par les huiles du groupe III, du groupe IV, du groupe V de la classification API et leur mélange. De préférence, l'huile lubrifiante est une huile du groupe III de la classification API.

L'huile lubrifiante a une viscosité cinématique à 100°C mesurée selon la norme ASTM D445 allant de 2 à 150 cSt, de manière préférée allant de 2 à 15 cSt.

◦ **Additifs fonctionnels**

Dans un mode de réalisation, la composition de l'invention peut comprendre en outre un ou plusieurs additifs fonctionnels choisis parmi le groupe formé par les détergents, les additifs anti-usure, les additifs extrême pression, les antioxydants, les polymères améliorant l'indice de viscosité, les améliorants de point d'écoulement, les anti-mousse, les épaississants, les additifs anticorrosion, les dispersants, les modificateurs de frottements et leurs mélanges.

Le ou les additifs fonctionnels qui sont ajoutés à la composition de l'invention sont choisis en fonction de l'utilisation finale de la composition lubrifiante. Ces additifs peuvent être introduits de deux façons différentes :

- soit chaque additif est ajouté isolément et séquentiellement dans la composition,
- soit l'ensemble des additifs est ajouté simultanément dans la composition, les additifs sont dans ce cas généralement disponibles sous forme d'un paquet, appelé paquet d'additifs.

L'additif fonctionnel ou les mélanges d'additifs fonctionnels, lorsqu'ils sont présents, représentent de 0,1 à 10% en poids par rapport au poids total de la composition.

✓ **Les détergents :**

Ces additifs réduisent la formation de dépôts à la surface des pièces métalliques par dissolution des produits secondaires d'oxydation et de combustion. Les détergents utilisables dans les compositions lubrifiantes selon la présente invention sont bien connus de l'homme de métier. Les détergents communément utilisés dans la formulation de compositions lubrifiantes sont typiquement des composés anioniques comportant une longue chaîne hydrocarbonée lipophile et une tête hydrophile. Le cation associé est typiquement un cation métallique d'un métal alcalin ou alcalino-terreux. Les détergents sont préférentiellement choisis parmi les sels de métaux alcalins ou alcalino-terreux d'acides carboxyliques, sulfonates, salicylates, naphténates, ainsi que les sels de phénates. Les métaux alcalins et alcalino-terreux sont préférentiellement le calcium, le magnésium, le sodium ou le baryum. Ces sels métalliques peuvent contenir le métal en quantité approximativement stœchiométrique ou bien en excès (en quantité supérieure à la quantité stœchiométrique). Dans ce dernier cas, on a affaire à des détergents dits surbasés. Le métal en excès apportant le caractère surbasé au détergent se présente sous la forme de sels métalliques insolubles dans l'huile, par exemple carbonate, hydroxyde, oxalate, acétate, glutamate, préférentiellement carbonate.

✓ **Les additifs anti-usure et les additifs extrême pression :**

Ces additifs protègent les surfaces en frottement par formation d'un film protecteur adsorbé sur ces surfaces. Il existe une grande variété d'additifs anti-usure et extrême pression. A titre illustratifs on peut citer les additifs phosphosoufrés comme les alkylthiophosphates métalliques, en particulier les alkylthiophosphates de zinc, et plus spécifiquement les dialkyldithiophosphates de zinc ou ZnDTP, les phosphates d'amines, les polysulfures, notamment les oléfines soufrées et les dithiocarbamates métalliques.

✓ **Les antioxydants** :

Ces additifs retardent la dégradation de la composition. La dégradation de la composition peut se traduire par la formation de dépôts, la présence de boues, ou une augmentation de la viscosité de la composition. Les antioxydants agissent comme inhibiteurs radicalaires ou destructeurs d'hydropéroxydes. Parmi les antioxydants couramment employés on trouve les antioxydants de type phénolique ou aminé.

✓ **Les anticorrosions :**

Ces additifs couvrent la surface d'un film qui empêche l'accès de l'oxygène à la surface du métal. Ils peuvent parfois neutraliser les acides ou certains produits chimiques pour éviter la corrosion du métal. A titre illustratif, on peut citer par exemple le dimercaptothiadiazole (DMTD), les benzotriazoles, les phosphites (capture du soufre libre).

✓ **Les polymères améliorant l'indice de viscosité :**

Ces additifs permettent de garantir une bonne tenue à froid et une viscosité minimale à haute température de la composition. A titre illustratif, on peut citer par exemple les esters polymères, les oléfines copolymères (OCP), ou les polyméthacrylates (PMA).

✓ **Les améliorants de point d'écoulement** :

Ces additifs améliorent le comportement à froid des compositions, en ralentissant la formation de cristaux de paraffine. Ce sont par exemple des polyméthacrylates d'alkyle, des polyacrylates, des polyarylamides, des polyalkylphénols, des polyalkylnaphtalènes et des polystyrènes alkylés.

✓ **Les anti-mousse :**

Ces additifs ont pour effet de contrer l'effet des détergents. A titre illustratif, on peut citer les polyméthylsiloxanes et les polyacrylates.

✓ **Les épaississants :**

Les épaississants sont des additifs utilisés surtout pour la lubrification industrielle et permettent de formuler des lubrifiants de plus forte viscosité que les compositions lubrifiantes pour moteur. A titre illustratif, on peut citer les polysiobutènes ayant une masse molaire en poids de 10 000 à 100 000 g/mol.

✓ **Les dispersants :**

Ces additifs assurent le maintien en suspension et l'évacuation des contaminants solides insolubles constitués par les produits secondaires d'oxydation qui se forment au cours de l'utilisation de la composition. A titre illustratif, on peut citer par exemple les succinimides, les PIB (polyisobutène) succinimides et les bases de Mannich.

✓ **Les modificateurs de frottements** ;

Ces additifs améliorent le coefficient de frottement de la composition. A titre illustratif, on peut citer le dithiocarbamate de molybdène, les amines ayant au moins une chaîne hydrocarbonée d'au moins 16 atomes de carbone, les esters d'acides gras et de polyols tels que les esters d'acides gras et de glycérol, en particulier le glycérol monooléate.

◦ ***Teneurs en composés des compositions lubrifiantes***

Avantageusement, la teneur en copolymère en peigne A1 dans la composition lubrifiante va de 0,05% à 20% en poids par rapport au poids total de la composition lubrifiante, de préférence de 0,5% à 10% en poids par rapport au poids total de la composition lubrifiante.

Avantageusement, la teneur en composé A2, notamment la teneur en copolymère poly(ester boronique), va de

0,05% à 20% en poids par rapport au poids total de la composition lubrifiante, de préférence de préférence de 0,25 à 10% en poids par rapport au poids total de la composition lubrifiante.

Préférentiellement, le ratio massique (ratio A1/A2) entre le composé polydiol A1, et le composé A2, notamment le copolymère poly(ester boronique), va de 0,001 à 100, de préférence de 0,05 à 20, de manière encore plus préférée de 0,1 à 10, de manière plus préférée de 0,2 à 5.

Dans un mode de réalisation, la somme des masses du copolymère en peigne A1 et du composé A2, va de 0,01 à 40%, avantageusement de 0,75 à 20% par rapport à la masse totale de la composition lubrifiante, de préférence de 2% à 15% par rapport à la masse totale de la composition lubrifiante et la masse d'huile lubrifiante va de 60% à 99,9 % par rapport à la masse totale de la composition lubrifiante.

Pour les applications moteur, avantageusement, la somme des masses du copolymère en peigne A1 et du composé A2 représente de 0,1 à 15%, par rapport à la masse totale de la composition lubrifiante.

Pour les applications transmission, avantageusement, la somme des masses du copolymère en peigne A1 et du composé A2 représente de 0,5 à 40%, par rapport à la masse totale de la composition lubrifiante.

Dans un mode de réalisation, le pourcentage molaire de composé exogène A4 dans la composition lubrifiante va de 0,05% à 5000%, de préférence va de 0,1% à 1000%, de manière plus préférée de 0,5% à 500%, de manière encore plus préférée de 1% à 150% par rapport aux fonctions ester boronique du composé A2, notamment du copolymère poly(ester boronique).

Dans un mode de réalisation, la composition lubrifiante de l'invention résulte du mélange de :

- 0,05% à 20 % en poids d'au moins un copolymère en peigne polydiol A1 tel que défini précédemment, par rapport au poids total de la composition lubrifiante ;
- 0,05% à 20 % en poids d'au moins d'au moins un composé A2 tel que défini précédemment, notamment en copolymère poly(ester boronique); par rapport au poids total de la composition lubrifiante ; et
- éventuellement 0,001% à 0,5 % en poids d'au moins un composé exogène A4 tel que défini précédemment, par rapport au poids total de la composition lubrifiante,
- éventuellement 0,001% à 0,5 % en poids d'au moins un composé exogène A5 tel que défini précédemment, par rapport au poids total de la composition lubrifiante, et
- 60% à 99,9 % en poids d'au moins une huile lubrifiante tel que défini précédemment, par rapport au poids total de la composition lubrifiante.

Dans un autre mode de réalisation, la composition lubrifiante de l'invention résulte du mélange de :

- 0,5% à 20 % en poids d'au moins un copolymère en peigne polydiol A1 tel que défini précédemment, par rapport au poids total de la composition lubrifiante ;
- 0,25% à 20 % en poids d'au moins d'au moins un composé A2 tel que défini précédemment, notamment en copolymère poly(ester boronique); par rapport au poids total de la composition lubrifiante ; et
- éventuellement 0,001% à 0,5 % en poids d'au moins un composé exogène A4 tel que défini précédemment, par rapport au poids total de la composition lubrifiante,
- éventuellement 0,001% à 0,5 % en poids d'au moins un composé exogène A5 tel que défini précédemment, par rapport au poids total de la composition lubrifiante, et
- 0,5% à 15 % en poids d'au moins un additif fonctionnel tel que défini précédemment, par rapport au poids total de la composition lubrifiante, et
- 60% à 99,25 % en poids d'au moins une huile lubrifiante tel que défini précédemment, par rapport au poids total de la composition lubrifiante.

> **<u>Procédé de préparation des compositions lubrifiantes de l'invention</u>**

Les compositions lubrifiantes de l'invention sont préparées par des moyens bien connus de l'homme du métier. Par exemple, il suffit à l'homme du métier notamment de :

- prélever une quantité voulue d'une solution comprenant le copolymère en peigne polydiol A1 tel que défini ci-dessus ;
- prélever une quantité voulue d'une solution comprenant le composé A2, notamment le copolymère A2 poly(ester boronique) tel que défini précédemment ;
- éventuellement, prélever une quantité voulue d'une solution comprenant le composé exogène A4 tel que défini ci-dessus
- mélanger soit simultanément, soit séquentiellement les solutions prélevées dans une huile de base lubrifiante, pour obtenir la composition lubrifiante de l'invention.

L'ordre d'ajout des composés n'a pas d'influence dans la mise en œuvre du procédé de préparation de la composition lubrifiante.

> **Propriétés des compositions lubrifiantes selon l'invention**

Les compositions lubrifiantes de l'invention résultent du mélange de polymères associatifs qui présentent la propriété d'augmenter la viscosité de l'huile lubrifiante par des associations. Les compositions lubrifiantes selon l'invention présentent l'avantage que ces associations ou réticulation sont thermoréversibles et éventuellement que le taux d'association ou de réticulation peut être contrôlé grâce à l'ajout d'un composé diol supplémentaire. En outre, elles présentent une stabilité thermique améliorée, un indice de viscosité amélioré, une stabilité à l'oxydation améliorée, de meilleures performances de cyclage, et une meilleure reproductibilité de performances au cours du temps.

L'homme du métier sait ajuster les différents paramètres des différents constituants de la composition pour obtenir une composition lubrifiante dont la viscosité augmente lorsque la température augmente et pour en moduler sa viscosité et son comportement rhéologique.

> **Procédé pour moduler la viscosité d'une composition lubrifiante**

Divulgué aux présentes est un procédé pour moduler la viscosité d'une composition lubrifiante, le procédé comprenant au moins :

- la fourniture d'une composition lubrifiante résultant du mélange d'au moins une huile lubrifiante, d'au moins un copolymère en peigne polydiol A1 et d'au moins un composé A2 comprenant au moins deux fonctions esters boroniques et pouvant s'associer avec ledit copolymère polydiol A1 par au moins une réaction de transestérification,
- éventuellement l'ajout dans ladite composition lubrifiante d'au moins un composé exogène A4,
- éventuellement l'ajout dans ladite composition lubrifiante d'au moins un composé exogène A5 choisi parmi les di- et tri-esters boroniques.

Par « moduler la viscosité d'une composition lubrifiante », on entend au sens de la présente invention, une adaptation de la viscosité à une température donnée en fonction de l'utilisation de la composition lubrifiante. Ceci est obtenu en ajoutant un composé exogène A4 et/ou A5 tel que défini précédemment. Ces composés permettent de contrôler le taux d'association et de réticulation des deux copolymères polydiol A1 et poly(ester boronique) A2. Un tel procédé est décrit de façon détaillée dans WO2016/113229.

➢ **Autres objets selon l'invention**

Un autre objet de la présente invention est l'utilisation de la composition lubrifiante telle que définie ci-dessus pour lubrifier une pièce mécanique.

Dans la suite de la description, les pourcentages sont exprimés en poids par rapport au poids total de la composition lubrifiante.

Les compositions de l'invention sont utilisables pour lubrifier les surfaces des pièces que l'on trouve classiquement dans un moteur telles que le système pistons, segments, chemises.

Ainsi un autre objet de la présente invention est une composition pour lubrifier au moins un moteur, ladite composition comprenant, notamment consiste essentiellement en, une composition résultant du mélange de :

- 85% à 99,9% en poids, avantageusement de 92 à 99% en poids, d'une huile lubrifiante, et
- 0,1% à 15% en poids, avantageusement de 1 à 8 % en poids, d'un mélange d'au moins un copolymère en peigne A1 tel que défini précédemment, et d'au moins un copolymère ester boronique A2 tel que défini précédemment ; et
- éventuellement 0,001% à 0,1% en poids au moins un composé exogène A4 tel que défini précédemment ;
- éventuellement 0,001% à 0,1% en poids au moins un composé exogène A5 tel que défini précédemment ;

la composition ayant une viscosité cinématique à 100°C mesurée selon la norme ASTM D445 allant de 3,8 à 26,1 cSt ; les pourcentages en poids étant exprimé par rapport au poids total de ladite composition.

Dans un mode de réalisation, l'invention a pour objet une composition pour lubrifier au moins un moteur, ladite composition comprenant, notamment consiste essentiellement en, une composition résultant du mélange de :

- 80% à 99% en poids d'une huile lubrifiante, et
- 0,1% à 15% en poids d'un mélange d'au moins un copolymère A1 tel que défini précédemment, et d'au moins un

copolymère ester boronique A2 tel que défini précédemment ; et

- éventuellement 0,001% à 0,1% en poids au moins un composé exogène A4 tel que défini précédemment ;
- 0,5 à 15% en poids d'au moins un additif fonctionnel choisi parmi le groupe formé par les détergents, les additifs anti-usure, les additifs extrême pression, les antioxydants supplémentaires, les additifs anticorrosion, les polymères améliorant l'indice de viscosité, les améliorants de point d'écoulement, les anti-mousse, les épaississants, les dispersants, les modificateurs de frottements et leurs mélanges ;

la composition ayant une viscosité cinématique à 100°C mesurée selon la norme ASTM D445 allant de 3,8 à 26,1 cSt ; les pourcentages en poids étant exprimé par rapport au poids total de ladite composition.

Les définitions et préférences relatives aux huiles lubrifiantes, aux copolymères en peigne A1, aux composés ester boronique A2 et aux composés exogènes A4 et/ou A5 s'appliquent également aux compositions pour lubrifier au moins un moteur.

Un autre objet de la présente invention est une composition pour lubrifier au moins une transmission, telle que les boîtes de vitesses manuelles ou automatiques.

Ainsi un autre objet de la présente invention est une composition pour lubrifier au moins une transmission, ladite composition comprenant, notamment consiste essentiellement en, une composition résultant du mélange de :

- 50% à 99,5% en poids d'une huile lubrifiante, et
- 0,5% à 50% en poids d'un mélange d'au moins un copolymère A1 tel que défini précédemment, et d'au moins un copolymère ester boronique A2 tel que défini précédemment ; et
- éventuellement 0,001% à 0,5% en poids au moins un composé exogène A4 tel que défini précédemment ;
- éventuellement 0,001% à 0,5% en poids au moins un composé exogène A5 tel que défini précédemment ;

la composition ayant une viscosité cinématique à 100°C mesurée selon la norme ASTM D445 allant de 4,1 à 41 cSt, les pourcentages en poids étant exprimé par rapport au poids total de ladite composition.

Dans un mode de réalisation de l'invention, la composition pour lubrifier au moins une transmission comprend, notamment consiste essentiellement en, une composition résultant du mélange de :

- 45% à 99,39% en poids d'une huile lubrifiante, et
- 0,5% à 50% en poids d'un mélange d'au moins un copolymère en peigne A1 tel que défini précédemment, et d'au moins un copolymère ester boronique A2 tel que défini précédemment ; et
- éventuellement 0,001% à 0,5% en poids au moins un composé exogène A4 tel que défini précédemment ;
- éventuellement 0,001% à 0,5% en poids au moins un composé exogène A5 tel que défini précédemment ;
- 0,1% à 15% en poids d'au moins un additif fonctionnel choisi parmi le groupe formé par les détergents, les additifs anti-usure, les additifs extrême pression, les antioxydants supplémentaires, les additifs anticorrosion, les polymères améliorant l'indice de viscosité, les améliorants de point d'écoulement, les anti-mousses, les épaississants, les dispersants, les modificateurs de frottements et leurs mélanges ;

la composition ayant une viscosité cinématique à 100°C mesurée selon la norme ASTM D445 allant de 4,1 à 41 cSt les pourcentages en poids étant exprimé par rapport au poids total de ladite composition.

Les définitions et préférences relatives aux huiles lubrifiantes, aux copolymères A1, aux copolymères ester boronique A2 et aux composés exogènes A4 et A5 s'appliquent également aux compositions pour lubrifier au moins une transmission.

Les compositions de l'invention peuvent être utilisées pour les moteurs ou transmissions des véhicules légers, des poids-lourds mais aussi des navires.

Un autre objet de la présente invention est un procédé de lubrification d'au moins une pièce mécanique, notamment au moins un moteur ou au moins une transmission, ledit procédé comprenant une étape dans laquelle ladite pièce mécanique est mise en contact avec au moins une composition lubrifiante telle que définie ci-dessus.

Les définitions et préférences relatives aux huiles lubrifiantes, aux copolymères A1, aux copolymères ester boronique A2 et le cas échéant aux composés exogènes A4 et A5 s'appliquent également au procédé de lubrification d'au moins une pièce mécanique.

**Figures**

La figure 1 représente de manière schématique un copolymère statistique (P1), un copolymère à gradient (P2) et un copolymère à blocs (P3), chaque rond représente un motif monomère. La différence de structure chimique entre les

monomères est symbolisée par une couleur différente (gris clair/noir).

La figure 2 représente de manière schématique un copolymère peigne.

La figure 3 illustre de manière schématique les réactions d'échanges de liens esters boroniques entre deux polymères polydiols (A1-1 et A1-2) et deux polymères esters boroniques (A2-1 et A2-2) en présence de diols.

La figure 4 illustre et représente de manière schématique la réticulation de la composition selon l'invention dans du tétrahydrofurane (THF).

La figure 5 représente de manière schématique le comportement de la composition de l'invention en fonction de la température. Un copolymère (2) possédant des fonctions diols (fonction A) peut s'associer de manière thermoréversible avec un copolymère (1) possédant des fonctions esters boroniques (fonction B) via une réaction de transestérification. Le groupement organique des fonctions ester boronique (fonction B) qui s'échange lors de la réaction de transestérification est un diol symbolisé par un croissant noir. Il se forme un lien chimique (3) de type ester boronique avec libération d'un composé diol.

Les figures 6A, 6B et 6C représentent différents copolymères en peigne A1

La figure 7 représente un schéma de synthèse de copolymères en peigne A1

La figure 8 représente un schéma de synthèse de copolymères en peigne A1

La Figure 9 représente un graphique qui rapporte la viscosité relative des compositions B, C et D (ordonnée) en fonction de la température (abscisse) de 10°C à 90°C

La Figure 10 représente un graphique qui rapporte la viscosité relative des compositions F et G (ordonnée) en fonction de la température (abscisse) de 10°C à 90°C sur trois cycles

La Figure 11 représente un graphique qui rapporte la viscosité relative des compositions H, I, J (ordonnée) en fonction de la température (abscisse) de 10°C à 150°C

La Figure 12 représente un graphique qui rapporte la viscosité relative (ordonnée) des compositions I et Id (obtenue à partir de la composition I par dilution de composition I jusqu'à 2,10% massique de copolymère) en fonction de la température (abscisse) de 10 à 150°C

La Figure 13 représente un graphique qui rapporte la viscosité relative (ordonnée) en fonction de la température (abscisse), de la composition Id lors de trois cycles successifs de chauffage-refroidissement entre 10°C et 150°C (Id-1, Id-2 et Id-3)

La Figure 14 représente un graphique qui rapporte la viscosité relative (ordonnée) en fonction de la température (abscisse), de la composition J lors de cinq cycles successifs de chauffage-refroidissement entre 10°C à 150°C (J-1, J-2, J-3, J-4 et J-5).

**Partie expérimentale** :

Les exemples suivants illustrent l'invention sans la limiter.

**1. Synthèse de copolymères en peigne A1 porteurs de fonction diol**

◦ *1.1 : Synthèse des monomères*

*1.1.1 Synthèse du monomère M1 porteur d'une fonction diol*

La synthèse d'un monomère méthacrylate porteur d'une fonction diol s'effectue en trois étapes (étapes 1, 2 et 3) selon le protocole ci-dessous :

1ière étape :

42,1 g (314 mmol) d'1,2,6-hexane triol (1,2,6-HexTri) sont introduits dans un ballon d'1L. 5,88 g de tamis moléculaire (4Å) sont ajoutés suivis de 570 mL d'acétone. 5,01 g (26,3 mmol) d'acide para-toluène-sulfonique (pTSA) sont ensuite lentement additionnés. Le milieu réactionnel est laissé sous agitation pendant 24 heures à température ambiante. 4,48 g (53,3 mmol) de $NaHCO_3$ sont alors ajoutés. Le milieu réactionnel est laissé sous agitation pendant 3 heures à température ambiante avant d'être filtré. Le filtrat est alors concentré sous vide au moyen d'un évaporateur rotatif jusqu'à obtention d'une suspension de cristaux blancs. 500 mL d'eau sont alors ajoutés à cette suspension. La solution ainsi obtenue est extraite avec 4 × 300 mL de dichlorométhane. Les phases organiques sont regroupées et séchées sur $MgSO_4$. Le solvant est ensuite entièrement évaporé sous vide à 25°C au moyen d'un évaporateur rotatif.

2ème étape :

5,01 g (28,8 mmol) du produit ainsi obtenu sont introduits dans un ballon d'1L. 4,13 g (31,9 mmol) de DIPEA et

37,9 mg (0,31 mmol) de DMAP sont ensuite introduits dans le ballon suivis de 5,34 g (34,6 mmol) d'anhydride méthacrylique. Le ballon est alors placé sous agitation à température ambiante pendant 24 heures. 0,95 g de méthanol (29,7 mmol) sont ensuite ajoutés à la solution et le ballon fut laissé sous agitation 1 heure supplémentaire. Le produit est alors dissout dans 40 mL d'hexane. La phase organique est ensuite successivement lavée avec 25 mL d'eau, 3 × 25 mL d'une solution aqueuse d'acide chlorhydrique à 0,5 M, 3 × 25 mL d'une solution aqueuse de NaOH à 0,5 M et de nouveau avec 25 mL d'eau. La phase organique est séchée sur $MgSO_4$, filtrée puis concentrée sous vide à l'aide d'un évaporateur rotatif pour donner un liquide jaune clair.

3ème étape :

17,23 g (71,2 mmol) du produit ainsi obtenu sont introduits dans un ballon d'1L. 90 mL d'eau et 90 mL d'acétonitrile sont ensuite introduits dans le ballon suivis de 59,1 mL (159 mmol) d'acide acétique. Le ballon est alors placé sous agitation pendant 24 heures à 30°C en laissant buller un léger flux d'azote pour pousser l'élimination de l'acétone. La solution ainsi obtenue est extraite avec 6 × 30 mL d'acétate d'éthyle. La phase organique est ensuite successivement lavée avec 5 × 30 mL d'une solution aqueuse de NaOH à 0,5 M puis 3 × 30 mL d'eau. La phase organique est ensuite séchée sur $MgSO_4$, filtrée puis concentrée sous vide à l'aide d'un évaporateur rotatif pour donner un liquide jaune clair dont les caractéristiques sont les suivantes :
$^1H$ RMN (400 MHz, CDCl3) δ : 6,02 (singulet, 1H), 5,49 (singulet, 1H), 4,08 (triplet, J = 6,4 Hz, 1H), 3,65-3,58 (multiplet, 1H), 3,57-3,50 (multiplet, 3H), 3,35 (doublet de doublets, J = 7,6 Hz et J = 11,2 Hz, 1H), 1,86 (doublet de doublets, J = 1,2 Hz et J = 1,6 Hz, 3H), 1,69-1,31 (multiplet, 6H).

*1.1.2 Synthèse du monomère Bromé (monomère de dérivation) :*

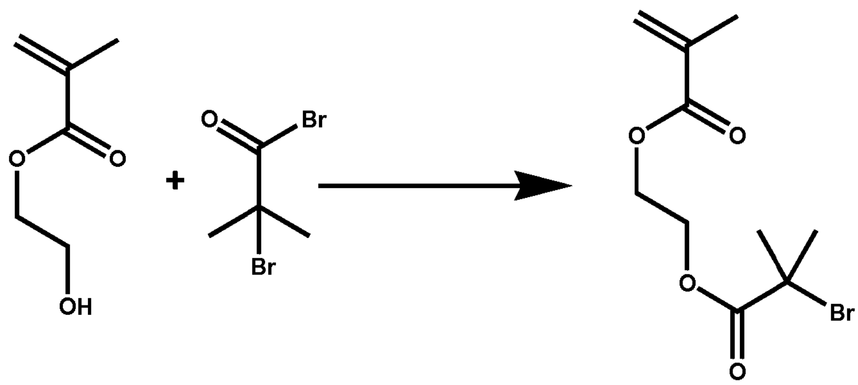

Schéma 11 : Synthèse du monomère bromé

7 mL de méthacrylate d'hydroxyéthyle (58 mmol), 5,4 mL de pyridine (66 mmol) et 75 mL de dichlorométhane sont introduits dans un ballon de 250 mL. Le ballon est alors fermé à l'aide d'un septum, dégazé pendant 30 min par bullage de $N_2$ puis placé dans un bain d'eau glacée. 7,7 mL de bromure de 2-bromo-2-méthylepropionate (64 mmol) sont ensuite ajoutés au mélange réactionnel goutte à goutte en 15 minutes environ. Le ballon est maintenu sous agitation pendant 6 heures. Un précipité blanc se forme au cours de la réaction. La solution est ensuite filtrée pour éliminer le solide. Le solide est rincé au dichlorométhane (2 × 10 mL). La phase organique est ensuite lavée 2 fois par 100 mL d'eau distillée, 2 fois par 100 mL d'une solution de $NaHCO_3$ à 10% puis 2 fois par 100 mL d'une solution saturée en NaCl. La phase organique est alors séchée sur $MgSO_4$ et le solvant éliminé à l'aide d'un évaporateur rotatif. On obtient 11,6 g d'un liquide jaune vif (rendement = 72 %).

**RMN $^1H$ ($CDCl_3$)** : δ : 6,05 ppm (m, 1 H), 5,52 ppm (m, 1 H), 4,35 ppm (m, 4 H), 1,87 ppm (m, 3 H), 1,85 ppm (s, 6 H).

*1.1.3 Synthèse du macromonomère oléfinique méthacrylique (Monomère M6-A) :*

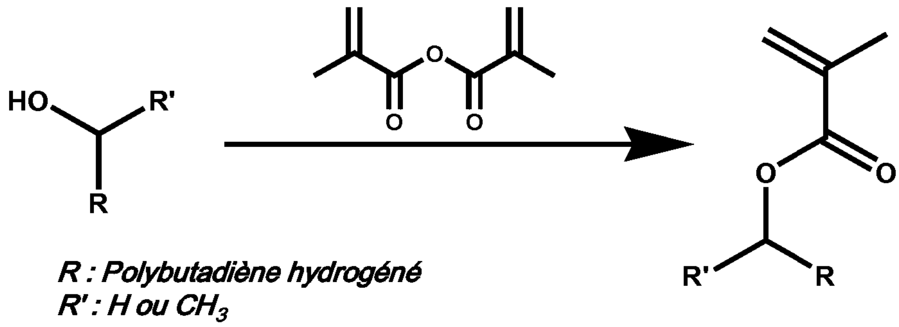


Schéma 12 : synthèse d'un monomère oléfinique

58,8 g (11,6 mmol) de Krasol HLBH 5000M (produit fournit par la société Cray Valley) sont dissouts dans 150 g de dichlorométhane (DCM). 11,9 g d'anhydride méthacrylique (77,3 mmol), 56,2 mg de 4-diméthylaminopyridine (0,47 mmol) et 7,37 g de triméthylamine (76 mmol) sont ensuite ajoutés. La solution est laissée sous agitation pendant 24 h à température ambiante. La solution est ensuite lavée 2 fois avec une solution aqueuse de soude à 0,5 M, puis 2 fois une solution aqueuse d'acide chlorhydrique à 0,5 M et enfin 2 fois par de l'eau distillée. La phase organique est séchée sur $MgSO_4$ puis le solvant est évaporé à l'aide d'un évaporateur rotatif. Le produit est ensuite dissout dans du tétrahydrofurane (THF) avant d'être précipité 3 fois consécutivement dans l'acétone (redissout dans le THF avant chaque précipitation). Le produit est séché 18 heures sous vide à 50°C. Un liquide visqueux incolore et translucide est ainsi obtenu. La fonctionnalisation quantitative du Krasol (de l'alcool en méthacrylate) est confirmée en RMN $^1H$ par la disparition totale du pic entre 3,8 et 4,1 ppm, caractéristique des protons en alpha de la fonction alcool du Krasol.

**RMN $^1H$ ($CDCl_3$) :** $\delta$ : 6,05 ppm (m, 1 H), 5,52 ppm (m, 1 H), 5,1-4,9 ppm (m, 1H), 1,94 ppm (s, 3 H), 2,05-0,48 ppm (1020 H), traces de DCM (5,29 ppm), THF (3,75 ppm ; 1,84 ppm) et acétone (2,17 ppm).

*1.1.4 Synthèse du macromonomère oléfine porteur d'une fonction styrène terminale (Monomère M6-B - OLF1500-St)*

La synthèse du macromonomère oléfine porteur d'une fonction styrène terminale (OLF1500-St) s'effectue en deux étapes (Schémas 13 et 14) selon le protocole suivant :

1ère étape :

4,0 g (27 mmol) d'acide 4-vinylbenzoïque (4-VBA) sont dissous dans 110 mL de dichlorométhane (DCM) anhydre avec une quantité catalytique (15 gouttes) de diméthylformamide (DMF) anhydre. 5,8 mL (67 mmol) de chlorure d'oxalyle sont ensuite ajoutés à la solution. Le mélange réactionnel est laissé sous agitation à température ambiante pendant 2 heures. Après évaporation du solvant sous pression réduite, le liquide jaune obtenu est séché sous vide pendant 2h.

2ème étape :

2,64 g (1,76 mmol) du copolymère oléfine OLF1500-OH présentant une masse molaire moyenne en nombre, $M_n$, de 1500 g/mol et porteur d'une fonction alcool primaire terminale et 3,8 mL (27,5 mmol) de $NEt_3$ sont dissous dans 50 mL de DCM anhydre et le mélange est porté à 0 °C environ au moyen d'un bain de glace. Une solution de chlorure de 4-vinylbenzoyle obtenue lors de la 1ère étape (27 mmol) dans 30 ml de DCM est ensuite ajoutée goutte à goutte au mélange réactionnel en 25 min environ. Le mélange est agité dans le bain de glace pendant 1 heure, puis à température ambiante pendant 24 heures. L'excès de chlorure de 4-vinylbenzoyle est neutralisé par addition de 10 mL d'eau et en laissant le mélange réactionnel sous agitation pendant 1 heure. Le mélange réactionnel est ensuite lavé successivement avec 3 × 100 mL d'une solution de HCl 1 M, 2 × 100 mL d'une solution de NaOH 1 M et 1 × 100 mL de saumure. Après séchage de la phase organique sur $MgSO_4$, la solution jaune limpide obtenue est filtrée sur une colonne d'alumine basique. L'évaporation du DCM et le séchage sous vide donnent 2,80 g (97,6%) d'une huile jaune claire dont les caractéristiques sont les suivantes :
$^1H$ RMN (400 MHz, $CDCl_3$) $\delta$ : 8,00 (multiplet, 2H), 7,46 (doublet de doublets, J = 1,5 Hz et J = 8,3 Hz, 2H), 6,75 (doublet de doublets, J = 12,0 Hz et J = 17,5 Hz, 1H), 5,86 (doublet de doublets, J = 0,8 Hz et J = 17,7 Hz, 1H), 5,38 (doublet, J = 11,0 Hz, 1H), 4,41-4,28 (multiplet, 2H), 1,83-0,52 (multiplet, 961H).

*1.1.5. Synthèse du monomère ester boronique condensé avec le 1,2-dodécanediol (mEB-$C_{12}$)*

Ce monomère est obtenu selon le protocole décrit dans la demande WO2016/113229 (Partie expérimentale §2.1)

◦ *1.2 : Synthèse des copolymères - méthodes*

Les copolymères en peigne A1 de l'invention sont obtenus en faisant appel aux méthodes de synthèse décrites dans les demandes WO2015/110642, WO2015/110643, WO2016/113229 le cas échéant complétées par les méthodes décrites dans la présente demande.

La masse molaire moyenne en nombre et la dispersité sont obtenus par chromatographie d'exclusion stérique en utilisant une calibration poly(méthacrylate de méthyle) et le THF comme éluant.

*1.2.1 Synthèse d'une chaine principale Bramée (squelette bromé 1) :*

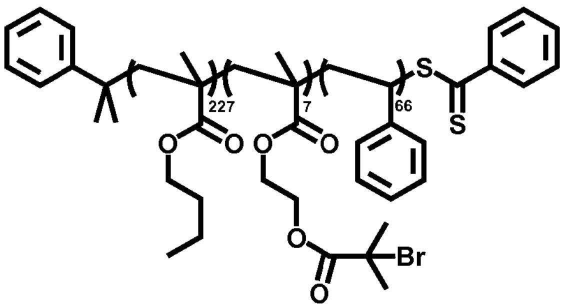

0,50 g (1,8 mmol) de monomère bromé obtenu selon le protocole décrit ci-dessus au point 1.1.2 (schéma 11), 8,52 g (59,9 mmol) de méthacrylate de butyle, 1,14 g (11,0 mmol) de styrène, 35,8 mg (0,13 mmol) de dithiobenzoate de cumyle, 6,3 mg (0,04 mmol) d'azobisisobutyronitrile (AIBN) et 5 g d'anisole sont introduits dans un tube Schlenk de 50 mL. Le milieu réactionnel est placé sous agitation et dégazé pendant 30 minutes en faisant buller de l'azote, avant d'être porté à 65°C pour une durée de 16 heures. Le polymère est ensuite isolé par 3 précipitations successives dans le méthanol puis séché 16 heures sous vide à 50°C. Un copolymère présentant une masse molaire moyenne en nombre ($M_n$) de 38 000 g/mol, une dispersité (*Đ*) de 1,2 et un degré de polymérisation moyen en nombre ($DP_n$) de 300 environ est obtenu. Le polymère ainsi obtenu contient environ 2,3 % molaire (environ 5 % massique) de monomère méthacrylate bromé. Ces valeurs sont respectivement obtenues par chromatographie d'exclusion stérique, en utilisant le THF comme éluant et une calibration poly(méthacrylate de méthyle) (PMMA), et par suivi de la conversion en monomères au cours de la copolymérisation.

*1.2.2 Synthèse d'une chaine principale Bramée (squelette bromé 2) :*

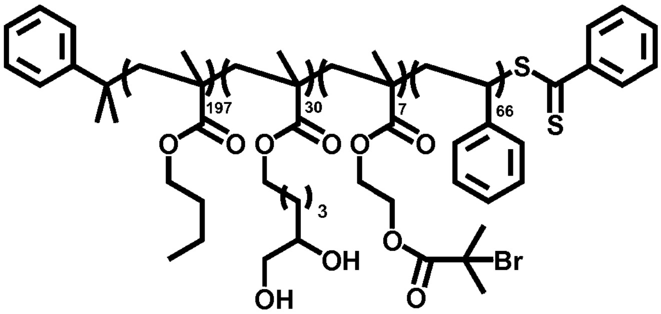

0,50 g (1,8 mmol) de monomère bromé obtenu selon le protocole décrit ci-dessus au point 1.1.2 (schéma 11), 7,45 g (52,4 mmol) de méthacrylate de butyle, 1,46 g (7,2 mmol) de méthacrylate de 5,6-dihydroxyhexyle obtenu selon le protocole décrit au paragraphe 1.1.1 ci-dessus, 1,13 g (10,8 mmol) de styrène, 35,8 mg (0,13 mmol) de dithiobenzoate de

cumyle, 6,3 mg (0,04 mmol) d'AIBN et 5 g d'anisole sont introduits dans un tube Schlenk de 50 mL. Le milieu réactionnel est placé sous agitation et dégazé pendant 30 minutes en faisant buller de l'azote avant d'être porté à 65°C pour une durée de 16 heures. Le polymère est ensuite isolé par 3 précipitations successives dans le méthanol puis séché 16 heures sous vide à 50°C. Un copolymère présentant une $M_n$ de 46 000 g/mol, une dispersité ($Đ$) de 1,2 et un degré de polymérisation moyen en nombre ($DP_n$) de 300 environ est obtenu. Le polymère ainsi obtenu contient environ 2,3 % molaire (environ 5 % massique) de monomère méthacrylate bromé. Ces valeurs sont respectivement obtenues par chromatographie d'exclusion stérique, en utilisant le THF comme éluant et une calibration PMMA, et par suivi de la conversion en monomères au cours de la copolymérisation.

*1.2.3 Synthèse par ATRP du copolymère polydiol en peigne CPDiol-1*

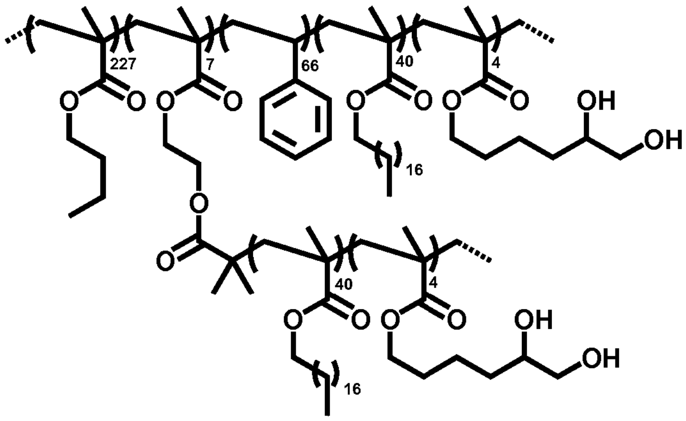

520 mg (87 μmol de monomère bromé et environ 12 μmol de dithiobenzoate) de squelette bromé 1 obtenu selon le protocole décrit ci-dessus, 13,4 g (39,5 mmol) de méthacrylate de stéaryle, 0,91 g (4,5 mmol) de méthacrylate de 5,6-dihydroxyhexyle obtenu selon le protocole décrit ci-dessus au §1.1.1, 3 g de N,N-diméthylformamide (DMF) et 10 g d'anisole sont introduits dans un ballon Schlenk de 50 mL. En parallèle, 52 mg (333 μmol) de 2,2'-bipyridine, 5 mg (20 μmol) de dibromure de cuivre (II) ($CuBr_2$) et 21 mg (147 μmol) de CuBr sont dissouts dans 2 g de DMF dans un pilulier avant de le sceller à l'aide d'un septum. Le ballon et le pilulier sont dégazés par bullage d'azote dans les solutions pendant 30 minutes. La solution contenue dans le pilulier est ensuite prélevée puis injectée dans le ballon à l'aide d'une seringue. Le ballon est alors placé dans un bain d'huile thermostaté à 60°C pendant 7 heures. La solution est ensuite filtrée sur une colonne d'alumine basique afin d'éliminer le cuivre. Enfin, le polymère est isolé par 3 précipitations successives dans le méthanol puis séché 20 heures sous vide à 50°C. Un copolymère présentant une masse molaire en nombre $M_n$ de 105 000 g/mol, une dispersité $Đ$ de 1,5 est obtenu. Ces valeurs sont obtenues par chromatographie d'exclusion stérique en utilisant le THF comme éluant et une calibration PMMA. D'après la conversion en monomères déterminée par RMN $^1H$, les chaînes pendantes ont un degré de polymérisation moyen en nombre DPn de 40 environ.

*1.2.4 Synthèse par ATRP du polydiol en peigne BB :*

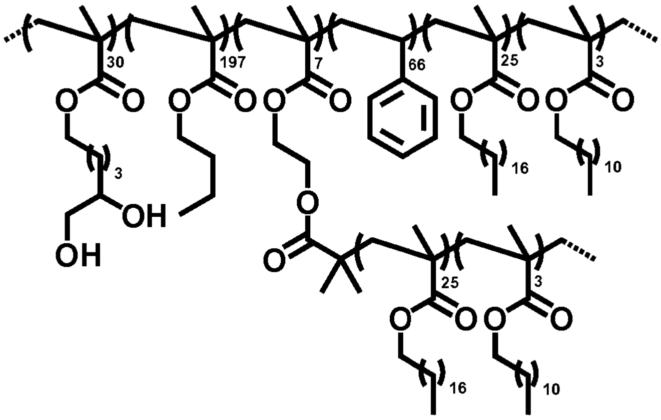

522 mg (84 μmol de monomère bromé environ 12 μmol de dithiobenzoate) de squelette bromé 2 obtenu selon le protocole décrit ci-dessus, 9,22 g (27,2 mmol) de méthacrylate de stéaryle, 0,80 g (3,1 mmol) de méthacrylate de lauryle et 6,8 g d'anisole sont introduits dans un ballon Schlenk de 50 mL. En parallèle, 48 mg (308 μmol) de 2,2'-bipyridine, 4 mg (18 μmol) de $CuBr_2$ et 19 mg (133 μmol) de CuBr sont dissouts dans 3,3 g de DMF dans un pilulier avant de le sceller à l'aide d'un septum. Le ballon et le pilulier sont dégazés par bullage d'azote dans les solutions pendant 30 minutes. La solution contenue dans le pilulier est ensuite prélevée puis injectée dans le ballon à l'aide d'une seringue. Le ballon est alors placé dans un bain d'huile thermostaté à 60°C pendant 6,3 heures. La solution est ensuite filtrée sur une colonne d'alumine basique afin d'éliminer le cuivre. Enfin, le polymère est isolé par 3 précipitations successives dans le méthanol puis séché 20 heures sous vide à 50°C. Un copolymère présentant une masse molaire moyenne en nombre $M_n$ de 210 000 g/mol, une dispersité $Đ$ de 1,6 est obtenu. Ces valeurs sont obtenues par chromatographie d'exclusion stérique en utilisant le THF comme éluant et une calibration PMMA. D'après la conversion en monomères déterminée par RMN $^1H$, les chaînes pendantes ont un degré de polymérisation moyen en nombre DPn de 30 unités environ.

1.2.5 *Synthèse d'un copolymère en peigne de méthacrylate de butyle, de méthacrylate porteur d'une fonction diol et du macromonomère oléfine OLF1500-St (CPDiol-2)*

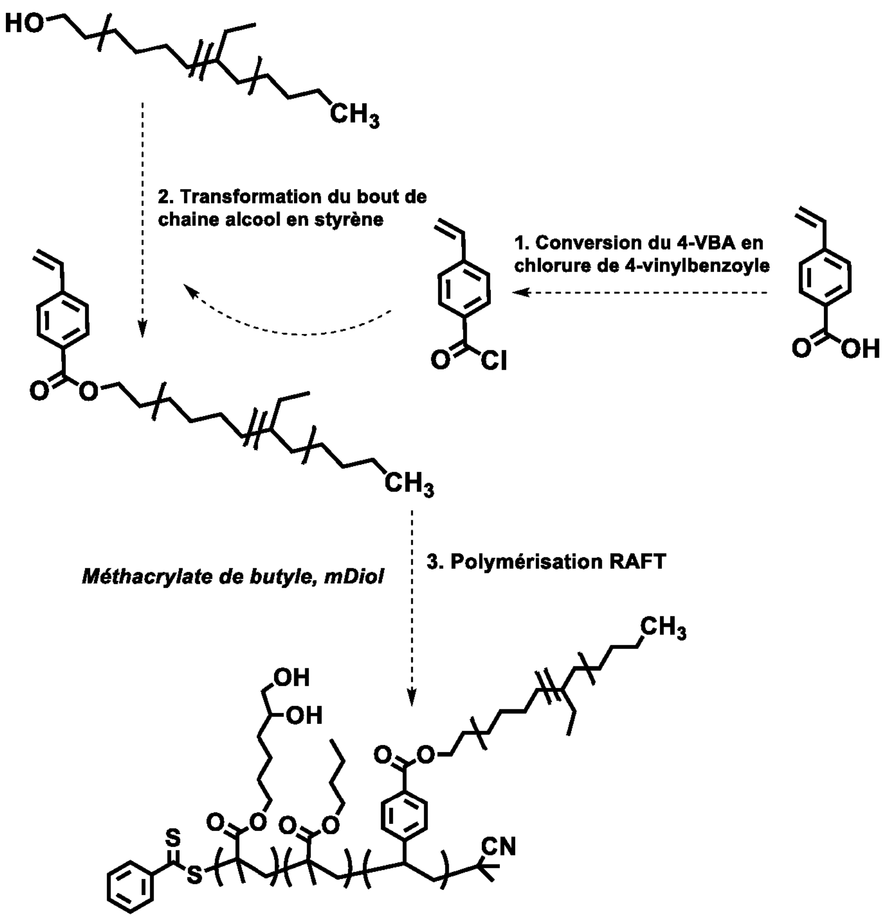


Schéma 13

La synthèse du copolymère en peigne porteur des fonctions diol dans la chaine principale **CPDiol-2** s'effectue selon le protocole suivant (schéma 13 ci-dessus) :
2,50 g (17,5 mmol) de méthacrylate de butyle (BMA), 0,18 g (0,89 mmol) de monomère méthacrylate porteur d'une fonction diol, 0,89 g (0,93 mmol) du macromonomère oléfine *M6-B-OLF1500-St* obtenu selon le protocole décrit au paragraphe 1.1.4 ci-dessus, 9,3 mg (0,04 mmol) d'agent de transfert RAFT 2-cyano-2-propyl benzodithioate (PPBD), 2,8 mg (0,02 mmol) d'azobisisobutyronitrile (AIBN) et 3,6 mL d'anisole sont introduits dans un tube Schlenk de 25 mL. Le milieu réactionnel est placé sous agitation et dégazé pendant 30 min en faisant buller de l'azote, avant d'être porté à 65°C pour une durée de 19 heures.

Après 19h de polymérisation, le tube Schlenk est placé dans un bain de glace pour arrêter la polymérisation. Le polymère est ensuite isolé par 2 précipitations successives dans du méthanol refroidi à l'aide d'un bain de glace, filtration et séchage sous vide à 50°C pendant une nuit. Le copolymère ainsi obtenu présente une masse molaire moyenne en nombre ($M_n$) de 65 500 g/mol, une dispersité (D) de 1,25 et un degré de polymérisation moyen en nombre ($DP_n$) de 350. Les deux premières valeurs sont obtenues par chromatographie d'exclusion stérique en utilisant le THF comme éluant et une calibration poly(méthacrylate de méthyle), tandis que le $DP_n$ est obtenu par suivi RMN $^1H$ de la conversion en monomères au cours de polymérisation.

On obtient un copolymère poly(butyle methacrylate-co-alkyldiol methacrylate-co-*M6-B-OLF1500-St*) **CPDiol-2** contenant 4,5% molaire d'unités de répétition diol (4.6% massique) et 6,8% molaire de chaines pendantes OLF1500-OCP (32% massique). La longueur moyenne des chaînes latérales est de 10,9 atomes de carbone.

<u>1.2.6 *Synthèse d'un copolymère en peigne de méthacrylate de butyle, de macromonomère oléfine M6-B-OLF1500-St et de chaines pendantes polymériques polydiol* ***(CPDiol-3)***</u>

La synthèse du copolymère en peigne contenant le macromonomère oléfine M6-B-OLF1500-St et des chaines pendantes polymériques polydiol **(CPDiol-3)** s'effectue selon le protocole suivant (schéma 14 ci-dessous) :

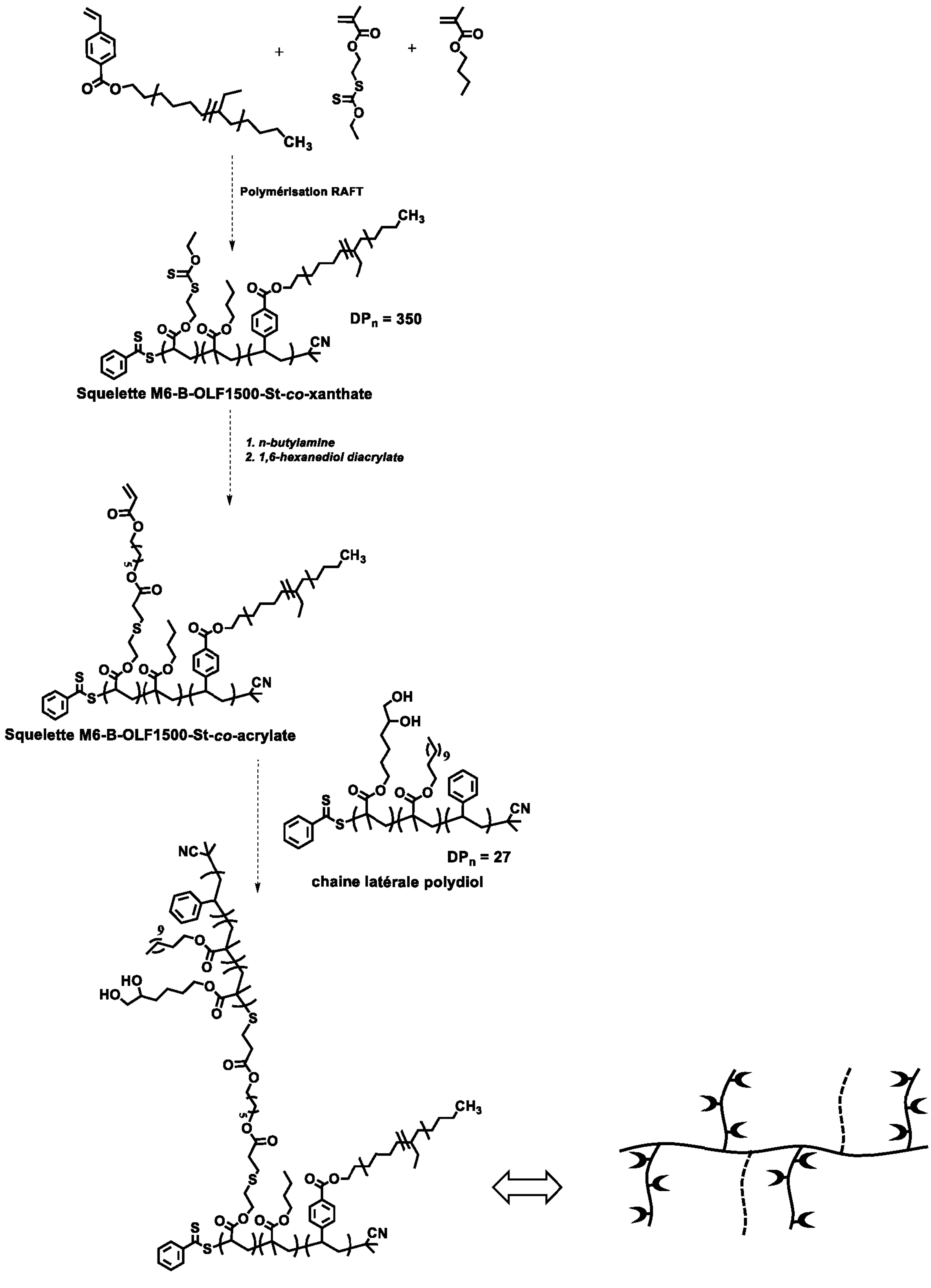


Squelette M6-B-OLF1500-St-*co*-xanthate

Squelette M6-B-OLF1500-St-*co*-acrylate

chaine latérale polydiol

Copolymère en peigne CPDiol-3

Copolymère en peigne CPDiol-3

Schéma 14

1.2.6.1 Synthèse d'une chaine principale contenant du macromonomère oléfine M6-B-OLF1500-St et du méthacrylate de 2-xanthate éthyle (squelette M6-B-OLF 1500-St-co-xanthate)

4,00 g (28,1 mmol) de méthacrylate de butyle, 1,30 g (1,36 mmol) du macromonomère oléfine M6-B-OLF1500-St, 1,06 g (4,52 mmol) du méthacrylate de 2-xanthate éthyle (XEMA ; synthétisé suivant le protocole décrit dans l'article « Synthesis of Well-Defined Polythiol Copolymers by RAFT Polymerization » R. Nicolaÿ, Macromolecules 2012, 45, 821-827), 16.4 mg (0,074 mmol) d'agent de transfert RAFT 2-cyano-2-propyl benzodithioate (PPBD), 4,8 mg (0,030 mmol) d'azobisisobutyronitrile (AIBN) et 6,4 mL d'anisole sont introduits dans un tube Schlenk de 50 mL. Le milieu réactionnel est placé sous agitation et dégazé pendant 30 min en faisant buller de l'azote, avant d'être porté à 65°C pour une durée de 20,5 heures.

Après 20,5 h de polymérisation, le tube Schlenk est placé dans un bain de glace pour arrêter la polymérisation. Le polymère est ensuite isolé par 2 précipitations successives dans du méthanol refroidi à l'aide d'un bain de glace, filtration et séchage sous vide à 50°C pendant une nuit. Le copolymère ainsi obtenu présente une masse molaire moyenne en nombre (Mn) de 80 600 g/mol, une dispersité (Đ) de 1,61 et un degré de polymérisation moyen en nombre (DPn) de 350. Les deux premières valeurs sont obtenues par chromatographie d'exclusion stérique en utilisant le THF comme éluant et une calibration poly(méthacrylate de méthyle), tandis que le DPn est obtenu par suivi RMN 1H de la conversion en monomères au cours de polymérisation.

On obtient un copolymère poly(butyle methacrylate-co-méthacrylate de 2-xanthate éthyle-co- M6-B-OLF1500-St), « squelette M6-B-OLF1500-St-*co*-xanthate », contenant 7,9% molaire d'unités de répétition méthacrylate de 2-xanthate éthyle (9.5% massique) et 5,6% molaire de chaines pendantes OLF1500-OCP (27% massique).

1.2.6.2 Synthèse d'une chaine principale contenant du macromonomère oléfine M6-B-OLF1500-St et des fonctions acrylate pendantes (squelette M6-B-OLF1500-St-*co*-acrylate)

Les fonctions de xanthate du copolymère « squelette M6-B-OLF1500-St-*co*-xanthate » sont ensuite transformées en acrylates par addition de Michael avec le 1,6-hexanediol diacrylate suivant le protocole suivant :
3,70 g (1,50 mmol de fonctions XEMA) de « squelette M6-B-OLF1500-St-*co*-xanthate » sont introduits dans un tube Schlenk de 250 mL et dissous dans 35 mL d'un mélange THF:DMF = 1:1 en volume. 0,44 g (6,00 mmol) de n-butylamine et trois gouttes de tributylphosphine sont introduits dans le tube Schlenk. Le milieu réactionnel est dégazé pendant 10 min en faisant buller de l'azote, puis placé sous agitation à température ambiante pendant 2 heures. Ensuite, une solution de 6.79 g (30,0 mmol) de 1,6-hexanediol diacrylate dans 3 mL de THF est introduite et le milieu réactionnel est laissé sous agitation à température ambiante pour une durée de 48 heures.

Le milieu réactionnel est ensuite concentré sous vide et le polymère est isolé par 3 précipitations successives dans du méthanol refroidi à l'aide d'un bain de glace, filtration et séchage sous vide à 50°C pendant une nuit. Le copolymère ainsi obtenu présente une masse molaire moyenne en nombre (Mn) de 60 100 g/mol et une dispersité (D) de 1,65, comme obtenues par chromatographie d'exclusion stérique en utilisant le THF comme éluant et une calibration poly(méthacrylate de méthyle).

On obtient le copolymère « squelette M6-B- OLF1500-St-*co*-acrylate», contenant 5.1% molaire d'unités de répétition portant une fonction acrylate pendante (9.4% massique) et 5,6% molaire de chaines pendantes OLF1500-OCP (27% massique), comme mesurée par RMN $^1$H.

1.2.6.3 Synthèse d'un précurseur de chaines latérales par copolymérisation du méthacrylate de lauryle, de styrène et de méthacrylate porteur d'une fonction diol (chaine latérale polydiol)

Les chaines pendantes polymériques polydiol du copolymère en peigne contenant le macromonomère oléfine M6-B- OLF1500-St et des chaines pendantes polymériques polydiol **(CPDiol-*3*)** sont préparées suivant le protocole suivant (schéma 14 ci-dessus) :
8,00 g (31,4 mmol) de méthacrylate de lauryle (LMA), 0,54 g (5,24 mmol) de styrène, 1,86 g (9,17 mmol) de monomère méthacrylate porteur d'une fonction diol, 290 mg (1,31 mmol) d'agent de transfert RAFT PPBD, 10,8 mg (0,066 mmol) d'AIBN et 3,6 mL d'anisole sont introduits dans un tube Schlenk de 50 mL. Le milieu réactionnel est placé sous agitation et dégazé pendant 30 min en faisant buller de l'azote, avant d'être porté à 65°C pour une durée de 24 heures.

Après 24h de polymérisation, le tube Schlenk est placé dans un bain de glace pour arrêter la polymérisation. Le polymère est ensuite isolé par précipitation dans du méthanol refroidi à l'aide d'un bain de glace, décantation du surnageant et séchage sous vide à 50°C pendant une nuit. Le copolymère ainsi obtenu présente une masse molaire moyenne en nombre (Mn) de 9 850 g/mol, une dispersité (D) de 1,27 et un degré de polymérisation moyen en nombre (DPn) de 27. Les deux premières valeurs sont obtenues par chromatographie d'exclusion stérique en utilisant le THF comme éluant et une calibration poly(méthacrylate de méthyle), tandis que le DPn est obtenu par suivi RMN 1H de la conversion en monomères au cours de polymérisation.

On obtient ainsi un copolymère poly(méthacrylate de lauryle-co- monomère méthacrylate porteur d'une fonction diol-co-styrène), « chaine latérale polydiol », contenant 20% molaire d'unités de répétition diol (18% massique), 67% molaire d'unités de répétition méthacrylate de lauryle (76% massique) et 13% molaire d'unités de répétition styrène (6,0% massique).

1.2.6.4 Synthèse du copolymère en peigne contenant le macromonomère oléfine M6-B- OLF1500-St et des chaines pendantes polymériques polydiol **(CPDiol-*3*)**

1,07 g (0,12 mmol) de copolymère « chaine latérale polydiol » préparé suivant le protocole décrit en 1.2.6.3 sont introduits dans un tube Schlenk de 100 mL et dissous dans 10 mL d'un mélange THF:DMF = 2:1 en volume. 65 mg (0,88 mmol) de n-butylamine et trois gouttes de tributylphosphine sont ajoutés à la solution. Le milieu réactionnel est dégazé pendant 5 min en faisant buller de l'azote et placé sous agitation à température ambiante pendant 2 heures. Ensuite, une solution de 1.70 g (0,43 mmol de fonctions acrylate) de copolymère « squelette M6-B-OLF1500-St-*co*-acrylate» préparé suivant le protocole décrit en 1.2.6.2 dans 20 mL d'un mélange THF:DMF = 2:1 en volume est ajoutée au mélange réactionnel sous atmosphère d'azote. Le mélange réactionnel est ensuite porté à 40°C pour une durée de 40 heures.

Après 40h de réaction, 125 mg (2,03 mmol) d'éthanethiol sont ajoutés au milieu réactionnel, qui est maintenu sous agitation à température ambiante pendant 4 heures.

Le copolymère en peigne contenant le macromonomère oléfine M6-B-OLF1500-St et des chaines pendantes polymériques polydiol **(CPDiol-*3*)** est ensuite isolé par 2 précipitations successives dans du méthanol refroidi à l'aide d'un bain de glace, décantation du surnagent et séchage sous vide à 50°C pendant une nuit.

◦ *1.3 : Synthèse des copolymères comparatifs - méthodes*

*1.3.1 Polydiol linéaire-1 (**PLDiol-1** comparatif)* :

Le polydiol linéaire-1 a été synthétisé suivant le protocole décrit dans la demande FR1661400 ou WO2018096252A1 (partie expérimentale §1.2.). Ce polydiol contient environ 10 % molaire de monomère porteur d'une fonction diol (8.6% massique), 37 % molaire de méthacrylate de lauryle (39,8% massique), 28 % molaire de méthacrylate de stéaryle (40,1% massique) et 26 % molaire de styrène (11,5% massique). Le copolymère présente une $M_n$ de 53 000 g/mol, une *Đ* de 1,3 et un DPn de 250. Ces valeurs sont respectivement obtenues par chromatographie d'exclusion stérique, en utilisant le THF comme éluant et une calibration PMMA, et par suivi de la conversion en monomères au cours de la copolymérisation.

*1.3.2 Polydiol linéaire-2 (**PLDiol-2** comparatif) :*

Le polydiol linéaire-2 a été synthétisé suivant le protocole décrit dans la demande FR1661400 ou WO2018096252A1 (partie expérimentale §1.2.). Ce copolymère comprend 7,0% molaire de monomère porteur d'une fonction diol (6,0% massique). La longueur moyenne de chaîne latérale est de 10,3 atomes de carbone. Sa masse molaire moyenne en nombre est de 40 000 g/mol. Sa dispersité est de 1,46. Son degré de polymérisation moyen en nombre (DPn) est de 170. La masse molaire moyenne en nombre et la dispersité sont obtenus par chromatographie d'exclusion stérique en utilisant une calibration poly(méthacrylate de méthyle).

◦ *1.4: Synthèse des copolymères boroniques - méthodes*

*1.4.1 Poly(ester boronique) linéaire-1 (PLB1)* :

Un poly(ester boronique) linéaire a été synthétisé suivant le protocole décrit dans la demande WO2016/113229 (partie expérimentale §2.). Ce poly(ester boronique) contient environ 4 % molaire de monomère porteur d'une fonction ester boronique (8,1% massique), 61 % molaire de méthacrylate de lauryle (69,6% massique) et 35 % molaire de méthacrylate de butyle (22,3% massique). Le copolymère présente une $M_n$ de 41 000 g/mol, une *Đ* de 1,3 et un DPn de 210. Ces valeurs sont respectivement obtenues par chromatographie d'exclusion stérique en utilisant le THF comme éluant et une calibration PMMA, et par suivi de la conversion en monomères au cours de la copolymérisation.

*1.4.2 Copolymère statistique linéaire poly(ester boronique) (**PLB2**)*

Ce copolymère comprend 6,0% molaire d'unités de répétition EB-$C_{12}$ (10% massique). La longueur moyenne de chaînes latérale est de 12 atomes de carbone. Sa masse molaire moyenne en nombre est de 45 700 g/mol. Sa dispersité est de 1,39. Son degré de polymérisation moyen en nombre (DPn) est de 175. La masse molaire moyenne en nombre et la

dispersité sont obtenus par chromatographie d'exclusion stérique en utilisant une calibration poly(méthacrylate de méthyle) et le THF comme éluant. Ce copolymère est obtenu selon le protocole décrit au paragraphe 2 de la Partie expérimentale de la demande WO2016/113229.

*1.4.3 Synthèse d'un copolymère en peigne de méthacrylate de butyle, de styrène porteur d'une fonction ester boronique-$C_{12}$ et du macromonomère oléfine M6-B-*OLF*1500-St* (PBB2)

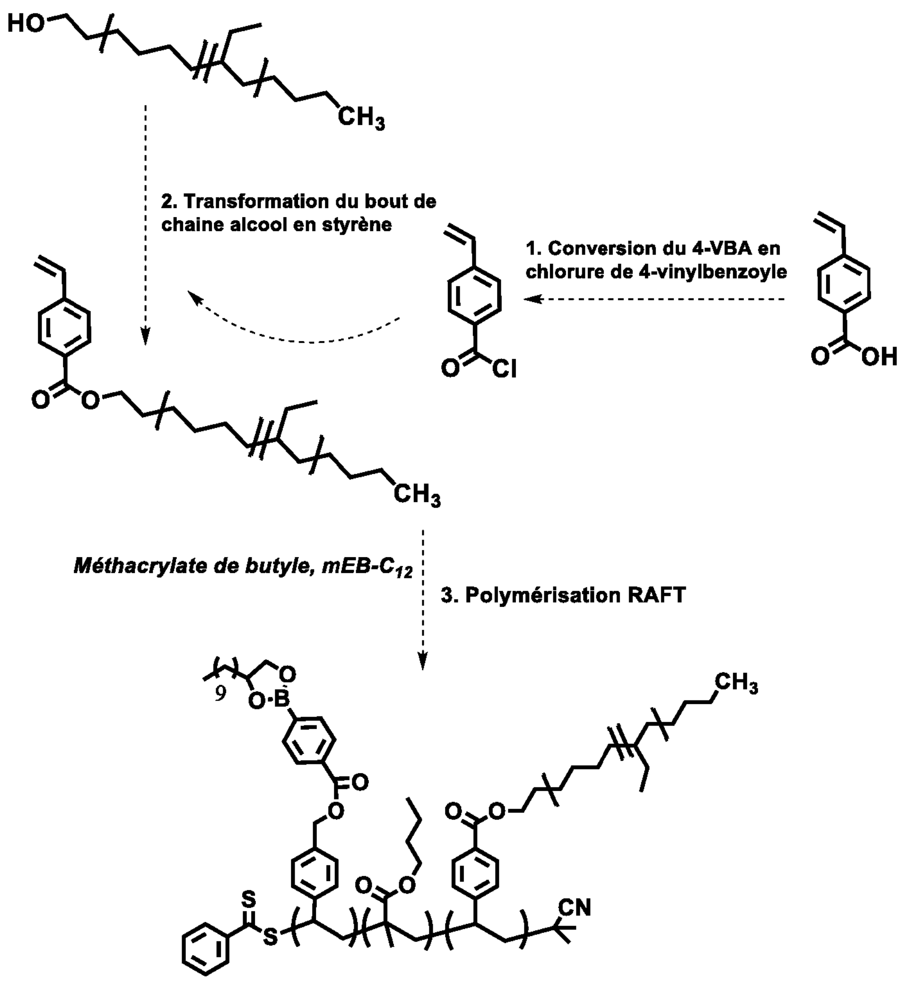


Schéma 15

La synthèse du copolymère en peigne porteur des fonctions ester boronique dans la chaine principale PBB2 s'effectue selon le protocole suivant :
2,50 g (17,5 mmol) de méthacrylate de butyle (BMA), 0,39 g (0,87 mmol) du monomère ester boronique condensé avec le 1,2-dodécanediol (mEB-$C_{12}$) obtenu selon le protocole décrit dans la demande WO2016/113229 (Partie expérimentale §2.1), 0,89 g (0,93 mmol) du macromonomère oléfine M6-B-OLF1500-St obtenu selon le protocole décrit au paragraphe 1.1.4 ci-dessus, 9,3 mg (0,04 mmol) d'agent de transfert RAFT 2-cyano-2-propyl benzodithioate (PPBD), 2,8 mg (0,02 mmol) d'AIBN et 3,8 mL d'anisole sont introduits dans un tube Schlenk de 25 mL. Le milieu réactionnel est placé sous agitation et dégazé pendant 30 min en faisant buller de l'azote, avant d'être porté à 65°C pour une durée de 19 heures.

Après 19h de polymérisation, le tube Schlenk est placé dans un bain de glace pour arrêter la polymérisation. Le polymère est ensuite isolé par une précipitation dans de l'acétone refroidi à l'aide d'un bain de glace, décantation du surnageant et séchage de la phase polymère pâteuse sous vide à 50°C pendant une nuit. Le copolymère ainsi obtenu présente une masse molaire moyenne en nombre ($M_n$) de 54 800 g/mol, une dispersité (D) de 1,23 et un degré de polymérisation moyen en nombre ($DP_n$) de 280. Les deux premières valeurs sont obtenues par chromatographie d'exclusion stérique en utilisant le THF comme éluant et une calibration poly(méthacrylate de méthyle), tandis que le

$DP_n$ est obtenu par suivi RMN $^1H$ de la conversion en monomères au cours de polymérisation.

On obtient un copolymère poly(butyle methacrylate-co-mEB-$C_{12}$-co-M6-B-OLF1500-St **PBB2** contenant 5,7% molaire d'unités de répétition mEB-$C_{12}$ (12% massique) et 6,8% molaire d'unités de répétition M6-B-OLF1500-St (30% massique).

## 2. Préparation des compositions

Chaque polymère est dissout dans une huile de base de groupe III pour obtenir une solution à 10 % massique en polymère. Après dissolution totale du polymère dans l'huile, ces solutions servent de solutions mères pour la préparation des formulations étudier en rhéologie.

### ◦ *2.1 Ingrédients pour la formulation de compositions*

Huile de base lubrifiante

L'huile de base lubrifiante utilisée dans les compositions à tester est une huile du groupe III de la classification API, commercialisée par SK sous le nom Yubase 4. Elle présente les caractéristiques suivantes :

- Sa viscosité cinématique à 40°C mesurée selon la norme ASTM D445 est de 19,57 cSt ;
- Sa viscosité cinématique mesurée à 100°C selon la norme ASTM D445 est de 4,23 cSt ;
- Son indice de viscosité mesuré selon la norme ASTM D2270 est de 122 ;
- Sa volatilité Noack en pourcentage poids, mesurée selon la norme DIN 51581 est de 15 ;
- Son point flash (flash point en anglais) en degré Celsius mesuré selon la norme ASTM D92 est de 230°C ;
- Son point d'écoulement (pour point en anglais) en degré Celsius mesuré selon la norme ASTM D97 est de -15°C.

### ◦ *2.2 Formulation de compositions*

### Préparation de la Composition B

1,60 g d'huile de base de groupe III et 0,40 g de la solution mère à 10 % massique de polydiol en peigne **CPDiol-1,** sont introduits dans un pilulier et vigoureusement mélangés à l'aide d'un vortex pendant 30 secondes. Cette formulation contient donc 2 % massique de polydiol en peigne **CPDiol-1.**

### Préparation de la Composition C

1,60 g d'huile de base de groupe III et 0,40 g de la solution mère à 10 % massique de polydiol en peigne **BB** sont introduits dans un pilulier et vigoureusement mélangés à l'aide d'un vortex pendant 30 secondes. Cette formulation contient donc 2 % massique de polydiol en peigne **BB.**

### Préparation de la Composition D (comparative)

1,60 g d'huile de base de groupe III et 0,40 g de la solution mère à 10 % massique de polydiol linéaire-1 **(PLDiol-1),** sont introduits dans un pilulier et vigoureusement mélangés à l'aide d'un vortex pendant 30 secondes. Cette formulation contient donc 2 % massique de polydiol linéaire-1 **(PLDiol-1).**

### Préparation de la Composition F (selon l'invention)

1,20 g d'huile de base de groupe III, 0,40 g de la solution mère à 10 % massique de polydiol en peigne **CPDiol-1,** et 0,40 g de la solution mère à 10 % massique de poly(ester boronique) linéaire-1 **(PLB1),** sont introduits dans un pilulier et vigoureusement mélangés à l'aide d'un vortex pendant 30 secondes. Cette formulation contient donc 2 % massique de polydiol en peigne **CPDiol-1,** TD 4-37, et 2 % massique de poly(ester boronique) linéaire-1 **(PLB1).**

### Préparation de la Composition G (selon l'invention)

1,20 g d'huile de base de groupe III, 0,40 g de la solution mère à 10 % massique de polydiol en peigne **BB,** et 0,40 g de la solution mère à 10 % massique de poly(ester boronique) linéaire-1 **(PLB1),** sont introduits dans un pilulier et vigoureusement mélangés à l'aide d'un vortex pendant 30 secondes. Cette formulation contient donc 2 % massique de polydiol en peigne **BB,** et 2 % massique de poly(ester boronique) linéaire-1 **(PLB1).**

**Préparation de composition H (comparative)** :

0,53 g de la solution de ***PLB2*** à 39,2% massique dans l'huile de base de groupe III sont mélangés avec 6,76 g de cette même huile de base. Ce mélange est maintenu sous agitation au vortex à température ambiante pendant 1 minute. La solution ainsi obtenue de ***PLB2*** est ensuite mélangée avec 0.71 g de la solution de ***PLDiol-2*** à 25,4% massique dans l'huile de base de groupe III. Le mélange ainsi obtenu est maintenu sous agitation au vortex à température ambiante pendant 2 minutes. On obtient une solution à 2,60% massique de copolymère linéaire *PLB2* et 2,25% massique de copolymère linéaire ***PLDiol-2.***

**Préparation de la composition I (selon l'invention)** :

0,60 g de copolymère en peigne polydiol ***CPDiol-2*** et 5.40 g d'huile de base groupe III sont introduits dans un flacon. Le mélange ainsi obtenu est maintenu sous agitation à 100°C jusqu'à dissolution complète du copolymère en peigne polydiol ***CPDiol-2.*** On obtient ainsi une solution à 10% massique de copolymère en peigne polydiol ***CPDiol-2.***

0,60 g de copolymère en peigne poly(ester boronique) **PBB2** et 5.40 g d'huile de base groupe III sont introduits dans un flacon. Le mélange ainsi obtenu est maintenu sous agitation à 100°C jusqu'à dissolution complète du poly(ester boronique) **PBB2.** On obtient ainsi une solution à 10% massique de copolymère en peigne poly(ester boronique) **PBB2.**

1,47 g de la solution de polydiol ***CPDiol-2 à*** 10% massique dans l'huile de base de groupe III sont mélangés avec 2,94 g de cette même huile de base. Ce mélange est maintenu sous agitation au vortex à température ambiante pendant 1 minute. La solution ainsi obtenue de ***CPDiol-2*** est ensuite mélangée avec 1,47 g de la solution de poly(ester boronique) **PBB2** à 10% massique dans l'huile de base de groupe III et maintenue sous agitation au vortex à température ambiante pendant 2 minutes. On obtient ainsi la composition **I** contenant 2,50% massique de copolymère en peigne polydiol ***CPDiol-2*** et 2,50% massique de copolymère en peigne poly(ester boronique) **PBB2.**

**Préparation de la composition J (selon l'invention)** :

1,47 g de la solution à 10% massique de polydiol en peigne ***CPDiol-2*** préparée précédemment sont mélangés avec 4,03 g d'huile de base de groupe III. Ce mélange est maintenu sous agitation au vortex à température ambiante pendant 1 minute. La solution ainsi obtenue de ***CPDiol-2*** est ensuite mélangée avec 0.38 g de la solution de ***PLB2*** à 39,2% massique dans l'huile de base de groupe III et maintenue sous agitation au vortex à température ambiante pendant 2 minutes. On obtient ainsi une solution à 2,50% massique de copolymère en peigne polydiol ***CPDiol-2*** et 2,50% massique de copolymère linéaire poly(ester boronique) ***PLB2.***

**3.Rhéologie des solutions de polymères**

La viscosité relative calculée selon la formule suivante

$$(\eta_{relative} = \frac{\eta_{solution}}{\eta_{huile\ de\ base}})$$

a été choisie pour représenter l'évolution de la viscosité du système en fonction de la température, car cette grandeur reflète directement la compensation à la perte de viscosité naturelle d'une huile de base de groupe III des systèmes polymères étudiés.

*3.1 Appareillages et protocoles de mesure de la viscosité (compositions A à G)*

Les études rhéologiques ont été effectuées à l'aide d'un viscosimètre à chute de bille Lovis 2000 de la société Anton Paar.

Dans le cas des formulations de polymères qui ne forment pas de gels dans une huile de base du groupe III sur la plage de température de l'étude, les mesures de rhéologie ont été réalisée en utilisant une géométrie cylindrique de référence DG 26.7 La viscosité a été mesurée en fonction de la vitesse de cisaillement pour une gamme de température variant de 10°C à 90°C. Pour chaque température, la viscosité du système a été mesurée en fonction de la vitesse de cisaillement de 1 à 100 $s^{-1}$. Les mesures de viscosité en fonction de la vitesse de cisaillement à T = 10°C, 50°C, 90°C ont été réalisées. Une viscosité moyenne a alors été calculée pour chaque température en utilisant les points de mesure situés sur le même plateau.

*3.2 Résultats obtenus en rhéologie*

La viscosité relative des compositions B, C et D a été mesurée à 90°C, 50°C puis 10°C (Figure 9). Toutes les compositions contiennent 2 % massiques de polymère. Bien que les deux polydiols en peigne présentent des architectures similaires, la viscosité relative de la composition B (fonctions diol sur les chaînes pendantes) est significativement plus faible que la viscosité relative de la composition C (fonctions sur le squelette). La composition D est constituée d'un polydiol présentant un degré de polymérisation moyen de 250 unités monomères environ. Ce polymère est donc significativement plus court que le polymère de la composition B (squelette ayant un degré de polymérisation moyen de 300 environ). Néanmoins, la viscosité relative de la composition D est significativement plus élevée que la viscosité relative de la composition B sur toute la plage de températures. Cela signifie que les polymères diol en brosses ont un impact moindre sur la viscosité de l'huile que les polymères linéaires diol, notamment lorsque les chaînes pendantes des brosses contiennent les fonctions diol. De plus, la composition B présente une plus forte augmentation de sa viscosité relative avec la température que les compositions C et D.

La viscosité relative des compositions F et G a été mesurée à 90°C, 50°C puis 10°C (Figures 10). Ces deux compositions ont été étudiées sur 3 cycles de refroidissement puis chauffage de 90°C à 10°C. Quelle que soit la composition, les viscosités relatives sont très proches à chaque température d'un cycle à l'autre. Cela signifie que le comportement rhéologique de la formulation est reproductible sur au moins 3 cycles. Ces deux compositions montrent une forte augmentation de leur viscosité relative lorsque la température augmente. Les compositions F et G présentent approximativement la même viscosité relative à 50°C. Par contre, la composition F est moins visqueuse à 10°C et plus visqueuse à 90°C. Cela signifie que la formulation notamment constituée du polydiol en peigne CPDiol1 permet d'obtenir une plus forte viscosification des huiles apolaires que la formulation notamment constituée du polydiol en peigne BB.

*3.3 Appareillages et protocoles de mesure de la viscosité (compositions H, I, J)*

Les études rhéologiques ont été effectuées à l'aide d'un rhéomètre de type Couette MCR 501 à contrainte contrôlée de la société Anton Paar.

Les mesures de rhéologie ont été réalisées en utilisant une géométrie cylindrique de référence DG 26.7. La viscosité a été mesurée en fonction de la vitesse de cisaillement pour une gamme de température variant de 10°C à 150°C. Pour chaque température, la viscosité du système a été mesurée en fonction de la vitesse de cisaillement de 1 à 100 $s^{-1}$. Les mesures de viscosité en fonction de la vitesse de cisaillement à T = 10°C, 40°C, 70°C, 100°C, 130°C et 150°C ont été réalisées (en allant de 10°C à 150°C). Une viscosité moyenne a alors été calculée pour chaque température en utilisant les points de mesure situés sur le même plateau (de 15 à 100 $s^{-1}$).

Le Tableau 1 ci-dessous présente l'évolution des viscosités absolues des compositions H à J en fonction de température.

*3.4 Résultats obtenus en rhéologie compositions H, I, J)*

Les viscosités relatives des compositions I et J ont été étudiées sur une plage de températures allant de 10° à 150°C et comparées à celle de la composition H. La viscosité de la solution a été calculée en faisant la moyenne des viscosités absolues obtenues pour les taux de cisaillement compris entre 15 à 100 $s^{-1}$. La viscosité relative de ces compositions est présentée en Figure 11.

Tableau 1

| Température [°C] | η [mPa·s] **Yubase 4** | η [mPa·s] **Composition-H** | η [mPa·s] **Composition - I** | η [mPa·s] **Composition - J** |
|---|---|---|---|---|
| 10 | 63,4 | 99,9 | 82,1 | 89,7 |
| 40 | 16,4 | 27,2 | 21,8 | 24,2 |
| 70 | 6,61 | 11,4 | 8,84 | 10,2 |
| 100 | 3,45 | 6,18 | 4,80 | 5,87 |
| 130 | 2,10 | 3,89 | 3,14 | 3,92 |
| 150 | 1,60 | 2,98 | 2,53 | 3,18 |

Lorsque le polydiol linéaire ***PLDiol-2*** et le poly(ester boronique) linéaire **PLB2** sont présents ensemble dans la même composition lubrifiante (composition H), on observe une compensation importante de la perte de viscosité naturelle de l'huile de base de groupe III sur toute la plage des températures étudiées. Ceci se traduit par une augmentation quasi-linéaire de la viscosité relative entre 10° et 150°C (Figure 11, ligne pointillée-carrés creux). Cependant, la composition H

impacte également la viscosité à froid de la formulation, avec une viscosité relative à 10 °C de 1,58.

La présence du copolymère en peigne polydiol ***CPDiol-2*** et du copolymère à brosse poly(ester boronique) **PBB2** dans la même composition lubrifiante (composition I) permet une diminution significative de la viscosité relative à basse température, jusqu'à $\eta_{rel}$ = 1,30 à 10°C. Dans le même temps, on observe une compensation moins importante de cette formulation à la perte de viscosité naturelle de l'huile de base de groupe III à hautes températures comparativement à la formulation H (Figure 11, ligne traitillée/continue-étoiles).

La dilution de composition I jusqu'à 2,10% massique de copolymère à brosse polydiol ***CPDiol2*** et 2,10% massique de copolymère à brosse poly(ester boronique) **PBB2** permet de diminuer davantage la viscosité relative à 10°C jusqu'à $\eta_{rel}$ = 1,21 (Figure 12-Id, ligne pointillée-étoiles). Cependant, contrairement aux compositions contenant des copolymères linéaires, même à cette faible viscosité relative à froid la composition Id préserve son comportement viscosifiant à hautes températures ($\eta_{rel}$ = 1,43 à 150°C). Les valeurs de viscosité relative sont représentées pour trois cycles successifs de chauffage-refroidissement entre 10°C à 150°C (Id-1, Id-2 et Id-3). Celles-ci évoluent de manière négligeable au cours des 3 cycles et donnent toujours une augmentation de la viscosité relative entre 10°C et 150°C (Figure 13).

Lorsque le copolymère en peigne polydiol ***CPDiol-2*** et poly(ester boronique) linéaire **PLB2** sont présents ensemble dans la même composition lubrifiante (composition J), on couple les avantages des deux systèmes. Sur ce croisement des types de structure de copolymères associatifs, on observe une forte compensation de la perte de viscosité naturelle de l'huile de base sur la plage de températures de 100° à 150°C (Figure 11, ligne continue-cercles remplis), qui se produit en combinaison avec une diminution significative de la viscosité relative à basse température par rapport à la formulation contenant uniquement des copolymères linéaires.

Les valeurs de viscosité relative sont également représentées pour cinq cycles successifs de chauffage-refroidissement entre 10°C à 150°C (J-1, J-2, J-3, J-4 et J-5). Elles évoluent très légèrement au cours des 5 cycles et donnent toujours une augmentation de la viscosité relative d'environ 0,65 entre 10°C et 150°C traduisant la bonne compensation de la perte de viscosité naturelle de l'huile de base de groupe III sur cette plage de températures (Figure 14).

## Revendications

**1.** Composition résultant du mélange d'au moins

- ◦ un copolymère en peigne polydiol A1, statistique ou à gradient,
  et
- ◦ un composé A2 comprenant au moins deux fonctions ester boronique,

le copolymère en peigne polydiol A1 comprenant une chaine principale et des chaines latérales, au moins une partie des chaines latérales du copolymère A1 étant composée d'oligomères comportant plus de 30 atomes de carbone qui présentent un degré de polymérisation allant de 5 à 1000.

**2.** Composition selon la revendication 1 dans laquelle au moins une partie des chaines latérales du copolymère A1 est composée d'oligomères comportant au moins 50 atomes de carbone, encore mieux au moins 70 atomes de carbone.

**3.** Composition selon l'une quelconque des revendications précédentes dans laquelle au moins une partie des chaines latérales du copolymère A1 est composée d'oligomères qui présentent un degré de polymérisation allant de 5 à 500, encore mieux de 5 à 200.

**4.** Composition selon l'une quelconque des revendications précédentes dans laquelle les chaines latérales composées d' oligomères représentent de 3 à 95% en masse par rapport à la masse totale du copolymère A1, de préférence de 15 à 95%.

**5.** Composition selon l'une quelconque des revendications précédentes, dans laquelle au moins une partie des chaines latérales du copolymère A1 est composée d'oligomères O1 comprenant un fragment polyoléfine.

**6.** Composition selon la revendication 5 dans laquelle les chaines latérales comprenant un fragment polyoléfine représentent de 3 à 85 %, de préférence de 15 à 70% en masse par rapport à la masse totale du copolymère A1.

**7.** Composition selon la revendication 5 ou selon la revendication 6, dans laquelle les oligomères O1 sont présents dans le copolymère A1 sous forme d'unités répétitives correspondant à un ou plusieurs monomères M6 de formule générale (IX) :

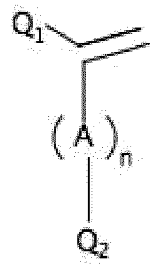

(IX)

dans laquelle

$Q_1$ est choisi parmi le groupe formé par -H, $-CH_3$, et $-CH_2-CH_3$ ;
$Q_2$ est choisi parmi un groupement -Q', -O-Q', -C(O)-O-Q', -O- C(O)-Q', $-S-(CH_2)_2-C(O)-O-Q'$,-S-Q', -N(H)-C(O)-Q' et -C(O)-N(H)-Q' avec Q' est une polyoléfine,
n représente un entier choisi parmi 0 et 1,
A représente un groupement divalent choisi parmi $-A_1-$, $-O-(-A_2-O-)n'-A_1-$, $-$ $C(O)-O-$ $(-A_2-O-)n'-A_1-$, $-O-$ $C(O)-(-A_2-O-)n'-A_1-$, $-S-(-A_2-O-)n'-A_1-$, $-N(H)-C(O)-(-A_2-O-)n'-A_1-$ et $-C(O)-N(H)-(-A_2-O-)n'-A_1-$ avec :

$A_1$ est un radical divalent choisi parmi un alkyle en $C_1$-$C_{30}$, un aryle en $C_6$-$C_{30}$, un aralkyle en $C_6$-$C_{30}$,
$A_2$ est un radical divalent choisi parmi les alkyles en $C_2$-$C_4$,
n' est un entier, n' représente 0 ou 1.

**8.** Composition selon l'une quelconque des revendications précédentes dans laquelle le copolymère A1 comprend des unités répétitives correspondant à au moins un monomère M3 de formule générale (X) :

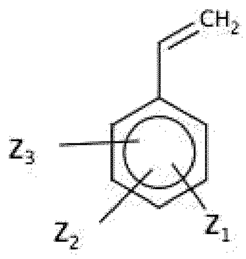

(X)

dans laquelle :

- $Z_1$, $Z_2$, $Z_3$, identiques ou différents, représentent des groupements choisis parmi un atome d'hydrogène, un alkyle en $C_1$-$C_{12}$, un groupement -OZ', -C(O)-O-Z' avec Z' un alkyle en $C_1$-$C_{12}$.

**9.** Composition selon la revendication 8 dans laquelle le monomère M3 est le styrène.

**10.** Composition selon l'une quelconque des revendications précédentes dans laquelle le copolymère A1 présente un degré de branchement allant de 0,1 à 10% molaire, de préférence de 0,5 à 5% molaire.

**11.** Composition selon l'une quelconque des revendications précédentes, dans laquelle le copolymère en peigne A1 comprend des chaines pendantes non oligomériques qui ont une longueur moyenne allant de 1 à 10 atomes de carbone, de préférence de 3 à 8 atomes de carbone.

**12.** Composition selon l'une quelconque des revendications précédentes, dans laquelle la chaine principale du copolymère en peigne A1 a un degré de polymérisation moyen en nombre allant de 40 à 2000, de préférence de 40 à 1000.

**13.** Composition selon l'une quelconque des revendications précédentes, dans laquelle les chaines pendantes oligomériques du copolymère en peigne A1 ont un degré de polymérisation moyen en nombre allant de 8 à 1000.

**14.** Composition selon l'une quelconque des revendications précédentes dans laquelle le composé A2 est choisi parmi :

o un composé de formule (III) :

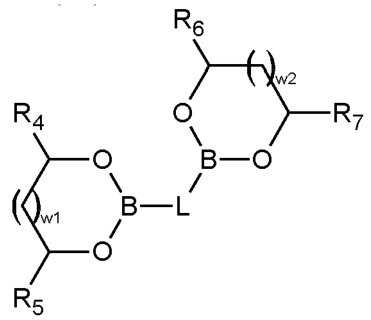

(III)

dans laquelle :

- $w_1$ et $w_2$, identiques ou différents sont des nombres entiers choisis entre 0 et 1 ;
- $R_4$, $R_5$, $R_6$ et $R_7$, identiques ou différents représentent un groupement choisi parmi un atome d'hydrogène, un groupement hydrocarboné comprenant de 1 à 30 atomes de carbone, éventuellement substitué par un ou plusieurs groupements choisis parmi : un hydroxyle, un groupement -OJ, -C(O)-O-J avec J un groupement hydrocarboné comprenant de 1 à 24 atomes de carbone ;
- L est un groupement de liaison divalent et choisi parmi le groupe formé par un aryle en $C_6$-$C_{18}$, un aralkyle en $C_6$-$C_{18}$ et une chaîne hydrocarbonée en $C_2$-$C_{24}$.

◦ un copolymère comprenant au moins

- des unités répétitives correspondant à des monomères M4 de formule (IV) :

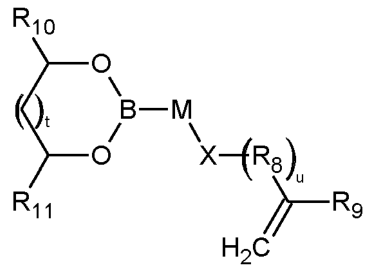

(IV)

dans laquelle :

- t est un nombre entier égal à 0 ou 1 ;
- u est un nombre entier égal à 0 ou 1 ;
- M et $R_8$ sont des groupements de liaison divalents, identiques ou différents, choisis parmi le groupe formé par un aryle en $C_6$-$C_{18}$, un aralkyle en $C_7$-$C_{24}$ et un alkyle en $C_2$-$C_{24}$, de préférence M est un aryle en $C_6$-$C_{18}$, et $R_8$ est un aralkyle en $C_7$-$C_{24}$ ;
- X est une fonction choisie parmi le groupe formé par -O-C(O)-, - C(O)-O-, -C(O)-N(H)-, -N(H)-C(O)-, -S-, -N(H)-, -N(R'$_4$)- et -O- avec R'$_4$ une chaîne hydrocarbonée comprenant de 1 à 15 atomes de carbone;
- $R_9$ est choisi parmi le groupe formé par -H, $-CH_3$ et$-CH_2-CH_3$ ;
- $R_{10}$ et $R_{11}$ identiques ou différents représentent un groupement choisi parmi un atome d'hydrogène, un groupement hydrocarboné comprenant de 1 à 30 atomes de carbone, éventuellement substitué par un ou plusieurs groupements choisis parmi : un hydroxyle, un groupement -OJ, -C(O)-O-J avec J un groupement hydrocarboné comprenant de 1 à 24 atomes de carbone ;

- Des unités répétitives correspondant à des monomères M5 de formule générale (V) :

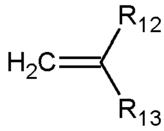

(V)

dans laquelle :

- $R_{12}$ est choisi parmi le groupe formé par -H, $-CH_3$ et $-CH_2-CH_3$,
- $R_{13}$ est choisi parmi le groupe formé par un aryle en $C_6$-$C_{18}$, un aryle en $C_6$-$C_{18}$ substitué par un groupement $R'_{13}$, -C(O)-O-$R'_{13}$ ; -O-$R'_{13}$, -S-$R'_{13}$ et -C(O)-N(H)-$R'_{13}$ avec $R'_{13}$ est un groupe alkyle en $C_1$-$C_{30}$.

**15.** Composition lubrifiante résultant du mélange d'au moins :

- une huile lubrifiante ; et
- une composition définie selon l'une quelconque des revendications 1 à 14.

## Patentansprüche

**1.** **Zusammensetzung,** die sich ergibt aus der Mischung von mindestens

◦ einem Kammcopolymer Polydiol, statistisch oder mit Gradient, und
◦ einer Verbindung A2, umfassend mindestens zwei Esterborfunktionen,

wobei das Kammcopolymer Polydiol A1 eine Hauptkette und Seitenketten umfasst, wobei mindestens ein Teil der Seitenketten des Copolymers A1 aus Oligomeren zusammengesetzt ist, umfassend mehr als 30 Kohlenstoffatome, die einen Grad der Polymerisierung darstellen, der von 5 bis 1000 reicht.

**2.** Zusammensetzung nach Anspruch 1, wobei mindestens ein Teil der Seitenketten des Copolymers A1 aus Oligomeren zusammengesetzt ist, umfassend mindestens 50 Kohlenstoffatome, noch besser mindestens 70 Kohlenstoffatome.

**3.** Zusammensetzung nach einem der vorhergehenden Ansprüche, wobei mindestens ein Teil der Seitenketten des Copolymers A1 aus Oligomeren zusammengesetzt ist, die einen Grad der Polymerisierung darstellen, der von 5 bis 500 reicht, noch besser von 5 bis 200.

**4.** Zusammensetzung nach einem der vorhergehenden Ansprüche, wobei die Seitenketten, die aus Oligomeren zusammengesetzt sind, von 3 bis 95 Massenprozent mit Bezug auf die Gesamtmasse des Copolymers A1, vorzugsweise von 15 bis 95 % darstellen.

**5.** Zusammensetzung nach einem der vorhergehenden Ansprüche, wobei mindestens ein Teil der Seitenketten des Copolymers A1 aus Oligomeren O1 zusammengesetzt ist, die ein Polyolefinfragment umfassen.

**6.** Zusammensetzung nach Anspruch 5, wobei die Seitenketten ein Polyolefinfragment umfassen, das von 3 bis 85 Massenprozent, vorzugsweise von 15 bis 70 Massenprozent mit Bezug auf die Gesamtmasse des Copolymers A1 darstellt.

**7.** Zusammensetzung nach Anspruch 5 oder nach Anspruch 6, wobei die Oligomere O1 in dem Copolymer 1 in Form einer wiederkehrenden Einheit vorhanden sind, die einem oder mehreren Monomeren M6 mit der allgemeinen Formel (IX) entspricht:

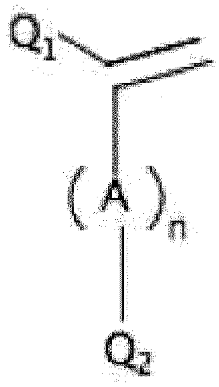

(IX)

wobei:

$Q_1$ ausgewählt ist aus der Gruppe, gebildet aus -H, $-CH_3$ und$-CH_2-CH_3$,
$Q_2$ ausgewählt ist aus der Gruppe -Q', -O-Q', -C(O)-O-Q', -O-C(O)-Q', $-S-(CH_2)_2-C(O)-O-Q'$,-S-Q', -N(H)-C(O)-Q' und -C(O)-N(H)-Q', wobei Q' ein Polyolefin ist,
n eine ganze Zahl darstellt, ausgewählt aus 0 und 1,
A eine divalente Gruppe darstellt, ausgewählt aus $-A_1-$, $-O-(-A_2-O-)n'-A_1-$, $-C(O)-O-$ $(-A_2-O-)n'-A_1-$, -O- C(O)-($-A_2-O-)n'-A_1-$, -N(H)- C(O)-($-A_2-O-)n'-A_1-$ und -C(O)-N(H)-($-A_2-O-)n'-A_1-$, wobei:
$A_1$ ein divalentes Radikal ist, ausgewählt aus einem Alkyl mit $C_1$-$C_{30}$, einem Aryl mit $C_6$-$C_{30}$, einem Aralkyl mit $C_6$-$C_{30}$,
$A_2$ ein divalentes Radikal ist, ausgewählt aus den Alkylen mit $C_2$-$C_4$,
n' eine ganze Zahl ist, n' 0 oder 1 darstellt.

**8.** Zusammensetzung nach einem der vorhergehenden Ansprüche, wobei das Copolymer $A_1$ wiederkehrende Einheiten umfasst, die mindestens einem Monomer M3 mit der allgemeinen Formel (X) entsprechen:

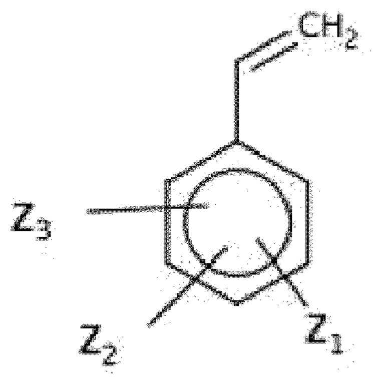

(X)

wobei:

- $Z_1$, $Z_2$, $Z_3$, identisch oder verschieden, Gruppen darstellen, ausgewählt aus einem Wasserstoffatom, einem Alkyl mit $C_1$-$C_{12}$, einer Gruppe -OZ', -C(O)-O-Z', wobei Z' ein Alkyl mit $C_1$-$C_{12}$ ist.

**9.** Zusammensetzung nach Anspruch 8, wobei das Monomer M3 Styren ist.

**10.** Zusammensetzung nach einem der vorhergehenden Ansprüche, wobei das Copolymer A1 einen Grad der Verzweigung darstellt, der von 0,1 bis 10 Molprozent, vorzugsweise von 0,5 bis 5 Molprozent reicht.

**11.** Zusammensetzung nach einem der vorhergehenden Ansprüche, wobei das Kammcopolymer A1 nicht oligomere hängende Ketten umfasst, die eine mittlere Länge aufweisen, die von 1 bis 10 Kohlenstoffatome reicht, vorzugsweise von 3 bis 8 Kohlenstoffatome.

**12.** Zusammensetzung nach einem der vorhergehenden Ansprüche, wobei die Hauptkette des Kammcopolymers A1 einen zahlengemittelten Polymerisierungsgrad aufweist, der von 40 bis 2000 reicht, vorzugsweise von 40 bis 1000.

**13.** Zusammensetzung nach einem der vorhergehenden Ansprüche, wobei die oligomeren hängenden Ketten des Kammcopolymers A1 einen zahlengemittelten Polymerisierungsgrad aufweisen, der von 8 bis 1000 reicht.

**14.** Zusammensetzung nach einem der vorhergehenden Ansprüche, wobei die Verbindung A2 ausgewählt ist aus:

o einer Verbindung mit der Formel (III):

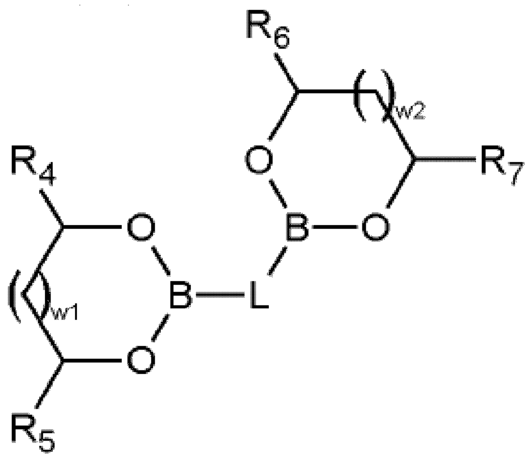

(III)

wobei:

- $w_1$ und $w_2$, identisch oder verschieden, ganze Zahlen sind, ausgewählt zwischen 0 und 1 ;
- $R_4$, $R_5$, $R_6$ und $R_7$, identisch oder verschieden, eine Gruppe darstellen, ausgewählt aus einem Wasserstoffatom, einer Kohlenwasserstoffgruppe, umfassend 1 bis 30 Kohlenstoffatome, eventuell substituiert durch eine oder mehrere Gruppen, ausgewählt aus: einem Hydroxyl, einer Gruppe -OJ, -C(O)-O-J, wobei J eine Kohlenwasserstoffgruppe ist, umfassend 1 bis 24 Kohlenstoffatome;
- L eine divalente Verbindungsgruppe ist, und ausgewählt aus der Gruppe, gebildet aus einem Aryl mit $C_6$-$C_{18}$, einem Aralkyl mit $C_6$-$C_{18}$ und einer Kohlenwasserstoffkette mit $C_2$-$C_{24}$;

◦ einem Copolymer, umfassend mindestens

▪ wiederkehrende Einheiten, entsprechend Monomeren M4 mit der Formel (IV):

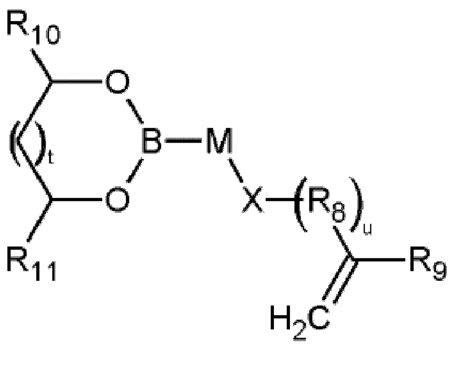

(IV)

wobei:

- t eine ganze Zahl gleich 0 oder 1 ist;
- u eine ganze Zahl gleich 0 oder 1 ist;

- M und $R_8$ divalente Verbindungsgruppen sind, identisch oder verschieden, ausgewählt aus der Gruppe, gebildet aus einem Aryl mit $C_6$-$C_{18}$, einem Aralkyl mit $C_7$-$C_{24}$ und einem Alkyl mit $C_2$-$C_{24}$, vorzugsweise M ein Aryl mit $C_6$-$C_{18}$ ist, und $R_8$ ein Aralkyl mit $C_7$-$C_{24}$ ist;
- X eine Funktion ist, ausgewählt aus der Gruppe, gebildet aus -O-C(O)-, - C(O)-O-, -C(O)-N(H)-, -N(H)-C(O)-, -S-, -N(H)-, - N(R'$_4$)- und -O-, wobei R'$_4$ eine Kohlenwasserstoffkette ist, umfassend 1 bis 15 Kohlenstoffatome;
- $R_9$ ausgewählt ist aus der Gruppe, gebildet aus -H, -$CH_3$ und -$CH_2$-$CH_3$;
- $R_{10}$ und $R_{11}$, identisch oder verschieden, eine Gruppe darstellen, ausgewählt aus einem Wasserstoffatom, einer Kohlenwasserstoffgruppe, umfassend 1 bis 30 Kohlenstoffatome; eventuell substituiert durch eine oder mehrere Gruppen, ausgewählt aus: einem Hydroxyl, einer Gruppe -OJ, -C(O)-O-J, wobei J eine Kohlenwasserstoffgruppe ist, umfassend 1 bis 24 Kohlenstoffatome;

▪ wiederkehrende Einheiten, die Monomeren M5 mit der allgemeinen Formel (V) entsprechen:

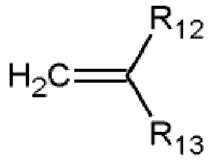
(V)

wobei:

- $R_{12}$ ausgewählt ist aus der Gruppe, gebildet aus -H, -$CH_3$ und -$CH_2$-$CH_3$;
- $R_{13}$ ausgewählt ist aus der Gruppe, gebildet aus einem Aryl mit $C_6$-$C_{18}$, einem Aryl mit $C_6$-$C_{18}$, substituiert durch eine Gruppe R'$_{13}$, -C(O)-O-R'$_{13}$; -O-R'$_{13}$, -S-R'$_{13}$ und -C(O)-N(H)-R'$_{13}$,wobei R'$_{13}$ eine Alkylgruppe mit $C_1$-$C_{30}$.ist.

**15.** Schmiermittelzusammensetzung, die sich aus der Mischung von mindestens Folgendem ergibt:

- einem Schmieröl; und
- einer Zusammensetzung, die nach einem der Ansprüche 1 bis 14 definiert ist.

## Claims

**1.** A composition resulting from the mixing of at least:

◦ a polydiol comb copolymer A1, statistical or gradient;
and
◦ a compound A2 comprising at least two boronic ester functions;

the polydiol comb copolymer A1 having a main chain and side chains, at least part of the side chains of the copolymer A1 being composed of oligomers having more than 30 carbon atoms with a degree of polymerization ranging from 5 to 1000.

**2.** The composition according to claim 1, wherein at least part of the side chains of the copolymer A1 is composed of oligomers having at least 50 carbon atoms, better still at least 70 carbon atoms.

**3.** The composition according to any of the preceding claims, wherein at least part of the side chains of the copolymer A1 is composed of oligomers having a degree of polymerization ranging from 5 to 500, better still from 5 to 200.

**4.** The composition according to any of the preceding claims, wherein the side chains composed of oligomers represent from 3 to 95 mass % relative to the total mass of the copolymer A1, preferably from 15 to 95 %.

**5.** The composition according to any of the preceding claims, wherein at least part of the side chains of the copolymer A1 is composed of oligomers O1 comprising a polyolefin fragment.

6. The composition according to claim 5, wherein the side chains comprising a polyolefin fragment represent from 3 to 85 %, preferably from 15 to 70 % by mass relative to the total mass of the copolymer A1.

7. The composition according to claim 5 or claim 6, wherein the oligomers O1 are contained in the copolymer A1 in the form of repeat units corresponding to one or more monomers M6 of general formula (IX):

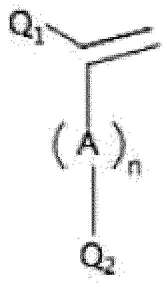

(IX)

where:

- $Q_1$ is chosen from the group formed by -H, $-CH_3$ and $-CH_2-CH_3$;
- $Q_2$ is chosen from a group -Q', -O-Q', -C(O)-O-Q', -O-C(O)-Q', -S- $(CH_2)_2$-C(O)-O-Q', -S-Q', -N(H)-C(O)-Q' and -C(O)-N(H)-Q' with Q' being a polyolefin,
- n is an integer chosen from among 0 and 1;
- A is a divalent group chosen from among $-A_1-$, $-O-(-A_2-O-)n'-A_1-$, $-C(O)-O-(-A_2-O-)n'-A_1-$, $-O-C(O)-(-A_2-O-)n'-A_1-$, $-S-(-A_2-O-)n'-A_1-$, $-N(H)-C(O)-(-A_2-O-)n'-A_1-$ and $-C(O)-N(H)-(-A_2-O-)n'-A_1-$ with:

  $A_1$ is a divalent radical chosen from among a $C_1$-$C_{30}$ alkyl, $C_6$-$C_{30}$ aryl, $C_6$-$C_{30}$ aralkyl;
  $A_2$ is a divalent radical chosen from among $C_2$-$C_4$ alkyls;
  n' is an integer, n' is 0 or 1:

8. The composition according to any of the preceding claims, wherein the copolymer A1 comprises repeat units corresponding to at least one monomer M3 of general formula (X):

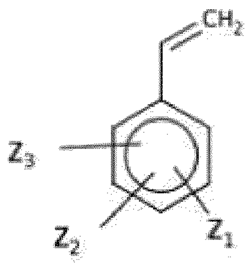

(X)

where:

- $Z_1$, $Z_2$, $Z_3$, the same or different, represent groups chosen from among a hydrogen atom, $C_1$-$C_{12}$ alkyl, -OZ' group, -C(O)-O-Z' with Z' a $C_1$-$C_{12}$ alkyl.

9. The composition according to claim 8, wherein the monomer M3 is styrene.

10. The composition according to any of the preceding claims, wherein the copolymer $A_1$ has a degree of branching ranging from 0.1 to 10 mole %, preferably 0.5 to 5 mole %.

11. The composition according to any of the preceding claims, wherein the comb polymer A1 comprises non-oligomeric pendant chains having a mean length ranging from 1 to 10 carbon atoms, preferably 3 to 8 carbon atoms.

12. The composition according to any of the preceding claims, wherein the main chain of the comb copolymer A1 has a

number average degree of polymerization ranging from 40 to 2000, preferably from 40 to 1000.

**13.** The composition according to any of the preceding claims, wherein the oligomeric pendant chains of the comb copolymer A1 have a number average degree of polymerization ranging from 8 to 1000.

**14.** The composition according to any of the preceding claims, wherein compound A2 is chosen from among:

◦ a compound of formula (III):

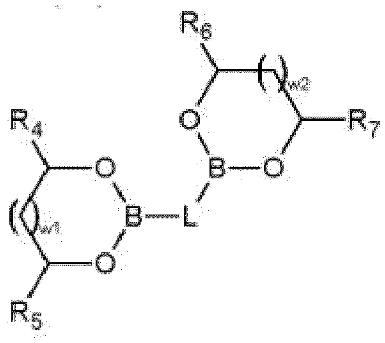

(III)

where:

- $w_1$ and $w_2$, the same or different, are integers chosen from between 0 and 1;
- $R_4$, $R_5$, $R_6$ and $R_7$, the same or different, represent a group chosen from among a hydrogen atom, a hydrocarbon group having 1 to 30 carbon atoms optionally substituted by one or more groups chosen from among: a hydroxyl, -OJ group, -C(O)-O-J with J being a hydrocarbon group having 1 to 24 carbon atoms;
- L is a divalent linker group chosen from the group formed by a $C_6$-$C_{18}$ aryl, $C_6$-$C_{18}$ aralkyl and $C_2$-$C_{24}$ hydrocarbon chain.

◦ a copolymer comprising at least

▪ repeat units corresponding to monomers M4 of formula (IV):

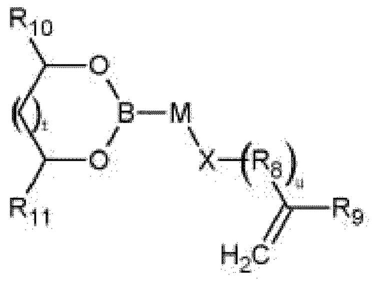

(IV)

where:

- t is an integer of 0 or 1;
- u is an integer of 0 or 1
- M and $R_8$ are divalent linker groups, the same or different, chosen from the group formed by a $C_6$-$C_{18}$ aryl, $C_7$-$C_{24}$ aralkyl, and $C_2$-$C_{24}$ alkyl, preferably M is a $C_6$-$C_{18}$ aryl and $R_8$ is a $C_7$-$C_{24}$ aralkyl;
- X is a function chosen from the group formed by -O-C(O)-, -C(O)-O-, -C(O)-N(H)-, -N(H)-C(O)-, -S-, -N(H)-, -N(R'$_4$)- and -O- with R'$_4$ being a hydrocarbon chain having 1 to 15 carbon atoms;
- $R_9$ is chosen from the group formed by -H-, $CH_3$ and $-CH_2-CH_3$;
- $R_{10}$ and $R_{11}$, the same or different, represent a group chosen from among a hydrogen atom, a hydrocarbon group having 1 to 30 carbon atoms optionally substituted by one or more groups chosen from among: a hydroxyl, -OJ group, - C(O)-O-J with J being a hydrocarbon group having 1 to 24 carbon

atoms;

- repeat units corresponding to monomers M5 of general formula (V):

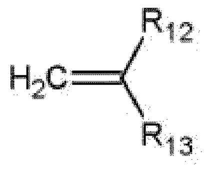
(V)

where:

- $R_{12}$ is chosen from the group formed by -H, $-CH_3$ and $CH_2$-$CH_3$;
- $R_{13}$ is chosen from the group formed by a $C_6$-$C_{18}$ aryl, $C_6$-$C_{18}$ aryl substituted by a group $R'_{13}$, -C(O)-O-$R'_{13}$, -O-$R'_{13}$, -S-$R'_{13}$ and -C(O)-N(H)-$R'_{13}$ with $R'_{13}$ being a $C_1$-$C_{30}$ alkyl group.

**15.** A lubricant composition resulting from the mixing of at least:

- one lubricating oil; and
- a composition defined according to any of claims 1 to 14.

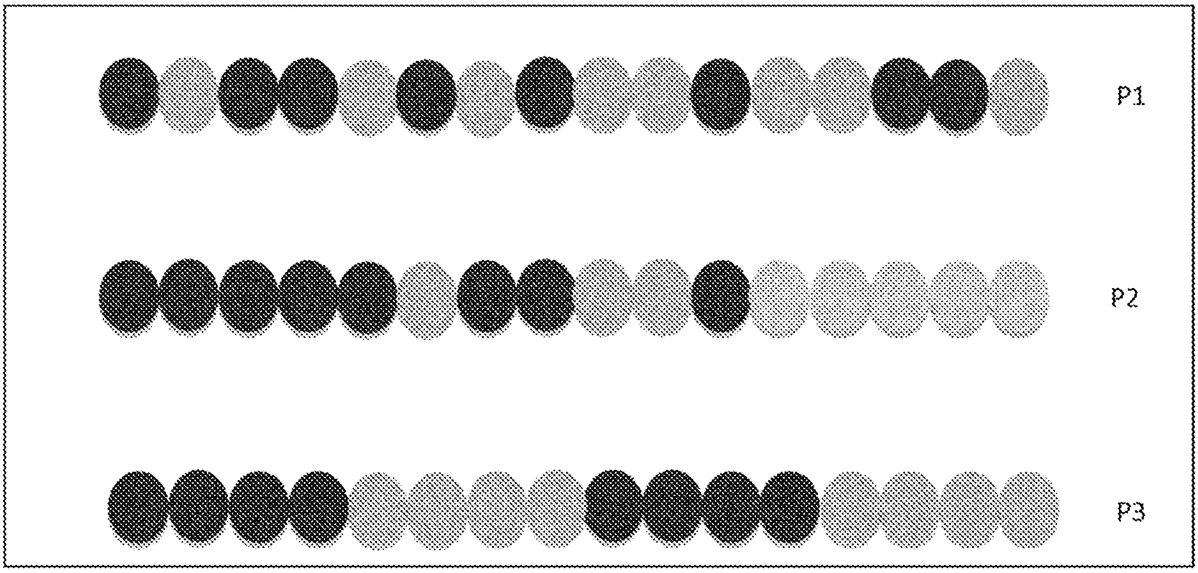


Figure 1

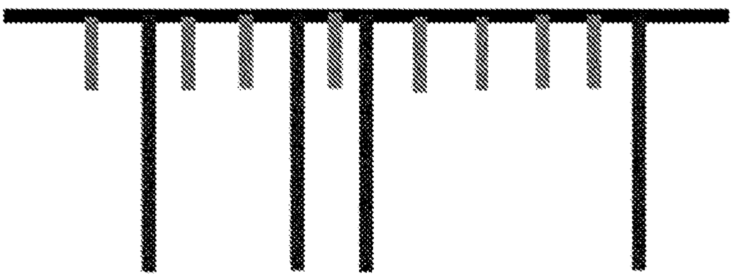

Figure 2

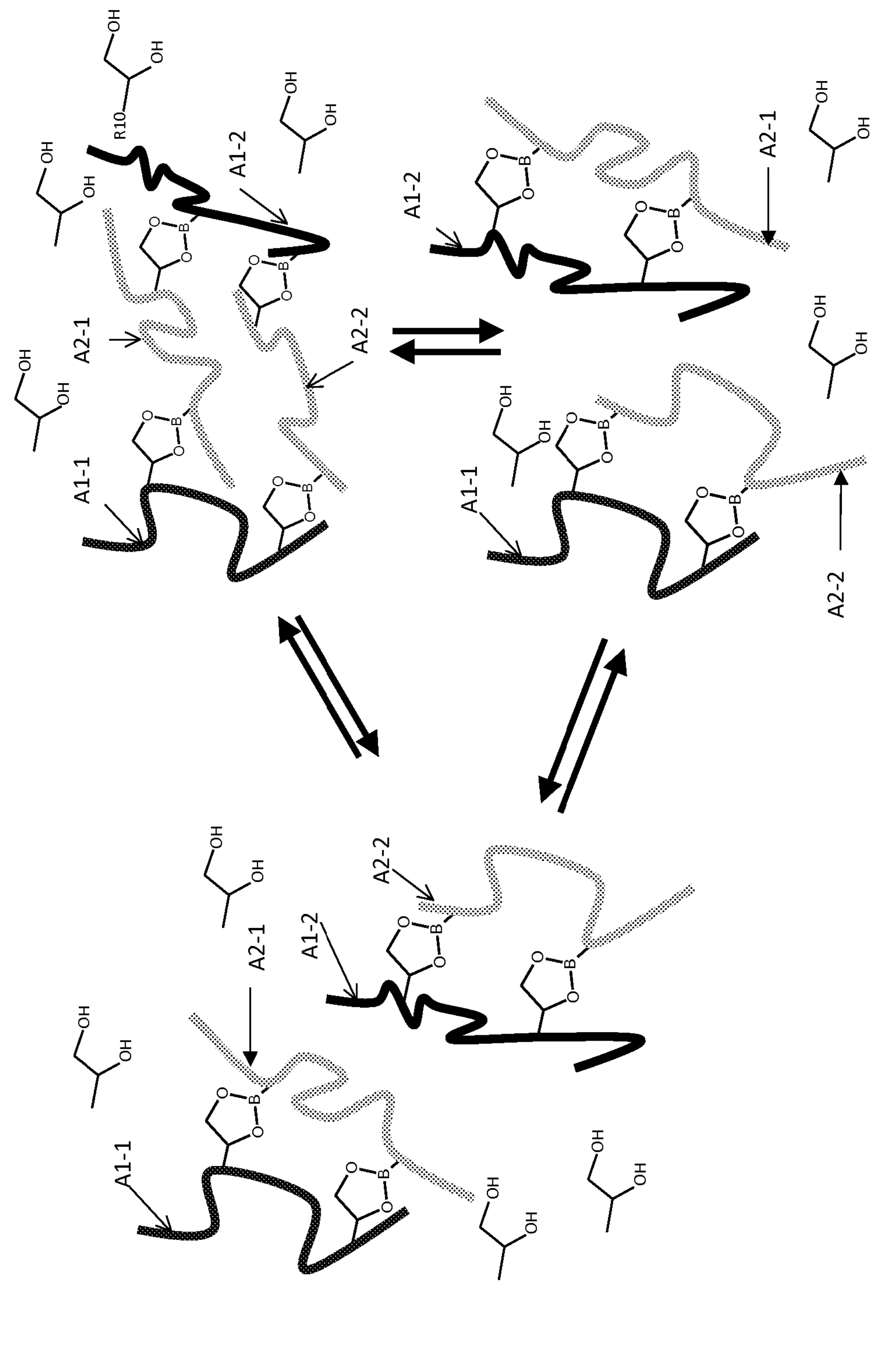


Figure 3

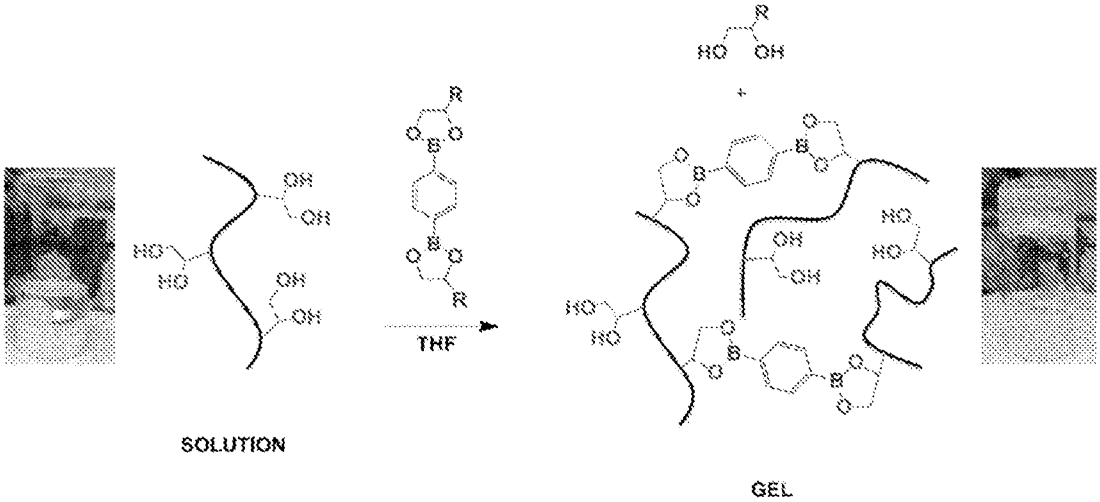


Figure 4

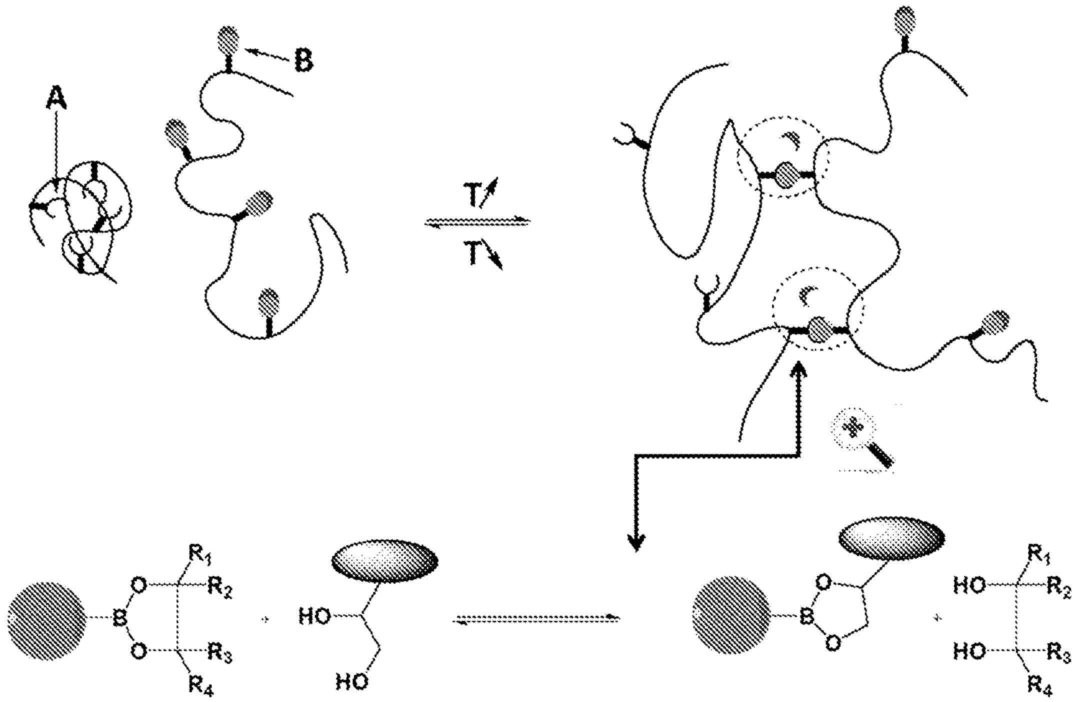


1 2 3

Figure 5

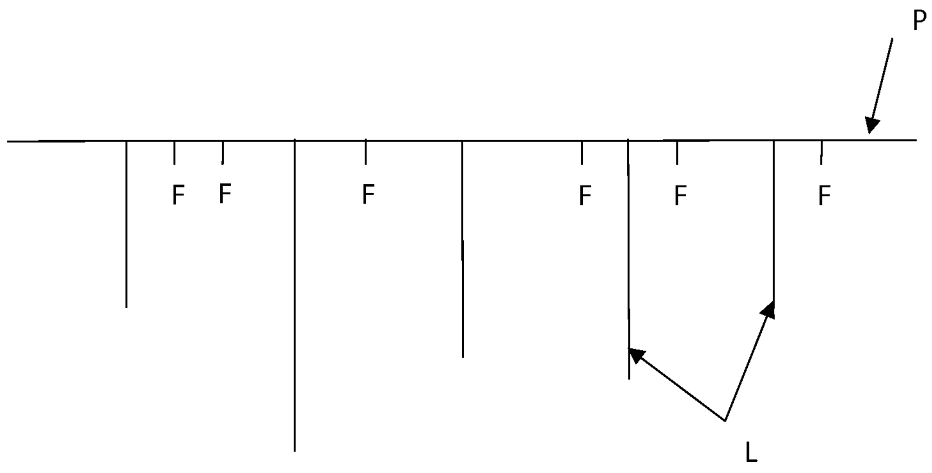


FIGURE 6A

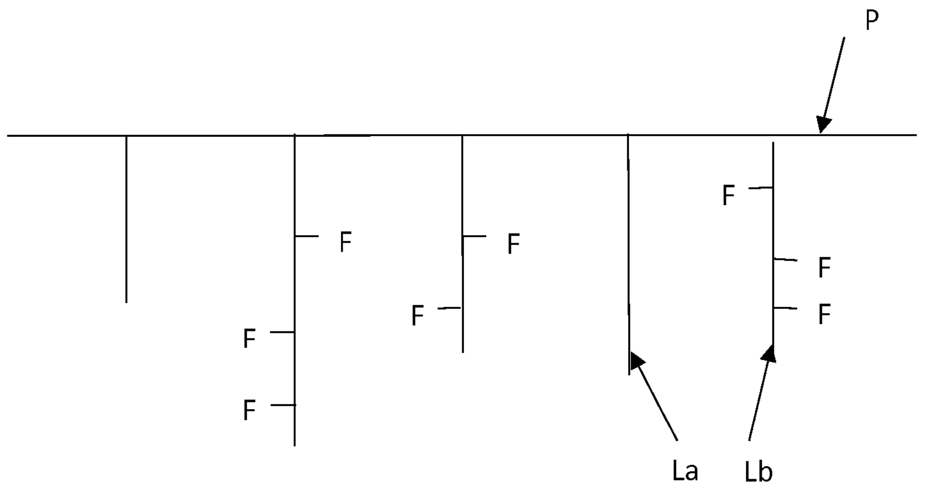


FIGURE 6B

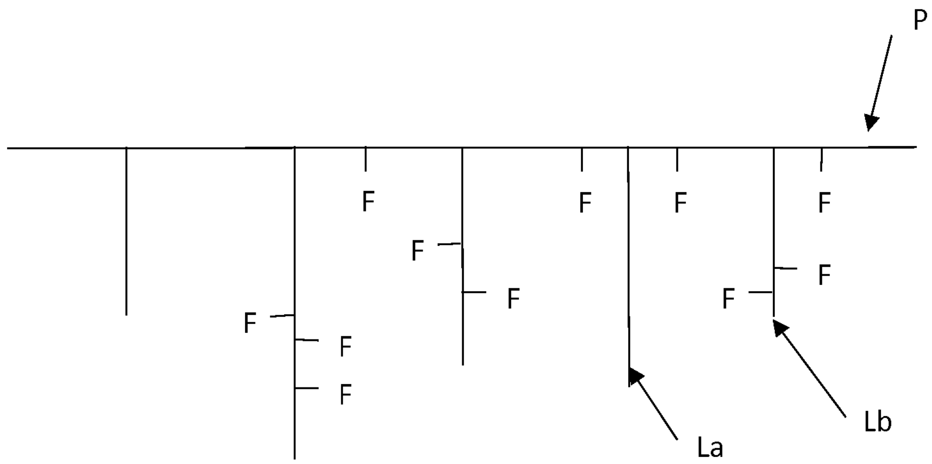


FIGURE 6C

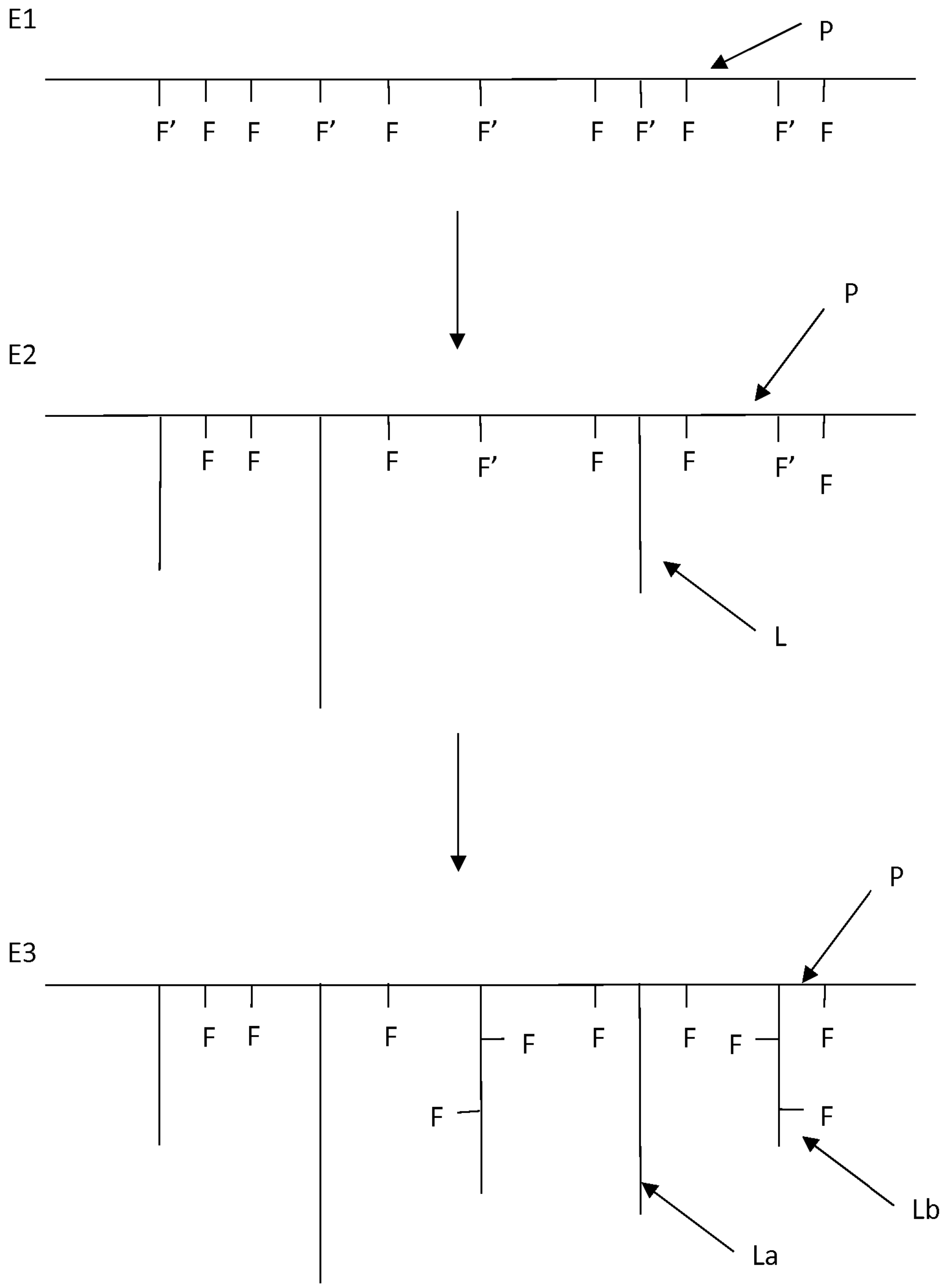


FIGURE 7

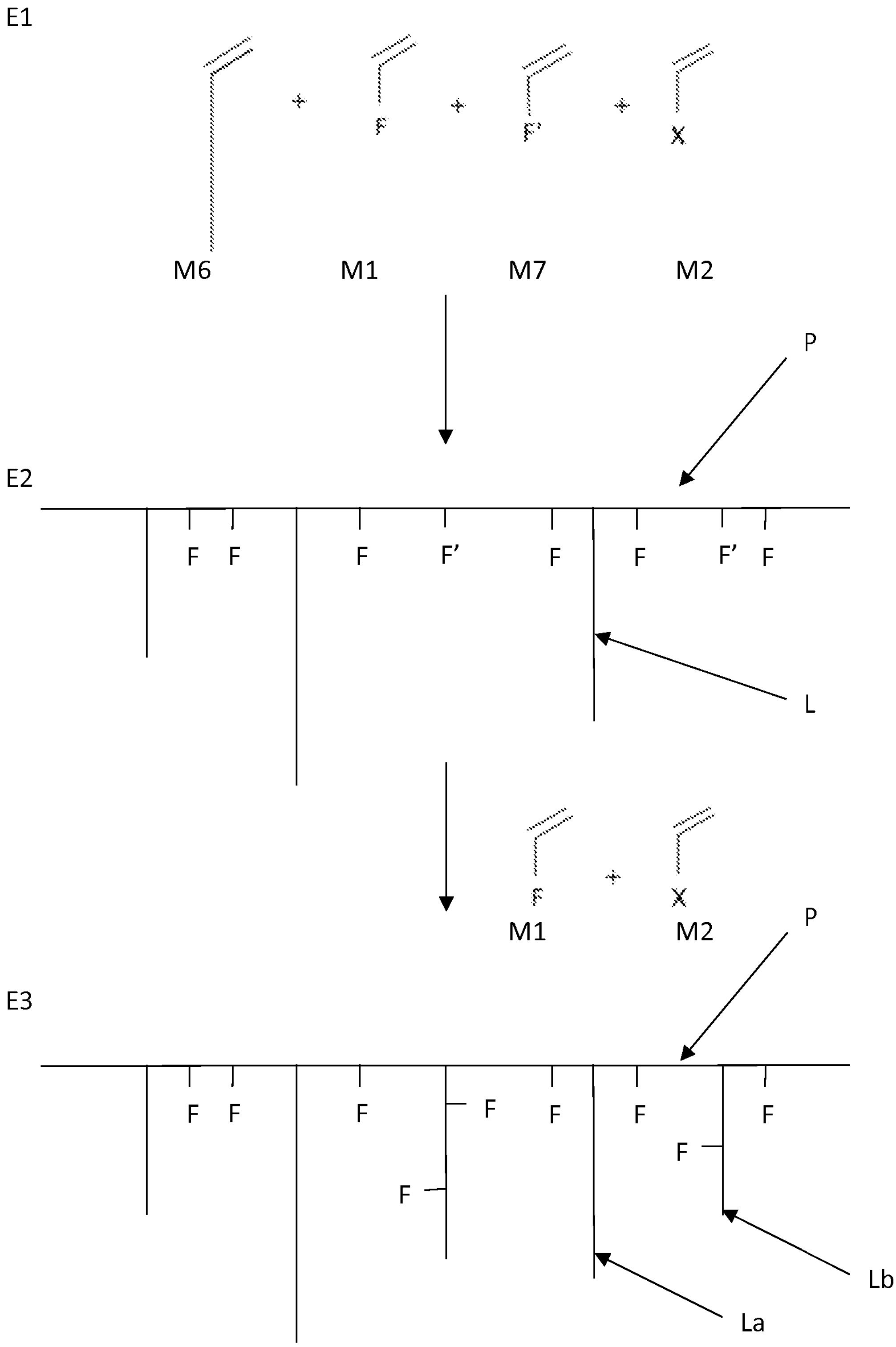


FIGURE 8

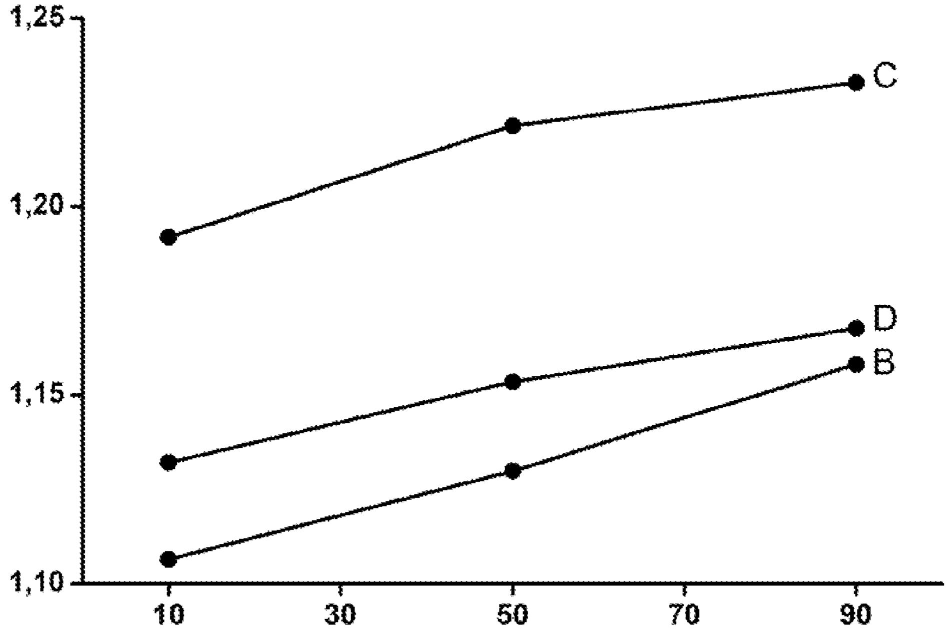


Figure 9

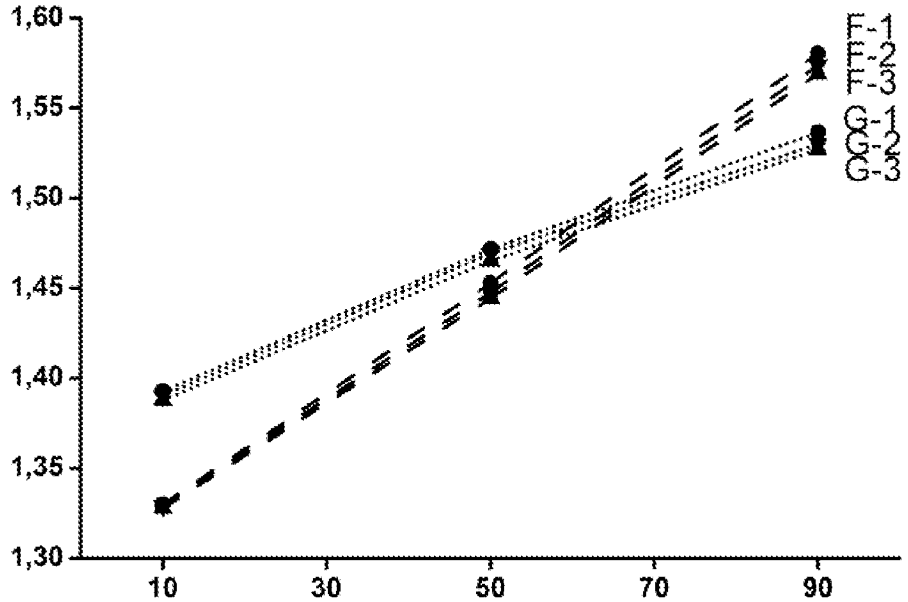


Figure 10

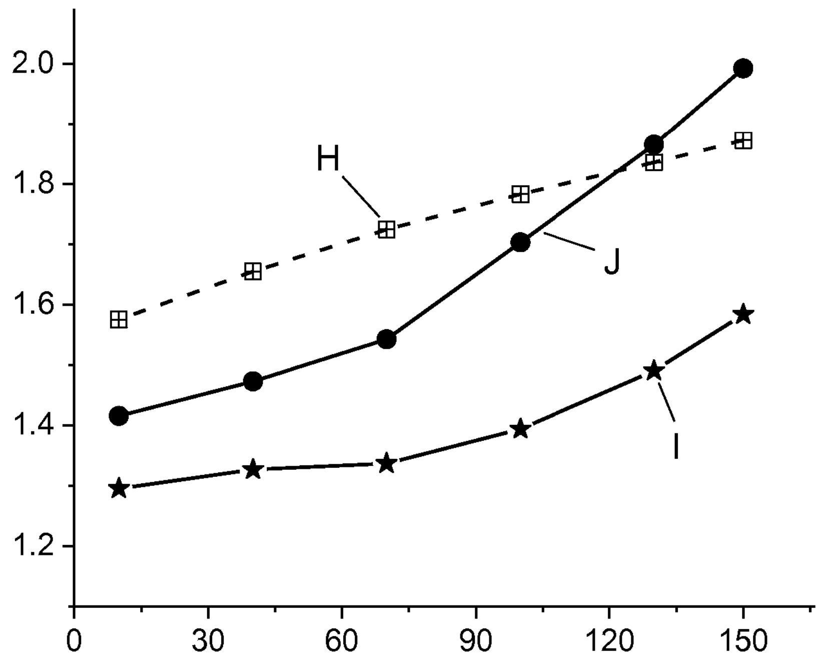


Figure 11

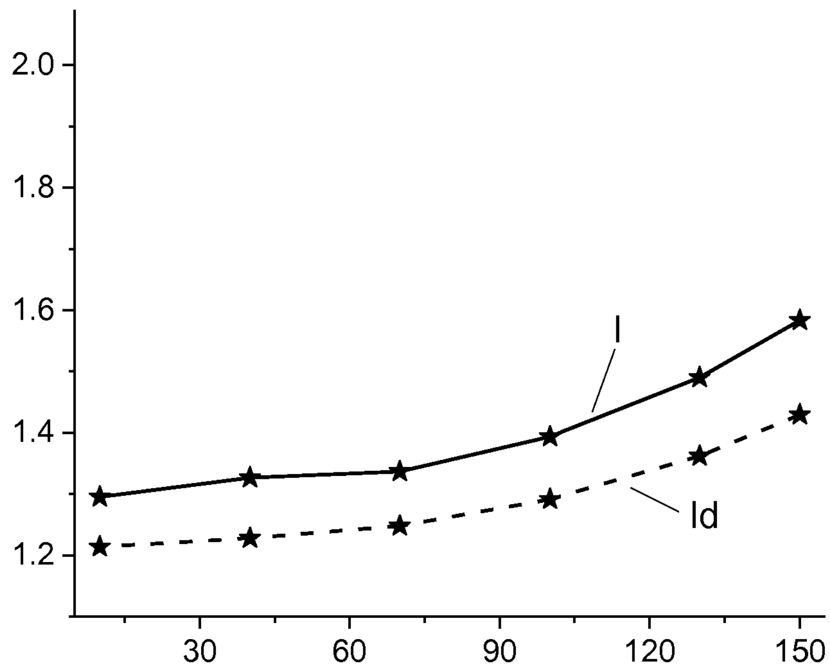


Figure 12

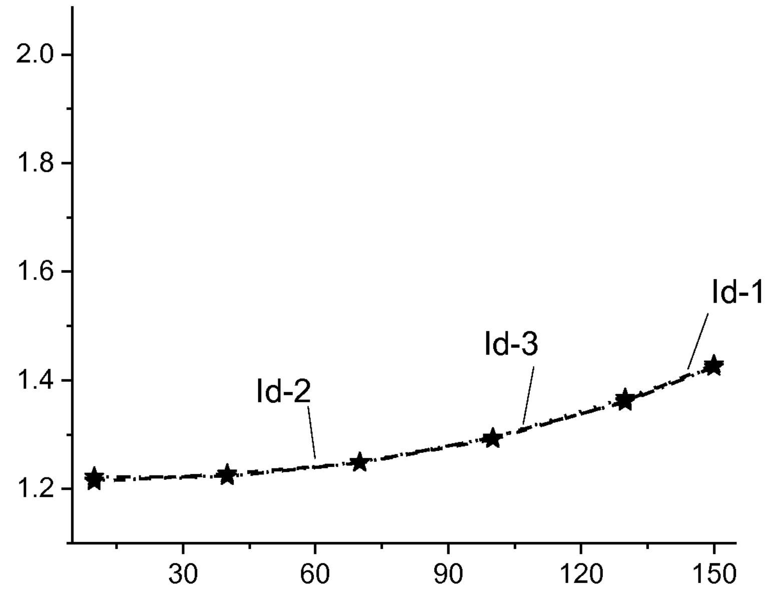


Figure 13

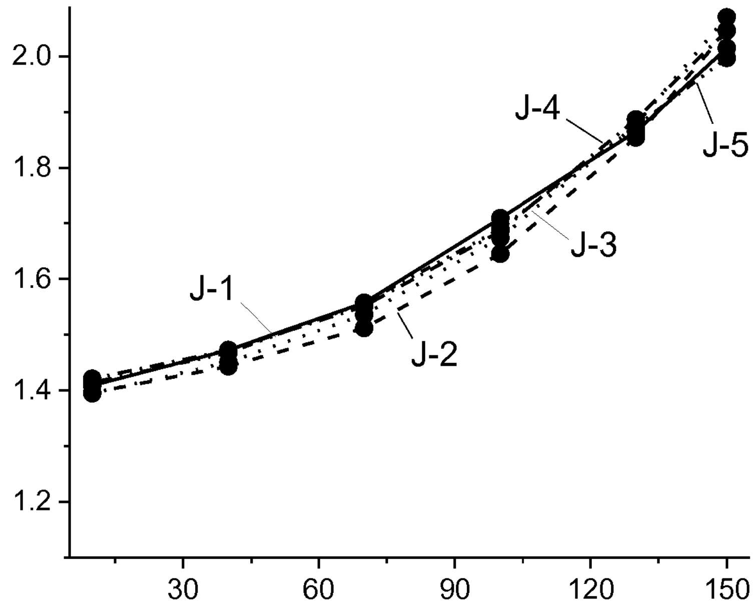


Figure 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2015110642 A
- WO 2015110643 A
- WO 2016113229 A
- US 2011319305 A
- EP 0570073 A
- US 5159123 A
- US 7148292 B
- FR 1661400
- WO 2018096252 A1


### Littérature non-brevet citée dans la description


- Glossaire des termes de base en science des polymères, Recommandations. *IUPAC Commission de la Nomenclature Macromoléculaire*, 1996, https://www.gfp.asso.fr/wp-content/uploads/glossaire.pdf
- *CHEMICAL ABSTRACTS*, 45755-07-1
- *CHEMICAL ABSTRACTS*, 86218-23-7
- *CHEMICAL ABSTRACTS*, 60503-49-3
- *CHEMICAL ABSTRACTS*, 60503-48-2
- *CHEMICAL ABSTRACTS*, 7098-80-8
- *CHEMICAL ABSTRACTS*, 5919-74-4
- **MOAD, G.** ; **SOLOMON, D. H.** The Chemistry of Radical Polymerization. Elsevier Ltd, 2006, 639
- **MATYASZEWSKI, K.** ; **DAVIS, T. P.** Handbook of Radical Polymerization. Wiley-Interscience, 2002, 936
- **FONTANILLE, M.** ; **GNANOU, Y.** Chimie et physico-chimie des polymères. Dunod, 2010, 546
- **R. NICOLAÿ**. Synthesis of Well-Defined Polythiol Copolymers by RAFT Polymerization. *Macromolecules*, 2012, vol. 45, 821-827